(19) Europäisches Patentamt
European Patent Office
Office européen des brevets

(11) EP 2 711 887 A1

(12) **EUROPEAN PATENT APPLICATION**
published in accordance with Art. 153(4) EPC

(43) Date of publication:
**26.03.2014 Bulletin 2014/13**

(21) Application number: **12872686.6**

(22) Date of filing: **15.10.2012**

(51) Int Cl.:
***G06Q 30/06*** ***(2012.01)*** ***G06F 17/30*** ***(2006.01)***

(86) International application number:
**PCT/JP2012/076617**

(87) International publication number:
**WO 2013/145394 (03.10.2013 Gazette 2013/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.03.2012 JP 2012078670**

(71) Applicant: **Rakuten, Inc.**
**Tokyo 140-0002 (JP)**

(72) Inventor: **MASUKO Soh**
**Tokyo 140-0002 (JP)**

(74) Representative: **HOFFMANN EITLE**
**Patent- und Rechtsanwälte**
**Arabellastrasse 4**
**81925 München (DE)**

(54) **INFORMATION PROCESSING DEVICE, INFORMATION PROCESSING METHOD, INFORMATION PROCESSING PROGRAM, AND RECORDING MEDIUM**

(57) Even if a user does not try an item for sale on, a size that fits the body of the user can be presented. An information apparatus acquires a size of a specified item for sale specified according to a request of a request user from a purchase history storage means storing the purchase history of an item for sale to be worn. The size of the specified item for sale was purchased by other user who purchased the specified item for sale. There is a plurality of sizes of the item for sale. The information apparatus acquires body size information related to a body size of the request user and body size information related to a body size of the other user. The information apparatus specifies an evaluation by the other user for the acquired size. The information apparatus estimates a size of the specified item for sale that fits the request user on the basis of a size relationship between the body size information of the request user and the body size information of the other user, the size of the specified item for sale purchased by the other user, and the evaluation for the size. The information apparatus outputs the estimated size.

FIG.1

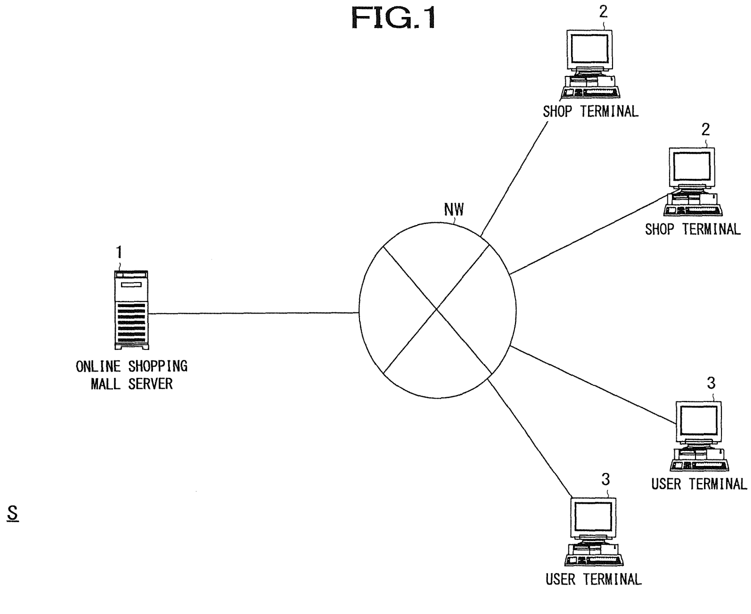


EP 2 711 887 A1

## Description

### Technical Field

The present invention relates to a technical field of an information processing apparatus and an information processing method that support a user to select the size of an item for sale which the user wears.

### Background Art

In recent years, electronic commerce, in which items for sale are sold and purchased on the internet, is widely used. A user can purchase items for sale such as clothes, shoes, hats, and accessories, which the user wares, by using the electronic commerce. Various sizes are prepared for such items for sale. Therefore, the user selects a size that is assumed to fit the user's body on the basis of the item's sizes appeared on a site of electronic commerce. However, an actual body size to which information of the size corresponds varies depending on the brand of the item for sale and/or the country. Therefore, an item for sale whose size is selected by the user may not actually fit the user's body. In the electronic commerce, the user cannot actually try an item for sale on before purchasing, so that it is not easy to select a size that fits the user's body before purchasing the item for sale.
Therefore, for example, Patent Document 1 discloses a technique where a purchaser performs a virtual try-on on a browser on the basis of image data of the item for sale, detailed size data of the item for sale, and body size data of the purchaser. As a result of the virtual try-on, if the purchaser wants to purchase the item for sale, the purchaser orders the item for sale.

### Citation List

### Patent Document

Patent Document 1: Japanese Patent Application Laid-Open No. 2002-245303

### Summary of Invention

### Technical Problem

However, in the technique described in Patent Document 1, the user has to perform a try-on even though it is a virtual try-on. In this case, in order for the user to perform enough virtual try-on to determine the size, it is necessary to input detailed sizes of the user's body and detailed sizes of each part of clothes. Therefore, time and efforts are required due to the try-on for the user to select the size.
The present invention is made in view of the above situation, and an object of the present invention is to provide an information processing apparatus, an information processing method, an information processing program, and a recording medium which can cause a size that fits the body of a user to be presented, even if the user does not try an item for sale on.

### Solution to Problem

In order to solve the above problem, the invention according to claim 1 is an information processing apparatus comprising: a size acquisition means that, from a purchase history storage means storing a purchase history of an item for sale to be worn, acquires a size of a specified item for sale specified according to a request of a request user, the size of the specified item for sale having been purchased by other user who purchased the specified item for sale, there being a plurality of sizes of the item for sale; a body size information acquisition means that acquires body size information related to a body size of the request user and body size information related to a body size of the other user; an evaluation specification means that specifies an evaluation by the other user for the size acquired by the size acquisition means; an estimation means that estimates a size of the specified item for sale that fits the request user on the basis of a size relationship between the body size information of the request user and the body size information of the other user, the size of the specified item for sale purchased by the other user, and the evaluation for the size; and an output means that outputs the size estimated by the estimation means.
There is a probability that the evaluation from a user who purchased the specified item for sale reflects whether or not the size of the specified item for sale purchased by the user fits the user. The size that fits the user varies depending on the body size of the user. According to the invention, the size that fits the request user is estimated by using the size of the specified item for sale purchased by the other user, an object relationship between the body size information of the request user and the body size information of the other user, and the evaluation for the specified item for sale from the other user, so that even if a user does not try an item for sale on, it is possible to cause the size that fits the body of the user to be presented.

It is assumed that there is a case in which one item for sale has plural pieces of information of the item for each size and the plural pieces of information varies. In this case, the user may request various pieces of information to search for a size that fits the user. Then, the requests that are processed by the information processing apparatus increase, so that the processing load of the information processing apparatus increases. However, according to the invention, it is possible to cause the size that fits the user to be presented, so that it is possible to reduce the requests from the user to search for the size that fits the user. Therefore, it is possible to reduce the processing load of the information processing apparatus.

The invention according to claim 2 is the information processing apparatus according to claim 1, wherein when, on the basis of a return history of the item for sale stored in a return history storage means, it is determined that the other user who purchased a plurality of the specified items for sale whose sizes are different from each other returned at least one but not all of the plurality of the specified items for sale, the evaluation specification means specifies the evaluation so that the evaluation for the size of the specified item that was not returned is higher than the evaluation for the size of the specified item that was returned.

If the user returned the specified items for sale of some sizes from among a plurality of the specified items for sale which are the same except for their sizes, there is a high probability that the sizes which the user did not return fit the user more than the sizes which the user returned. According to the invention, the evaluation for the size which the other user did not return is higher than the evaluation for the size which the other user returned, so that it is possible to improve the estimation accuracy of the size that fits the body of the request user.

The invention according to claim 3 is the information processing apparatus according to claim 1 or 2, wherein the evaluation specification means acquires the evaluation input by the other user.

According to the invention, the estimation is performed based on the evaluation input by the other user, so that it is possible to improve the estimation accuracy of the size that fits the body of the request user.

The invention according to claim 4 is the information processing apparatus according to claim 2 or 3, wherein when, on the basis of a non-purchase history stored in a non-purchase history storage means storing the non-purchase history indicating that the other user determined to purchase the item for sale and thereafter cancelled the purchase, it is determined that the other user selected a size of the specified item for sale and thereafter cancelled the size and purchased another size, the evaluation specification means specifies the evaluation so that the evaluation for the size that was purchased is higher than the evaluation for the size that was cancelled.

If the user determined to purchase the specified item for sale of a certain size and thereafter cancelled the purchase and purchased the specified item for sale of another size, there is a probability that the size which the user purchased fits the user more than the size which the user cancelled the purchase of. According to the invention, the evaluation for the size which the other user purchased is higher than the evaluation for the size which the other user cancelled, so that it is possible to improve the estimation accuracy of the size that fits the request user.

The invention according to claim 5 is the information processing apparatus according to any one of claims 1 to 4, wherein when, on the basis of a return history of the item for sale stored in a return history storage means, it is determined that the other user who purchased a plurality of the specified items for sale whose sizes are different from each other returned at least one but not all of the plurality of the specified items for sale, the evaluation specification means specifies the evaluation so that the evaluation for the size of the specified item that was not returned is higher than the evaluation for the size of the specified item that was returned, when the evaluation is input from the other user, the evaluation specification means acquires the input evaluation, and the estimation means estimates the size by valuing the evaluation specified based on the return history more than the evaluation input from the other user.

There is a high probability that a use's action of returning the specified items for sale of some sizes from among a plurality of the specified items for sale which are the same except for their sizes represents the evaluation for each size from the user. On the other hand, the evaluation input from the user may include evaluation for things other than the size. According to the invention, the evaluation based on the return history is valued more than the evaluation input by the other user. Therefore, the evaluation whose reliability of evaluation for the size of the specified item for sale is higher is valued, so that it is possible to improve the estimation accuracy of the size that fits the body of the request user.

The invention according to claim 6 is the information processing apparatus according to any one of claims 1 to 5, wherein when the evaluation is input from the other user, the evaluation specification means acquires the input evaluation, when, on the basis of a non-purchase history stored in a non-purchase history storage means storing the non-purchase history indicating that the other user determined to purchase the item for sale and thereafter cancelled the purchase, it is determined that the other user selected a size of the specified item for sale and thereafter cancelled the size and purchased another size, the evaluation specification means specifies the evaluation so that the evaluation for the size of the specified item that was purchased is higher than the evaluation for the size of the specified item that was cancelled, and the estimation means estimates the size by valuing the evaluation input from the other user more than the evaluation specified based on the non-purchase history.

The user can input the evaluation after wearing the purchased specified item for sale. On the other hand, the user cannot wear the specified item for sale after determining to purchase the specified item for sale and before cancelling the purchase. According to the invention, the evaluation input by the other user is valued more than the evaluation based on the non-purchase history. Therefore, the evaluation whose reliability of evaluation for the size of the specified item for sale is higher is valued, so that it is possible to improve the estimation accuracy of the size that fits the body of the request user.

The invention according to claim 7 is the information processing apparatus according to any one of claims 1 to 6, wherein the body size information acquisition means acquires a body size of at least one of the request user and the other user as the body size information from a body size storage means storing a body size registered from a user for each user.

According to the invention, the estimation is performed based on the body size registered from the user, so that it is possible to perform the estimation on the basis of information which highly probably reflects the body size of the user.

The invention according to claim 8 is the information processing apparatus according to claim 7, wherein on the basis of the purchase history, the later a time when the other user purchased the specified item for sale is, the more the estimation means values the evaluation from the other user and thereby estimates the size.

The older the time when the user purchased the specified item for sale, the higher the probability that the current body size of the user has changed from the body size of the user at the time of the purchase of the specified item for sale. If the body size registered from the user represents the body size at the present time, the older the time of the purchase of the specified item for sale, the higher the probability that the evaluation from the user is not an evaluation based on the registered body size. According to the invention, the later the time of the purchase of the specified item for sale, the more the evaluation from the user who purchased the specified item for sale is valued, so that it is possible to improve the estimation accuracy of the size that fits the body of the request user.

The invention according to claim 9 is the information processing apparatus according to any one of claims 1 to 8, wherein on the basis of the purchase history, the body size information acquisition means acquires at least one of a size of a first item for sale which the request user has ever purchased and a size of a second item for sale which the other user has ever purchased as the body size information.

There is a probability that the size of an item for sale which the user has ever purchased corresponds to the body size of the user. According to the invention, the size of an item for sale which the user has ever purchased is acquired as the information related to the body size of the user, so that it is possible to estimate the size that fits the body of the request user even if the body size is not registered from the user.

The invention according to claim 10 is the information processing apparatus according to claim 9, wherein the estimation means estimates the size by using the evaluation from the other user who purchased the specified item for sale and who purchased the second item for sale belonging to the same category as that of the first item for sale, and the later a time when the request user purchased the first item for sale, the more the estimation means values the evaluation from the other user who purchased the second item for sale that belongs to the same category as that of the first item for sale and thereby estimate the size.

On the basis of the size of the first item for sale purchased by the request user and the size of the second item for sale purchased by the other user, for example, it is possible to determine whether the body size of the request user and the body size of the other user are similar to each other and/or to determine the size relationship between the body size of the request user and the body size of the other user. According to the invention, the first item for sale and the second item for sale belong to the same category, so that it is possible to improve the determination accuracy of the body size described above. Here, the older the time when the request user purchased the first item for sale, the higher the probability that the current body size of the request user has changed from the body size of the request user at the time of the purchase of the first item for sale. Therefore, the older the time of the purchase of the first item for sale, the higher the probability that the determination accuracy of the body size based on the size of the item for sale is low. According to the invention, the later the time of the purchase of the first item for sale of the request user, the more the evaluation from the other user who purchased the second item for sale that belongs to the same category as that of the first item for sale is valued, so that it is possible to improve the determination accuracy of the body size. Therefore, it is possible to improve the estimation accuracy of the size that fits the request user.

The invention according to claim 11 is the information processing apparatus according to claim 9 or 10, wherein the smaller a difference between a time of purchase of the second item for sale of the other user and a time of purchase of the specified item for sale of the other user is, the more the estimation means estimates the evaluation from the other user and thereby estimates the size.

The greater the difference between the time of the purchase of the second item for sale of the user and the time of the purchase of the specified item for sale of the user, the higher the probability that the body size of the user at the time of the purchase of the second item for sale and the body size of the user at the time of the purchase of the specified item for sale are different from each other. Therefore, the greater the difference between the times of the purchases, the higher the probability that the evaluation for the specified item for sale is not the evaluation based on the body size of the user's corresponding to the size of the second item for sale purchased by the user. According to the invention, the smaller the difference between the time of the purchase of the second item for sale of the user and the time of the purchase of the specified item for sale of the user, the more the evaluation from the user is valued, so that it is possible to improve the estimation accuracy of the size that fits the body of the request user.

The invention according to claim 12 is the information processing apparatus according to any one of claims 1 to 11, wherein the estimation means estimates the size by not using information acquired based on the purchase histories of the items for sale that are ones of the items for sale for women and the items for sale for men, a ratio of the ones of the items for sale for women and the items for sale for men to the items for sale purchased by the user being smaller than or equal to a threshold value preset to a value smaller than 50%.

According to the invention, the purchase history of an item for sale which the user probably purchased for a person of the opposite sex is not used to estimate the size that fits the request user. Therefore, it is possible to improve the estimation accuracy of the size that fits the body of the request user.

The invention according to claim 13 is the information processing apparatus according to any one of claims 1 to 12, wherein the estimation means estimate the size by not using information acquired based on the purchase history which indicates that the user who is an adult purchased the item for sale for children.

According to the invention, the purchase history of an item for sale which an adult purchased for a child is not used to estimate the size that fits the request user. Therefore, it is possible to improve the estimation accuracy of the size that fits the body of the request user.

The invention according to claim 14 is the information processing apparatus according to any one of claims 1 to 13, wherein when the request user is an adult and the specified item for sale is the item for sale for children, the output means does output the size.

According to the invention, it is possible not to perform estimation when it is not necessary to estimate the size that fits the request user. Therefore, it is possible to reduce the processing load to estimate the size that fits the body of the request user.

The invention according to claim 15 is the information processing apparatus according to any one of claims 1 to 14, wherein the estimation means specifies the other user whose body size is included in the same range as that of the body size of the request user on the basis of the size relationship of the body size information and estimates the size of the specified item for sale that fits the request user on the basis of a size of the specified item for sale purchased by the specified other user and the evaluation for the size.

According to the invention, the estimation is performed based on the size purchased by a user whose body size is similar to that of the request user and the evaluation from the user, so that it is possible to improve the estimation accuracy of the size that fits the body of the request user.

The invention according to claim 16 is the information processing apparatus according to any one of claims 1 to 15, wherein the estimation means specifies the other user whose body size is smaller than that of the request user and the other user whose body size is greater than that of the request user on the basis of the size relationship of the body size information, estimates a first size of the specified item for sale that fits the other user whose body size is smaller than that of the request user and a second size of the specified item for sale that fits the other user whose body size is greater than that of the request user on the basis of sizes of the specified item for sale purchased by the specified other users and the evaluations for the sizes, and estimates the size between the first size and the second size to be the size that fits the request user.

According to the invention, the size between the size that fits a user whose body size is smaller than that of the request user and the size that fits a user whose body size is greater than that of the request user is estimated as the size that fits the request user. Therefore, even if there is no user whose body size is similar to that of the request user, it is possible to estimate the size that fits the body of the request user.

The invention according to claim 17 is the information processing apparatus according to any one of claims 1 to 14, wherein the estimation means obtains an approximate expression of a distribution of combinations of the body size information of the other user and a size of the specified item for sale purchased by the other user by weighting the combinations based on the evaluations from the other users, and estimates the size calculated based on the approximate expression and the body size information of the request user to be the size that fits the request user.

According to the invention, if there are a plurality of users whose body sizes are different from each other and/or a plurality of users who purchased the specified items of which sizes are different from each other, it is possible to estimate the size that fits the request user.

The invention according to claim 18 is an information processing method performed by a computer, the method comprising: a size acquisition step of, from a purchase history storage means storing a purchase history of an item for sale to be worn, acquiring a size of a specified item for sale specified according to a request of a request user, the size of the specified item for sale having been purchased by other user who purchased the specified item for sale, there being a plurality of sizes of the item for sale; a body size information acquisition step of acquiring body size information related to a body size of the request user and body size information related to a body size of the other user; an evaluation specification step of specifying an evaluation by the other user for the size acquired in the size acquisition step; an estimation step estimating a size of the specified item for sale that fits the request user on the basis of a size relationship between the body size information of the request user and the body size information of the other user, the size of the specified item for sale purchased by the other user, and the evaluation for the size; and an output step of outputting the size estimated in the estimation step.

The invention according to claim 19 is an information processing program that causes a computer to function as: a size acquisition means that, from a purchase history storage means storing a purchase history of an item for sale to be worn, acquires a size of a specified item for sale specified according to a request of a request user, the size of the specified item for sale having been purchased by other user who purchased the specified item for sale, there being a plurality of sizes of the item for sale; a body size information acquisition means that acquires body size information related to a body size of the request user and body size information related to a body size of the other user; an evaluation specification means that specifies an evaluation by the other user for the size acquired by the size acquisition means; an estimation means that estimates a size of the specified item for sale that fits the request user on the basis of a size relationship between the body size information of the request user and the body size information of the other user, the size of the specified item for sale purchased by the other user, and the evaluation for the size; and an output means that outputs the size estimated by the estimation means.

The invention according to claim 20 is a recording medium in which an information processing program is computer-readably recorded, the information processing program causing a computer to function as: a size acquisition means that, from a purchase history storage means storing a purchase history of an item for sale to be worn, acquires a size of a specified item for sale specified according to a request of a request user, the size of the specified item for sale having been purchased by other user who purchased the specified item for sale, there being a plurality of sizes of the item for sale; a body size information acquisition means that acquires body size information related to a body size of the request user and body size information related to a body size of the other user; an evaluation specification means that specifies an evaluation by the other user for the size acquired by the size acquisition means; an estimation means that estimates a size of the specified item for sale that fits the request user on the basis of a size relationship between the body size information of the request user and the body size information of the other user, the size of the specified item for sale purchased by the other user, and the evaluation for the size; and an output means that outputs the size estimated by the estimation means.

## Advantageous Effect of Invention

According to the present invention, the size that fits the request user is estimated by using the size of the specified item for sale purchased by the other user, an object relationship between the body size information of the request user and the body size information of the other user, and the evaluation for the specified item for sale from the other user, so that even if a user does not try an item for sale on, it is possible to cause the size that fits the body of the user to be presented.

## Brief Description of Drawings

FIG. 1 is a diagram showing an example of a schematic configuration of an information processing system S according to an embodiment.

FIG. 2 is a diagram showing a display example of an item-for-sale page.

FIG. 3A is a diagram showing an example of a relationship between evaluation content and score. FIG. 3B is a diagram showing an example of a relationship between a time of purchase and a weight coefficient W1. FIG. 3C is a diagram showing an example of a relationship between the number of evaluators and a weight coefficient W2.

FIG. 4 is a diagram showing an example of a relationship between the height and weight and a body shape segment.

FIG. 5 is a block diagram showing an example of a schematic configuration of an online shopping mall server 1 according to an embodiment.

FIG. 6A is a diagram showing an example of content registered in a member information DB 12a. FIG. 6B is a diagram showing an example of content registered in a category information DB 12b. FIG. 6C is a diagram showing an example of content registered in an items-for-sale information DB 12c. FIG. 6D is a diagram showing an example of content registered in a shopping cart deletion history DB 12d. FIG. 6E is a diagram showing an example of content registered in a purchase history DB 12e. FIG. 6F is a diagram showing an example of content registered in a review information DB 12f.

FIG. 7 is a flowchart showing a process example of an item-for-sale page transmission process of a system control unit 14 of the online shopping mall server 1 according to an embodiment.
FIG. 8 is a flowchart showing a process example of a fit size estimation process of the system control unit 14 of the online shopping mall server 1 according to an embodiment.
FIG. 9 is a flowchart showing a process example of a fit size estimation process of the system control unit 14 of the online shopping mall server 1 according to an embodiment.
FIG. 10 is a flowchart showing a process example of a purchase purpose determination process of the system control unit 14 of the online shopping mall server 1 according to an embodiment.
FIG. 11 is a flowchart showing a process example of a score calculation process of the system control unit 14 of the online shopping mall server 1 according to an embodiment.
FIG. 12 is a flowchart showing a process example of a fit size estimation process of the system control unit 14 of the online shopping mall server 1 according to an embodiment.
FIG. 13 is a flowchart showing a process example of a fit size estimation process of the system control unit 14 of the online shopping mall server 1 according to an embodiment.
FIG. 14A is a diagram showing a distribution of pairs of a body height and an item size and an approximate line.
FIGS. 14B to 14D are diagrams showing a display example of recommended size information 110.
FIG. 15 is a flowchart showing a process example of a fit size estimation process of the system control unit 14 of the online shopping mall server 1 according to an embodiment.
FIG. 16 is a flowchart showing a process example of a fit size estimation process of the system control unit 14 of the online shopping mall server 1 according to an embodiment.
FIG. 17 is a flowchart showing a process example of a purchase history exclusion process of the system control unit 14 of the online shopping mall server 1 according to an embodiment.
FIG. 18 is a flowchart showing a process example of a fit size estimation process of the system control unit 14 of the online shopping mall server 1 according to an embodiment.
FIG. 19 is a flowchart showing a process example of a fit size estimation process of the system control unit 14 of the online shopping mall server 1 according to an embodiment.
FIG. 20 is a flowchart showing a process example of a fit size estimation process of the system control unit 14 of the online shopping mall server 1 according to an embodiment.
FIG. 21 is a flowchart showing a process example of a fit size estimation process of the system control unit 14 of the online shopping mall server 1 according to an embodiment.

## Description of Embodiments

Hereinafter, embodiments of the present invention will be described in detail with reference to the drawings. The embodiments described below are embodiments where the present invention is applied to an information processing system.

## 1. First Embodiment

### 1-1. Schematic Configuration and Function of Information Processing System

First, a configuration of an information processing system S according to the present embodiment will be described with reference to FIG. 1. FIG. 1 is a diagram showing an example of a schematic configuration of the information processing system S according to the present embodiment.

As shown in FIG. 1, the information processing system S includes an online shopping mall server 1, a plurality of shop terminals 2, and a plurality of user terminals 3. The online shopping mall server 1, each shop terminal 2, and each user terminal 3 can transmit and receive data to and from each other through a network NW by using, for example, TCP/IP as a communication protocol. The network NW includes, for example, the Internet, a dedicated communication line (for example, a CATV (Community Antenna Television) line), a mobile communication network (including a base station and the like), and a gateway.

The online shopping mall server 1 is a server device that performs various processes related to an online shopping mall from which items for sale of clothes can be purchased. The online shopping mall server 1 is an example of an information processing apparatus of the present invention. A user can purchase a desired item for sale from a desired shop by using the online shopping mall. For example, the online shopping mall server 1 transmits a web page of the online shopping mall and performs processes related to a search and a purchase of an item for sale according to a request from the user terminal 3. The online shopping mall may be a site from which items for sale other than clothes can also be purchased.

The shop terminal 2 is a terminal device used by an employee or the like of a shop that is open in the online shopping mall. The shop terminal 2 accesses a server device such as the online shopping mall server 1 on the basis of an operation from an employee or the like. Thereby, the shop terminal 2 receives a web page from the server device and displays the web page. In the shop terminal 2, software such as a browser and an email client is installed. For example, an employee registers information of an item for sale to be sold in the online shopping mall and checks content of order of an item for sale by using the shop terminal 2.

The user terminal 3 is a terminal device of a user who uses the online shopping mall. The user terminal 3 receives a web page from the online shopping mall server 1 and displays the web page by accessing the online shopping mall server 1 on the basis of an operation from a user. In the user terminal 3, software such as a browser and an email client is installed. For example, a personal computer, a PDA (Personal Digital Assistant), a mobile information terminal such as a smartphone, and a mobile phone are used as the user terminal 3.

1-2. Procedure of Purchase of Item for Sale

Next, a procedure of purchase of an item for sale in the online shopping mall will be described with reference to FIG. 2. A plurality of sizes are available for an item for sale of clothes that can be purchased in the online shopping mall. This size is referred to as an "item size". The item size is displayed as, for example, a symbol such as S, M, and L, a size number, and inches. In the description below, an item for sale of clothes is simply referred to as an "item for sale". A user designates a search condition on a web page of the online shopping mall in order to search for a desired item for sale. When the user selects a button to search for the item for sale, the user terminal 3 transmits a request including the search condition to the online shopping mall server 1. The online shopping mall server 1 searches for items for sale on the basis of the search condition included in the request. Then, the online shopping mall server 1 transmits a search result page to the user terminal 3. The search result page is a web page on which a list of searched items for sale is displayed. When the user designates any one of the items for sale on the search result page, an item-for-sale page of the designated item for sale is displayed on the screen. The item-for-sale page is a web page on which detailed information related to one item for sale is displayed.

The online shopping mall server 1 estimates an item size that fits the body size of the user who designated the item for sale from among a plurality of item sizes of the item for sale designated by the user. Then, the online shopping mall server 1 outputs information indicating the estimated item size. Specifically, the online shopping mall server 1 causes the information of the estimated item size to be displayed on the item-for-sale page of the designated item. The designated item for sale is referred to as a "designated item". The user who designates the item for sale is referred to as a "designator". The designated item is an example of a specified item for sale of the present invention. The designator is an example of a request user of the present invention.

FIG. 2 is a diagram showing a display example of the item-for-sale page. On the item-for-sale page, for example, a name of the item for sale, an image of the item for sale, a price of the item for sale, a shop name, an item size, description of the item for sale, how to pay the purchase money, and how to deliver the item for sale are displayed. As shown in FIG. 2, on the item-for-sale page, recommended size information 110, an item size selection check box group 120, a shopping cart registration button 130, and the like are displayed. The recommended size information 110 is information that indicates an item size that fits the designator in the designated item. As the recommended size information 110, for example, information such as "Many people having a body shape close to yours buy size M." is displayed. Any information may be displayed as long as the information indicates an item size that fits the designator.

The item size selection check box group 120 is a check box group for selecting an item size to be purchased by the user from among a plurality of item sizes of the designated item. Specifically, a check box is displayed for each item size. The user can select one or more item sizes by operating the item size selection check box group 120. In the online shopping mall, there is a service in which a shop sends out a plurality of items for sale of a plurality of sizes of the same item for sale to a purchaser and the purchaser who receives the items for sale can accept only one item for sale having a size preferred by the purchaser and return the other items for sale having the other sizes. The service is referred to as a "size selection return service". Thanks to the size selection return service, the user can finally select an item for sale having a size that best fits the body of the user after actually wearing the item for sale. On the item-for-sale page of an item for sale for which the size selection return service cannot be used, a radio button group is displayed instead of the item size selection check box group 120. In this case, the user can select only one item size. When the same item for sale has a different item-for-sale page for each item size, the user cannot select the item size.

The shopping cart registration button 130 is a button for adding an item for sale to the shopping cart. The shopping cart is a virtual container to which items for sale which the user determines to purchase are added. When the user selects the shopping cart registration button 130, a designated item of the item size selected in the item size selection check box group 120 is added to the shopping cart. Then, a shopping cart page is displayed on the screen. The shopping cart page is a web page on which a list of the items for sale contained to the shopping cart by the user is displayed. On the shopping cart page, the user can delete an item for sale contained to the shopping cart from the shopping cart. Thereby, the user can cancel a purchase of an item for sale which the user determined to purchase. Further, on the shopping cart page, a purchase procedure button is displayed. The purchase procedure button is a button for performing a purchase procedure of the items for sale contained to the shopping cart. When the user selects the purchase procedure button and then inputs information necessary to perform the purchase procedure, the order of the items for sale is completed. Thereby, the user can purchase the items for sale.

The user can browse a purchase history page in the online shopping mall. The purchase history page is a web page on which a purchase history of items for sale is displayed. On the purchase history page, the user can cancel an order of an item for sale that has not been shipped among items for sale whose order has been completed. Thereby, the user can cancel a purchase of an item for sale which the user determined to purchase. Further, on the purchase history page, the user can selects registration of a review of item for sale. The review of item for sale is information such as evaluation, impression, criticism, and comment to an item for sale purchased by the user. Specifically, the review of item for sale includes a degree of recommendation, a title and a body text of the review of item for sale. The degree of recommendation indicates a degree how much the user prefers the item for sale, a degree how much the user is willing to recommend the item for sale to other people, or the like. The degree of recommendation is divided into five levels of 1 to 5. It is indicated that the higher the degree of recommendation is, the higher the evaluation of the item for sale is. When the user selects the registration of a review of item for sale, a web page for inputting the review of item for sale is displayed. The user inputs the degree of recommendation and the title and the body text of the review of the item for sale on the web page and the like. The input information is transmitted from the user terminal 3 to the online shopping mall server 1. Then, the online shopping mall server 1 registers the received information. The user can check reviews of item for sale input by the user and reviews of item for sale input by other people.

1-3. Estimation Method of Item Size That Fits User

Next, an estimation method of an item size that fits a designator in a designated item will be described with reference to FIGS. 3 and 4. The item size that fits the designator is referred to as a "fit size".

The online shopping mall server 1 estimates the fit size of the designator on the basis of the item size of the designated item purchased by a user who has purchased the designated item, a size relationship between the body size of the designator and the body size of the user who has purchased the designated item, and an evaluation to the designated item from the user who has purchased the designated item. The evaluation to the designated item is classified for each item size. The user who has purchased the designated item is referred to as an "existing purchaser". The existing purchaser is a user different from the designator. There is a high probability that the existing purchaser has actually worn the purchased designated item. Therefore, there is a probability that an evaluation to the designated item from the existing purchaser includes a result of the existing purchaser's wearing the designated item. Therefore, when the evaluation of an item size from an existing purchaser is high, the probability that the item size fits the body size of the existing purchaser is high. On the other hand, when the evaluation of an item size from an existing purchaser is low, the probability that the item size fits the body size of the existing purchaser is low. Therefore, the online shopping mall server 1 determines the size relationship between the body size of the designator and the body size of the user who has purchased the designated item and the online shopping mall server 1 calculates so that the higher the evaluation of the item size from the existing purchaser whose body size is similar to that of the designator, the higher the probability that the item size is estimated to be the fit size of the designator. The designator can know the item size that is estimated to fit the designator without trying the item for sale on.

There is a case in which one item for sale has a different item-for-sale page for each item size. In this case, the user may request various item-for-sale pages in order to search for a size that fits the user. Then, the requests that are processed by the online shopping mall server 1 increase, so that the processing load of the online shopping mall server 1 increases. However, the item size that is estimated to fit the user is displayed on the item-for-sale page, so that it is possible to reduce the requests from the user to search for a size that fits the user. Therefore, it is possible to reduce the processing load of the online shopping mall server 1.

Actually, the online shopping mall server 1 estimates the fit size by considering the fact that the existing purchaser purchased the item for sale. Specifically, the higher the evaluation of the item size, the higher the probability that the item size is estimated to be the fit size. The greater the number of times of purchase of the item size, the higher the probability that the item size is estimated to be the fit size. When the user purchases an item for sale, the user selects an item size which the user guess that fits the body size of the user on the basis of, for example, a rule of thumb. Therefore, there is a probability that the item size purchased by the user is the fit size of the user. However, the user cannot wear the item for sale until receiving the purchased item for sale. Therefore, the item size purchased by the user may not actually fit the body size of the user. Therefore, if the fit size is estimated based on only the fact that the item for sale is purchased by a user whose body size is similar to that of the designator, the estimation accuracy may be low. Therefore, the online shopping mall server 1 can improve the estimation accuracy of the fit size of the designator by considering the evaluation from the existing purchasers. The online shopping mall server 1 may estimate the fit size on the basis of the evaluation from the existing purchasers without considering the fact that the existing purchasers purchased the item for sale.

Next, the evaluation for the item size will be described. FIG. 3A is a diagram showing an example of a relationship between content of the evaluation and score. The score indicates a level of evaluation for the item size. The higher the score is, the higher the evaluation is. There are roughly three types of evaluation. The first type of the evaluation is the presence or absence of returned item for sale. As described above, in the case of an item for sale for which the size selection return service is used, the purchaser receives a plurality of the same items for sale whose sizes are different from each other and the purchaser can return items for sale of a part of the sizes from among the a plurality of the same items for sale. At this time, the user can determine whether or not to return the item for sale for each item size by actually trying on a plurality of items for sale of a plurality of sizes. Therefore, we consider that the item size of the item for sale which the user did not return is an item size that fits the body size of the user and the item size of the item for sale which the user returned is an item size that does not fit the body size of the user. Therefore, the presence or absence of returned item for sale is considered to be the evaluation for the item size. In this case, the evaluation of the item size of the item for sale that is not returned is higher than that of the item size of the item for sale that is returned. As shown in FIG. 3A, the score of the item size of the item for sale that is not returned is set to, for example, +3.0 and the score of the item size of the item for sale that is returned is set to, for example, -3.0.

The second type of the evaluation is content of the review of item for sale. For example, the purchaser actually tries on a purchased item for sale of a certain item size. As a result, the purchaser may register a review of item for sale after determining whether or not the item size fits the body size of the purchaser. Therefore, there is a probability that the higher the degree of recommendation of the review of item for sale is, the more the purchased item size fits the body of the purchaser. As shown in FIG. 3A, for example, the scores are set to -2.0, -1.0, +1.0, +1.5, and +2.0 with respect to the degrees of recommendation 1 to 5 respectively. The maximum value of the absolute value of the score according to the degree of recommendation is smaller than the absolute value of the score according to the presence or absence of returned item for sale. That is to say, the weight of the presence or absence of returned item for sale is heavier than the weight of the review of item for sale. In other words, the online shopping mall server 1 estimates the fit size by valuing the presence or absence of returned item for sale more than content of the review of item for sale. The reason of this is because the presence or absence of returned item for sale is considered to be a direct evaluation for the item size, while the content of the review of item for sale may include evaluation for things other than the item size.

There may be a plurality of items where a plurality of levels of evaluation can be performed. Examples of the items include the item size, a design, and a price. In this case, the online shopping mall server 1 may determine the score according to the evaluation for the item size. Further, the online shopping mall server 1 may determine the score on the basis of the title and the body text of the review of item for sale. The reason of this is because there is a probability that the purchased item size fits the body size of the purchaser when the content of the title and the body text is positive. On the other hand, there is a probability that the purchased item size does not fit the body size of the purchaser when the content of the title and the body text is negative. For example, the online shopping mall server 1 may extract positive words and negative words from the title and the body text. Examples of the positive words include "good", "suitable", and "fit". Examples of the negative words include "bad", "unsuitable", and "unfit". When extracting only the positive words, the online shopping mall server 1 may set the score to, for example, +2.0, and when extracting only the negative words, the online shopping mall server 1 may set the score to, for example, -2.0. Further, when the online shopping mall server 1 cannot extract both the positive words and the negative words, the online shopping mall server 1 may set the score to, for example, +1.0. Further, when the online shopping mall server 1 extracts both the positive words and the negative words, the online shopping mall server 1 may determine the score based on the ratio between the positive words and the negative words.

The third type of the evaluation is a case in which the user wavers over selecting the item size to be purchased from among a plurality of item sizes. Specifically, the case includes a deletion of an item for sale from the shopping cart and a cancel after the order is completed. For example, it is assumed that the user determines to purchase a certain item for sale X and registers the item for sale X of size M in the shopping cart. Thereafter, the user deletes the item for sale X of size M from the shopping cart without performing a purchase procedure. Next, the user registers the item for sale X of size L in the shopping cart, performs a purchase procedure, and purchases the item for sale X of size L. In this case, there are signs that the user wavered over purchasing the size M or the size L of the item for sale X. The fact that the user did not purchase the size M and finally purchased the size L indicates that there is a probability that the user considered the size M and the size L. In this case, the evaluation of the size L that was finally purchased is higher than that of the size M that was not finally purchased. The same goes for the cancel after the order is completed. It is assumed that the user completes the purchase procedure of the item for sale of size M and thereafter cancels the order before the item for sale X is shipped. Next, it is assumed that the user performs the purchase procedure of the item for sale X of size L and then the item for sale X of size L is delivered to the user. Also in this case, there are signs that the user wavered over purchasing the size M or the size L of the item for sale X. The evaluation of the size L that was finally purchased is higher than that of the size M that was not finally purchased. Further, we consider that when a user wavered over whether to purchase the size S or the size M and then purchased the size S, the user who wavered finally determined the size by studying the size more deliberately than a user who simply purchased the size S.

As shown in FIG. 3A, the score of the item size that is finally purchased is set to, for example, +1.5 and the score of the item size that is not finally purchased is set to, for example, -1.5. The maximum value of the absolute value of the score when wavering over the item size is smaller than the maximum value of the absolute value of the score according to the degree of recommendation. That is to say, the weight of the review of item for sale is heavier than the weight when wavering over the item size. In other words, the online shopping mall server 1 estimates the fit size by valuing the content of the review of item for sale more than when wavering over the item size. The reason of this is because when the user wavers over the item size and purchases the item for sale, the user cannot wear the item for sale before determining the item size to be finally purchased. Therefore, the evaluation when wavering over the item size is supplementarily used. The online shopping mall server 1 may determine whether or not the existing user wavers over the item size to be purchased from among a plurality of item sizes on the basis of either one of the presence or absence of the deletion of an item for sale from the shopping cart and the presence or absence of the cancel after the order is completed.

As shown in FIG. 3A, when there is no evaluation, the score is set to, for example, +1.0. The case when there is no evaluation is a case in which the user purchased an item for sale, did not return the item for sale, did not register the review of item for sale, and did not waver over the item size. In this case, the score of +1.0 is set with respect to the fact that the item for sale is purchased. The maximum value of the absolute value of the score when there is no evaluation and the item for sale is only purchased is smaller than the absolute value of the score when wavering over the item size. That is to say, the weight when wavering over the item size is heavier than the weight when there is no evaluation. The reason of this is because when wavering over the item size, there is a probability that a plurality of item sizes are studied.

The online shopping mall server 1 may estimate the fit size by using only either one of the presence or absence of returned item for sale and the content of the review of item for sale. Further, the online shopping mall server 1 may use either one of the presence or absence of returned item for sale and the content of the review of item for sale, and a case when wavering over the item size.

Next, a specification method of the body size of each user will be described. In the present embodiment, each user registers information related to their body size in the online shopping mall in advance. The information related to the body size is referred to as "body shape information". The body shape information is an example of body size information of the present invention. The body shape information includes, for example, the height and the weight. The online shopping mall server 1 specifies existing purchasers who have the body size included in the same range of body size as that in which the body size of the designator is included. The range of body size is referred to as a "body shape segment". FIG. 4 is a diagram showing an example of a relationship between the height and weight and the body shape segment. As shown in FIG. 4, the height is divided into, for example, five segments of low, intermediate-low, intermediate, intermediate-high, and high. In FIG. 4, the vertical dashed lines are boundaries of the height segment. The weight is divided into, for example, five segments of light, intermediate-light, intermediate, intermediate-heavy, and heavy. In FIG. 4, the horizontal dashed lines are boundaries of the height segment. Each area enclosed by the dashed lines corresponds to the body shape segment. The body shape segments for women and the body shape segments for men may be defined separately. When a difference between the body size of the designator and the body size of an existing purchaser is smaller than or equal to a predetermined difference, the online shopping mall server 1 may determine that the existing purchaser has the body size included in the same range of body size as that in which the body size of the designator is included.

The body shape information may include at least only one of the height and the weight. The online shopping mall server 1 may specify the body shape segment on the basis of the only one information. The body shape information may include detailed information. For example, the body shape information may include the length of the upper body, the length of the lower body, the bust size, the waist size, the hip size, and the like. The online shopping mall server 1 may specify the body shape segment on the basis of the detailed information. The online shopping mall server 1 may change the information to be used according to the type of the designated item. For example, the online shopping mall server 1 may use the length of the upper body for the tops and may use the length of the lower body for the bottoms.

In the present embodiment, the online shopping mall server 1 specifies existing purchasers who belong to the same body shape segment as that of the designator. Then, the online shopping mall server 1 determines a score as shown in FIG. 3A for each existing purchaser who belongs to the same body shape segment as that of the designator. When the existing purchaser performs a plurality of evaluations, the online shopping mall server 1 may sum up the scores of each evaluation. For example, it is assumed that the user wavers over whether to purchase the size M or the size L and the user purchased the size L as a result. Thereafter, it is assumed that the user registers a review of item for sale and sets a degree of favorite to 2. In this case, the score of the size M is -1.5. On the other hand, the score of the size L is +1.5 - 1.0 = +0.5. The online shopping mall server 1 may determine the score on the basis of only the evaluation whose weight is the highest among a plurality of evaluations. In the example described above, the weight of the content of the review of item for sale is heavier than the weight when wavering over the item size, so that the score of the size L is -1.0. That is to say, the online shopping mall server 1 ignores the evaluation of the lighter weight as a result of valuing the evaluation of the heavier weight.

The online shopping mall server 1 determines a total score for each item size by summing up the scores of each existing purchaser for each item size. Then, the online shopping mall server 1 specifies the item size whose total score is the highest as the fit size. When there is no evaluation, the score may be 0. Thereby, it is possible to cause a case in which the item for sale is only purchased and there is no evaluation not to be reflected on the estimation of the fit size.

The number of existing purchasers who perform evaluation is referred to as "the number of evaluators". The number of the existing purchasers is referred to as "the number of purchasers". The greater the number of purchasers is, the greater the number of evaluators tends to be. We consider that the greater the number of evaluators is, the higher the estimation accuracy of the fit size is. Therefore, when the user purchases the fit size indicated by the recommended size information 110 displayed on the item-for-sale page by designating an item for sale whose number of evaluators is small, the size of the purchased item for sale may not fit the body size of the user. The result that the item size does not fit the body size of the user is reflected on the evaluation. If the estimation accuracy of the fit size rises as the number of evaluators increases, the user need not use the size selection return service. Or, even when the user uses the size selection return service, the user can reduce the number of items for sale to be selected. Further, the user less frequently wavers over selecting the item size, the content of the review of item for sale improves, and the degree of recommendation rises.

By the way, each existing purchaser purchased the designated item at various times. The evaluation for the item size of the designated item from the existing purchaser is an evaluation at the time of purchase of the designated item. In other words, the evaluation from the existing purchaser is based on the body size of the existing purchaser at the time of purchase of the designated item. On the other hand, the body shape information registered by the user is considered to reflect the current body size of the user. There is a probability that the body size of the existing purchaser has changed from the time when the existing purchaser purchased the designated item to the present time. Therefore, when the body size of the existing purchaser is specified based on the body shape information, if the time of purchase of the designated item is old, the reliability of the evaluation from the existing purchaser may be low. Therefore, the online shopping mall server 1 may weight the score of each existing purchaser according to the time of purchase of the designated item. Specifically, the later the time of purchase is, the heavier the online shopping mall server 1 weights the score. In other words, the later the time of purchase of the existing purchaser is, the more the online shopping mall server 1 values the evaluation of the existing purchaser. FIG. 3B is a diagram showing an example of a relationship between the time of purchase and a weight coefficient W1. The weight coefficient W1 is a coefficient indicating a weight according to the time of purchase of the designated item. As shown in FIG. 3B, if the time of purchase is five or more years ago from the present time, the weight coefficient W1 is, for example, 0.5. If the time of purchase is two or more years ago and less than five years ago, the weight coefficient W1 is, for example, 0.8. If the time of purchase is a half or more years ago and less than two years ago, the weight coefficient W1 is, for example, 1.0. If the time of purchase is less than a half year ago, the weight coefficient W1 is, for example, 1.2. The online shopping mall server 1 calculates the final score for each existing purchaser by multiplying the score obtained based on FIG. 3A by the weight coefficient W1 obtained based on FIG. 3B for each existing purchaser. The online shopping mall server 1 may estimate the fit size without using the evaluation of the purchaser whose time of purchase is older than a predetermined time.

The online shopping mall server 1 estimates the fit size by using both the scores when there is evaluation and the score when there is no evaluation. As described above, it cannot be simply concluded that the item size purchased by the user fits the body size of the user. Therefore, the absolute value of the score when there is evaluation is greater than the absolute value of the score when there is no evaluation. However, in order to improve the estimation accuracy of the fit size, it is better to estimate the fit size based on only the evaluation. On the other hand, if the fit size is estimated based on only the evaluation when the number of the evaluators is small, the estimation accuracy of the fit size may be low. Further, the number of evaluators may be considerably smaller than the number of purchasers. Therefore, the online shopping mall server 1 may change the weight of the score when there is evaluation and the weight of the score when there is no evaluation according to the number of evaluators. Specifically, the online shopping mall server 1 changes the weights so that the greater the number of evaluators is, the heavier the weight of the score when there is evaluation and the lighter the weight of the score when there is no evaluation. FIG. 3C is a diagram showing an example of a relationship between the number of evaluators and a weight coefficient W2. The weight coefficient W2 is a coefficient indicating the weight of the score when there is evaluation. The weight of the score when there is no evaluation is 1 - W2. As shown in FIG. 3C, when the number of evaluators is smaller than 5, the weight coefficient W2 is, for example, 0.5. When the number of evaluators is greater than or equal to 5 and smaller than 10, the weight coefficient W2 is 0.6. When the number of evaluators is greater than or equal to 10 and smaller than 20, the weight coefficient W2 is 0.7. When the number of evaluators is greater than or equal to 20 and smaller than 40, the weight coefficient W2 is 0.8. When the number of evaluators is greater than or equal to 40 and smaller than 100, the weight coefficient W2 is 0.9. When the number of evaluators is greater than or equal to 100, the weight coefficient W2 is 1.0. The online shopping mall server 1 may determine the weight according to the ratio of the number of evaluators to the number of purchasers.

Specifically, the greater the ratio of the number of evaluators is, the heavier the online shopping mall server 1 makes the weight of the score when there is evaluation.

The user may purchase an item for sale for another person. In this case, the probability that the degree of fitness of the size of the purchased item for sale to the body size of the user is reflected on the evaluation from the user who purchased the item for sale for another person is low. The reason of this is because when the user purchases an item for sale for another person, the user selects the item size regardless of the body size of the user. Therefore, the online shopping mall server 1 need not use the evaluation from an existing purchaser who is determined to have purchased the designated item for another person to estimate the fit size. As an example in which the evaluation from an existing purchaser is not used, there is a case in which the existing purchaser is an adult and the existing purchaser purchased a designated item for children. An administrator of the online shopping mall can arbitrarily determine the minimum age of adult. As an example in which the evaluation from an existing purchaser is not used, there is a case in which the existing purchaser purchased an item for sale for a gender different from that of the existing purchaser. In other words, this is a case in which the existing purchaser purchased an item for sale for a person of the opposite gender. For example, the online shopping mall server 1 calculates a ratio between items for sale for women and items for sale for men among the items for sale purchased by the existing purchaser. Then, the online shopping mall server 1 determines that the items for sale for a gender whose ratio is smaller than or equal to a predetermined threshold value are items for sale which the existing purchaser has purchased for a person of the opposite gender. The threshold value is set to a value smaller than 50%. That is to say, the gender corresponding to the items for sale which has a greater ratio is the gender of the user who purchased the items for sale. When the user registers the gender of the user in the online shopping mall, the online shopping mall server 1 may acquire the registered gender.

When the online shopping mall server 1 determines that the designator designates an item for sale that is not worn by the designator as the designated item, the online shopping mall server 1 need not cause the recommended size information 110 to be displayed. As an example in which the online shopping mall server 1 does not cause the recommended size information 110 to be displayed, there are a case in which the designator is an adult and the designated item is an item for sale for children and a case in which the designated item is an item for sale for a gender different from that of the designator. Further, when the designated item is an item for sale for pregnant women, the online shopping mall server 1 need not cause the recommended size information 110 to be displayed. This is because the item for sale for pregnant women is an item for sale adjusted to a body type of pregnant women. Further, the user may be able to register whether or not the user is pregnant in the online shopping mall. When the designator is pregnant, the online shopping mall server 1 need not cause the recommended size information 110 to be displayed.

It is possible to specify whether an item for sale is for children or not, whether an item for sale is for women or for men, and whether an item for sale is for pregnant women or not, by the category of the item for sale. The categories of the item for sale is segments, classes or the like of the item for sale. Items for sale are divided into the categories on the basis of predetermined criteria.

## 1-4. Configuration of Online Shopping Mall Server

Next, a configuration of the online shopping mall server 1 will be described with reference to FIGS. 5 and 6.

FIG. 5 is a block diagram showing an example of a schematic configuration of the online shopping mall server 1 according to the present embodiment. As shown in FIG. 5, the online shopping mall server 1 includes a communication unit 11, a storage unit 12, an input/output interface 13, and a system control unit 14. The system control unit 14 and the input/output interface 13 are connected through a system bus 15.

The communication unit 11 connects to the network NW and controls communication state with the shop terminal 2 and the user terminal 3.

The storage unit 12 includes, for example, a hard disk drive and the like. The storage unit 12 is an example of a history storage means, a return history storage means, and a non-purchase history storage means of the present invention. In the storage unit 12, databases such as a member information DB 12a, a category information DB 12b, an items-for-sale information DB 12c, a shopping cart deletion history DB 12d, a purchase history DB 12e, a review information DB 12f are constructed. The "DB" is an abbreviation of database.

FIG. 6A is a diagram showing an example of content registered in the member information DB 12a. In the member information DB 12a, member information related to users registered as a member in the information processing system S is registered. Specifically, in the member information DB 12a, user attributes which are a user ID, a password, a nickname, a name, a date of birth, a gender, a postal code, an address, a phone number, an email address, body shape information, and the like are registered in association with each other for each user.

FIG. 6B is a diagram showing an example of content registered in the category information DB 12b. In the category information DB 12b, category information related to categories of items for sale is registered. Specifically, in the category information DB 12b, attributes of a category which are a category ID, a category name, a level of the category, a parent category ID, a child category ID list, and the like are registered in association with each other for each category. For example, the category information is set by an administrator of the online shopping mall.

The categories of items for sale are hierarchically defined by a tree structure. Specifically, each node in the tree structure corresponds to a category. The depth of the node corresponds to a level (class) of the category corresponding to the node. The depth of the node is a distance from a node (hereinafter referred to as "root node") located at the root. The greater the value of the level, the deeper the depth of the level is. The smaller the value of the level, the shallower the depth of the level is. The categories corresponding to child nodes of the root node are categories of level 1. The categories of level 1 are the highest categories. For each category of level 1, a categories corresponding to a child nodes are defined as the categories of level 2. Here, a category J2 corresponding to a child node of a certain category J1 is referred to as a "child category" of the category J1. At this time, the category J1 is referred to as a "parent category" of the category J2. The child category is a range to which similar items for sale belong when the parent category is further divided into a plurality of categories. Therefore, the child category belongs to the parent category. A category corresponding to an ancestor node of a certain category is referred to as an "ancestor category". For example, a category J3 is assumed to be a child category of the category J2. In this case, each of the categories J1 and J2 is an ancestor category of the category J3. Items for sale of the category J3 belong to the category J3 and also belong to the ancestor categories of the category J3. Therefore, the items for sale of the category J3 belong to both of the categories J1 to J3.

An example of how the category is divided will be described. As categories of level 1, for example, there are "lady’s fashion", "men’s fashion", and "kids/baby/maternity". As child categories of the "lady’s fashion", for example, there are "one-piece", "tops", and "bottoms". As child categories of the "tops", for example, there are "T-shirt", "polo shirt", and "blouse". How the category is divided depends on an administrator.

The category ID is identification information of the category defined by the category information. The parent category ID is a category ID of the parent category of the category defined by the category information. The child category ID list is a list of category IDs of child categories of the category defined by the category information. The child category ID list is set when the category defined by the category information has child categories.

FIG. 6C is a diagram showing an example of content registered in the items-for-sale information DB 12c. In the items-for-sale information DB 12c, item for sale information related to the items for sale sold in the online shopping mall is registered. The item for sale information is information registered by a shop. Specifically, in the items-for-sale information DB 12c, attributes of item for sale which are a shop ID, an item ID, a product code, a category ID, a brand ID, an item name, a URL of item for sale image, an item description, an item price, an item size list, a size selection return service flag are registered, and the like are registered in association with each other for each item for sale sold by a shop. The shop ID is identification information of the shop which sells the item for sale. The item ID is identification information of item for sale for a shop to manage the item for sale sold by the shop. A combination of the shop ID and the item ID corresponds to an item-for-sale page on one-on-one basis. The product code is a code number to identify the item for sale. When the same items for sale are sold by a plurality of shops, the same product code is given to the items for sale. As a product code, for example, there is JAN code (Japanese Article Number Code). The category ID indicates a category to which the item for sale belongs. The brand ID is identification information of the brand of the item for sale. The category ID set in the item for sale information is basically a category ID of the category whose level number is the largest number. In other words, a category ID of the most subdivided category is set. The item name is a name of the item for sale given by the shop. The item size list represents a list of the item sizes. The size selection return service flag indicates whether or not the size selection return service is applied.

FIG. 6D is a diagram showing an example of content registered in the shopping cart deletion history DB 12d. In the shopping cart deletion history DB 12d, a shopping cart deletion history that shows a history of deletion of items for sale from the shopping cart is registered. The shopping cart deletion history is an example of a non-purchase history of the present invention. Specifically, in the shopping cart deletion history DB 12d, a user ID, a deletion date and time, a shop ID, an item ID, and an item size list are registered every time an item for sale is deleted from the shopping cart. The user ID indicates a user who deleted the item for sale from the shopping cart. The deletion date and time indicates the date and time when the item for sale is deleted from the shopping cart. The shop ID indicates a shop that sells the item for sale deleted from the shopping cart. The item ID indicates the item for sale deleted from the shopping cart. The item size list is a list of the item sizes of the item for sale deleted from the shopping cart.

FIG. 6E is a diagram showing an example of content registered in the purchase history DB 12e. In the purchase history DB 12e, a purchase history of items for sale by a user is registered. The purchase history is an example of a purchase history, a return history, and a non-purchase history of the present invention. Specifically, in the purchase history DB 12e, an order code, a purchase date and time, a user ID, a shop ID, an item ID, a product code, a category ID, a brand ID, a purchase size list, a purchase price, a cancel flag, a cancel date and time, a return flag, a return date and time, a return size list, and the like are registered in association with each other for each purchase of an item for sale. The order code is identification information of an order. The order code is given each time an item for sale is ordered. The user ID indicates a purchaser. The shop ID indicates a shop from which the item for sale is purchased. The item ID and the product code indicate a purchased item for sale. The category ID indicates a brand of the purchased item for sale. The purchase size list is a list of the sizes of the purchased item for sale. The cancel flag is information indicating whether or not the order is canceled. The cancel flag is set to ON or OFF. The ON indicates that the order is canceled. The OFF indicates that the order is not canceled. The cancel date and time indicates a date and time when an operation of the cancel is performed. The return flag is information indicating whether or not a part of items for sale with some sizes is returned. The return flag is set to ON or OFF. The ON indicates that the item for sale is returned. The OFF indicates that the item for sale is not returned. The return date and time indicates a date and time when an operation of the return is performed. The return size list is a list of the sizes of the returned item or items for sale.

FIG. 6F is a diagram showing an example of content registered in the review information DB 12f. In the review information DB 12f, review information related to a review of item for sale is registered. Specifically, in the review information DB 12f, a user ID, a registration date and time, a shop ID, an item ID, an item size list, a degree of recommendation, and a title and a body text of a review of item for sale are registered every time a review of item for sale is registered. The user ID indicates a user who registered the review of item for sale. The registration date and time indicates the time and date when the review of item for sale is registered. The shop ID indicates a shop which sells the item for sale for which the review of item for sale is registered. The item ID indicates the item for sale for which the review of item for sale is registered. The item size list is a list of the item sizes for which the review of item for sale is registered. However, if the return is performed, the item size list includes only the item sizes that is not returned.

Next, other information stored in the storage unit 12 will be described. The storage unit 12 stores various data such as HTML (HyperText Markup Language) documents for displaying web pages, XML (Extensible Markup Language) documents, image data, text data, and electronic documents. The storage unit 12 also stores various setting values. The storage unit 12 also stores scores corresponding to each evaluation.

Further, the storage unit 12 stores various programs which are an operating system, a WWW (World Wide Web) server program, a DBMS (Database Management System), an electronic commerce management program, and the like. The electronic commerce management program is a program for performing various processes related to the electronic commerce. The electronic commerce management program is an example of an information processing program of the present invention. For example, the various programs may be acquired from another server device or the like through the network NW or may be recorded in a recording medium such as a DVD (Digital Versatile Disc) and read through a drive device.

The input/output interface 13 performs interface processing among the communication unit 11, the storage unit 12, and the system control unit 14.

The system control unit 14 includes a CPU 14a, a ROM (Read Only Memory) 14b, a RAM (Random Access Memory) 14c, and the like. In the system control unit 14, the CPU 14a reads and executes various programs, so that the system control unit 14 functions as a size acquisition means, a body size information acquisition means, an evaluation specification means, an estimation means, and an output means of the present invention.

The online shopping mall server 1 may include a plurality of server devices. For example, a server device that performs processing such as searching for an item for sale and ordering an item for sale in the online shopping mall, a server device that estimates a fit size, a server device that transmits a web page according to a request from the user terminal 3, a server device that manages databases, and the like may be connected to each other by a LAN or the like.

1-5. Operation of Information Processing System

Next, an operation of the information processing system S will be described with reference to FIGS. 7 to 11.

FIG. 7 is a flowchart showing a process example of an item-for-sale page transmission process of the system control unit 14 of the online shopping mall server 1 according to the present embodiment. The item-for-sale page transmission process is preformed every time the online shopping mall server 1 receives a request for an item-for-sale page from the user terminal 3. The request transmitted from the user terminal 3 to the online shopping mall server 1 is a message representing a request from the designator. The request for the item-for-sale page includes the shop ID and the item ID of the designated item and the user ID of the designator. The system control unit 14 specifies the designated item on the basis of the received request. Specifically, the system control unit 14 acquires the shop ID, the item ID, and the user ID from the request. Then, the system control unit 14 acquires item for sale information that includes the acquired shop ID, and the item ID from the items-for-sale information DB 12c. Further, the system control unit 14 acquires member information that includes the acquired user ID from the member information DB 12a.

As shown in FIG. 7, the system control unit 14 acquires an HTML document of the item-for-sale page of the designated item from the storage unit 12 (step S1). Next, the system control unit 14 determines whether or not the designated item is an item for sale for children on the basis of the category ID included in the item for sale information of the designated item (step S2). At this time, if the system control unit 14 determines that the designated item is not an item for sale for children (step S2: NO), the system control unit 14 proceeds to step S4. On the other hand, if the system control unit 14 determines that the designated item is an item for sale for children (step S2: YES), the system control unit 14 determines whether or not the designator is an adult on the basis of the age included in the member information of the designator (step S3). At this time, if the system control unit 14 determines that the designator is an adult (step S3:

YES), the system control unit 14 proceeds to step S7. In this case, the system control unit 14 does not estimate the fit size. On the other hand, if the system control unit 14 determines that the designator is not an adult (step S3: NO), the system control unit 14 proceeds to step S4.

When the attribute of the designator and the attribute of the designated item do not correspond to each other, the system control unit 14 is allowed not to estimate the fit size. For example, the system control unit 14 determines whether the designator is an adult or a child as well as whether the designated item is for adults or for children. When the designator is an adult and the designated item is for children, the system control unit 14 does not estimate the fit size. When the designator is a child and the designated item is for adults, the system control unit 14 does not estimate the fit size. Further, the system control unit 14 determines whether the designator is a woman or a man as well as whether the designated item is for women or for men. When the designator is a woman and the designated item is for men, the system control unit 14 does not estimate the fit size. When the designator is a man and the designated item is for women, the system control unit 14 does not estimate the fit size.

The system control unit 14 can determine the attribute of the designator on the basis of information set in the member information of the designator. On the other hand, the system control unit 14 can determine the attribute of the designated item on the basis of the category ID included in the item for sale information of the designated item. Or, the system control unit 14 may determine the attribute of the designated item on the basis of the purchase history of the designated item. For example, the system control unit 14 calculates a ratio of the number of purchasers for each attribute of existing purchasers on the basis of the purchase history. Then, the system control unit 14 determines an attribute corresponding to the attribute of the existing purchasers whose ratio is the greatest to be the attribute of the designated item. For example, when the ratio of women among the existing purchasers is greater than that of men, the system control unit 14 determines that the designated item is an item for sale for women.

In step S4, the system control unit 14 performs a fit size estimation process. In the fit size estimation process, a fit size is estimated. The details of the fit size estimation process will be described later. After completing the fit size estimation process, the system control unit 14 generates the recommended size information 110 based on the estimated fit size (step S5). Next, the system control unit 14 adds the generated recommended size information 110 to the HTML document of the item-for-sale page of the designated item (step S6). Next, the system control unit 14 transmits the HTML document of the item-for-sale page of the designated item to the user terminal 3 that is the transmission source of the request (step S7). Thereby, the system control unit 14, which functions as the output means, outputs the fit size. After completing this process, the system control unit 14 ends the item-for-sale page transmission process.

The user terminal 3 that receives the HTML document displays the item-for-sale page on the screen. When the online shopping mall server 1 performs the fit size estimation process, for example, as shown in FIG. 2, the recommended size information 110 is displayed on the item-for-sale page. In this way, the system control unit 14 causes the user terminal 3 to present the fit size to the user.

The system control unit 14 may transmit the HTML document of the item-for-sale page and the recommended size information 110 separately from each other. For example, in the HTML document of the item-for-sale page, a script for receiving the recommended size information 110 from the online shopping mall server 1 is described. First, the system control unit 14 transmits the HTML document of the item-for-sale page to the user terminal 3 according to the request for the item-for-sale page from the user terminal 3. Thereafter, the system control unit 14 estimates the fit size. The user terminal 3 that receives the HTML document displays the item-for-sale page based on the HTML document and transmits a request for the recommended size information 110 to the online shopping mall server 1 on the basis of the script included in the HTML document. The system control unit 14 transmits the recommended size information 110 to the user terminal 3 according to the received request. The user terminal 3 that receives the recommended size information 110 displays the recommended size information 110 in the item-for-sale page that has already been displayed. Thereby, even if the online shopping mall server 1 takes a time to estimate the fit size, the user terminal 3 can display the item-for-sale page as quickly as before.

FIGS. 8 and 9 are flowcharts showing a process example of the fit size estimation process of the system control unit 14 of the online shopping mall server 1 according to the present embodiment.

As shown in FIG. 8, the system control unit 14, which functions as the body size information acquisition means, acquires body shape information from the member information of the designator (step S21). Next, the system control unit 14 initializes the number of evaluators, a score with evaluation for each item size, and a score without evaluation for each item size to 0 (step S22). The score with evaluation is a total value of the scores when there is evaluation. The score without evaluation is a total value of the scores when there is no evaluation. At this time, the system control unit 14 acquires item sizes from the item size list included in the item for sale information of the designated item. Then, the system control unit 14 initializes the scores corresponding to the acquired item sizes. When the item-for-sale page varies for each item size, the item size list includes only one item size among a plurality of item sizes prepared for the designated item. In this time, the system control unit 14 acquires item sizes from the item for sale information of the same items for sale as the designated item. For example, the system control unit 14 searches for item for sale information including the same product code as that of the designated item and/or item for sale information including the same item name as that of the designated item from the items-for-sale information DB 12c. Then, the system control unit 14 acquires item sizes from the item size lists included in the retrieved item for sale information.

Next, the system control unit 14 searches for the purchase histories of the designated item (step S23). Specifically, the system control unit 14 searches for purchase histories that include the shop ID and the item ID of the designated item from the purchase history DB 12e. The system control unit 14 may determine an item for sale whose product code is the same as that of the designated item as a designated item. In this case, the system control unit 14 acquires the product code from the item for sale information of the designated item. Then, the system control unit 14 searches for purchase histories that include the acquired product code. The system control unit 14 may search for only purchase histories of existing purchasers whose gender is the same as that of the designator. The system control unit 14 may exclude but need not exclude a purchase history that includes the user ID of the designator from the purchase history to be searched for. It is not a problem that the designator is included in the existing purchasers. It is important that one or more users other than the designator are included in the existing purchasers.

Next, the system control unit 14 selects purchase history of one existing purchaser from the purchase histories retrieved in step S23 (step S24). In other words, the system control unit 14 selects a purchase history including a certain user ID. At this time, if a plurality of purchase histories include the same user ID, the system control unit 14 selects the plurality of purchase histories including the same user ID. Here, the existing purchaser indicated by the selected purchase history is referred to as a "selected purchaser".

Next, the system control unit 14 performs a purchase purpose determination process (step S25). In the purchase purpose determination process, it is determined whether or not the purpose of the selected purchaser's having purchased the designated item is for another person. The details of the purchase purpose determination process will be described later. Next, the system control unit 14 determines whether or not the return value of the purchase purpose determination process is "for another person" (step S26). When the return value is "for another person", the purpose of the selected purchaser's having purchased the designated item is for another person. At this time, if the system control unit 14 determines that the return value is "for another person" (step S26: YES), the system control unit 14 proceeds to step S35. In this case, the system control unit 14 does not calculate the score of the selected purchaser. In other words, the system control unit 14 does not use the purchase history of the designated item of the selected purchaser to estimate the fit size. On the other hand, if the system control unit 14 determines that the return value is not "for another person" (step S26: NO), the system control unit 14 proceeds to step S27.

In step S27, the system control unit 14, which functions as the body size information acquisition means, acquires the body shape information of the selected purchaser. Specifically, the system control unit 14 acquires the user ID of the selected purchaser from the purchase history. Next, the system control unit 14 acquires member information that includes the acquired user ID from the member information DB 12a. Next, the system control unit 14 acquires the body shape information from the acquired member information.

When the system control unit 14 acquires the body shape information, the system control unit 14 determines whether or not the body shape segment of the designator and the body shape segment of the selected purchaser correspond to each other (step S28). The body shape segment is specified on the basis of the body shape information. At this time, if the system control unit 14 determines that the body shape segment of the designator and the body shape segment of the selected purchaser do not correspond to each other (step S28: NO), the system control unit 14 proceeds to step S35.

On the other hand, if the system control unit 14 determines that the body shape segment of the designator and the body shape segment of the selected purchaser correspond to each other (step S28: YES), the system control unit 14 performs a score calculation process (step S29). In the score calculation process, the score of the selected purchaser with respect to each item size of the designated item is calculated. The details of the score calculation process will be described later.

Next, the system control unit 14 weights the score of each item size according to the time of purchase of the designated item of the selected purchaser (step S30). Specifically, the system control unit 14 acquires the weight coefficient W1 corresponding to the purchase date and time included in the purchase history of the selected purchaser from the storage unit 12. If there is a plurality of purchase histories, the system control unit 14 acquires, for example, the weight coefficient W1 corresponding to the average of the purchase dates and times. The system control unit 14 calculates a final score for each item size of the selected purchaser by multiplying the score of each item size by the weight coefficient W1.

Next, as shown in FIG. 9, the system control unit 14 determines whether or not there is an evaluation from the selected purchaser (step S31). At this time, if the system control unit 14 determines that there is an evaluation from the selected purchaser (step S31: YES), the system control unit 14 proceeds to step S32. On the other hand, if the system control unit 14 determines that there is no evaluation from the selected purchaser (step S31: NO), the system control unit 14 proceeds to step S34.

In step S32, the system control unit 14 adds 1 to the number of evaluators. Next, the system control unit 14 adds the score of each item size of the selected purchaser to the score with evaluation of each item size (step S33).

Next, the system control unit 14 proceeds to step S35. In step S34, the system control unit 14 adds the score of each item size of the selected purchaser to the score without evaluation of each item size. Next, the system control unit 14 proceeds to step S35.

In step S35, the system control unit 14 determines whether or not there is at least one purchase history histories that has not yet been selected among the purchase histories retrieved in step S23. At this time, if the system control unit 14 determines that there is at least one purchase history that has not yet been selected (step S35: YES), the system control unit 14 selects a purchase history of one purchaser from among the purchase histories that have not yet been selected (step S36). Next, the system control unit 14 proceeds to step S25. The system control unit 14 repeats the process from step S25 to step S36, so that the system control unit 14 calculates a total value of the score for each item size of the existing purchasers with evaluation and a total value of the score for each item size of the existing purchasers without evaluation.

When the system control unit 14 determines that all the purchase histories have been selected (step S35: NO), the system control unit 14 acquires the weight coefficient W2 according to the number of evaluators from the storage unit 12 (step S37). Next, the system control unit 14 calculates a total score for each item size (step S38). Specifically, the system control unit 14 calculates the following formula for each item size.

$$\text{Total score} = W2 \times \text{score with evaluation} + (1 - W2) \times \text{score without evaluation}$$

Next, the system control unit 14, which functions as the estimation means, specifies the item size whose total score is the highest as the fit size (step S39). After completing this process, the system control unit 14 ends the item size estimation process.

FIG. 10 is a flowchart showing a process example of the purchase purpose determination process of the system control unit 14 of the online shopping mall server 1 according to the present embodiment.

As shown in FIG. 10, the system control unit 14 searches for purchase histories including the user ID of the selected purchaser from the purchase history DB 12e (step S41). Next, the system control unit 14 calculates a ratio of items for sale for women and a ratio of items for sale for men with respect to all the items for sale purchased by the selected purchaser. The system control unit 14 can determine whether an item for sale is for women or for men on the basis of the category ID included in the purchase history.

Next, the system control unit 14 determines whether or not the designated item is an item for sale for men on the basis of the category ID included in the item for sale information of the designated item (step S42). At this time, if the system control unit 14 determines that the designated item is not an item for sale for men (step S42: NO), the system control unit 14 proceeds to step S44. On the other hand, if the system control unit 14 determines that the designated item is an item for sale for men (step S42: YES), the system control unit 14 determines whether or not the ratio of the items for sale for men is smaller than or equal to a threshold value stored in the storage unit 12 (step S43). At this time, if the system control unit 14 determines that the ratio of the items for sale for men is smaller than or equal to the threshold value (step S43: YES), the system control unit 14 sets the return value to "for another person" (step S48). After completing this process, the system control unit 14 ends the purchase purpose determination process. On the other hand, if the system control unit 14 determines that the ratio of the items for sale for men is greater than the threshold value (step S43: NO), the system control unit 14 proceeds to step S45.

In step S44, the system control unit 14 determines whether or not the ratio of the items for sale for women is smaller than or equal to a threshold value. At this time, if the system control unit 14 determines that the ratio of the items for sale for women is smaller than or equal to the threshold value (step S44: YES), the system control unit 14 proceeds to step S48. On the other hand, if the system control unit 14 determines that the ratio of the items for sale for women is greater than the threshold value (step S44: NO), the system control unit 14 proceeds to step S45. When the gender is included in the member information of the designator, the system control unit 14 may perform the determination on the basis of the gender set in the member information.

In step S45, the system control unit 14 determines whether or not the designated item is an item for sale for children. At this time, if the system control unit 14 determines that the designated item is not an item for sale for children (step S45: NO), the system control unit 14 sets the return value to "for myself" (step S47). After completing this process, the system control unit 14 ends the purchase purpose determination process. On the other hand, if the system control unit 14 determines that the designated item is an item for sale for children (step S45: YES), the system control unit 14 determines whether or not the selected purchaser is an adult on the basis of the age included in the member information of the selected purchaser (step S46). At this time, if the system control unit 14 determines that the selected purchaser is an adult (step S46: YES), the system control unit 14 proceeds to step S48. On the other hand, if the system control unit 14 determines that the selected purchaser is not an adult (step S46: NO), the system control unit 14 proceeds to step S47.

FIG. 11 is a flowchart showing a process example of the score calculation process of the system control unit 14 of the online shopping mall server 1 according to the present embodiment.

As shown in FIG. 11, the system control unit 14 initializes the score of each item size of the selected purchaser to 0 (step S60). Next, the system control unit 14 determines whether or not the designated item is returned from the selected purchaser (step S61). Specifically, when the return flag included in the purchase history of the selected purchaser is ON, the system control unit 14 determines that the designated item is returned from the selected purchaser (step S61: YES). In this case, the system control unit 14 proceeds to step S62. On the other hand, when the return flag is OFF, the system control unit 14 determines that the designated item is not returned from the selected purchaser (step S61: NO). In this case, the system control unit 14 proceeds to step S64.

In step S62, the system control unit 14, which functions as the evaluation specification means, adds a score A1 to the score of the item size that is not returned. The score A1 is a score (for example, +3.0) of the item size that is not returned. The system control unit 14, which functions as the size acquisition means, acquires a purchase size list and a return size list from the purchase history of the selected purchaser. Then, the system control unit 14 specifies an item size that is not included in the return size list among item sizes included in the purchase size list as the item size that is not returned.

Next, the system control unit 14, which functions as the evaluation specification means, adds a score A2 to the score of the item size that is returned (step S63). The score A2 is a score (for example, -3.0) of the item size that is returned. The item size included in the return size list is the item size that is returned. After completing this process, the system control unit 14 proceeds to step S64.

In step S64, the system control unit 14 determines whether or not a review of item for sale of the designated item from the selected purchaser is registered. Specifically, the system control unit 14 searches for review information including the user ID of the selected purchaser and the shop ID and the item ID of the designated item from the review information DB 12f. At this time, if there is corresponding review information, the system control unit 14 determines that the review of item for sale is registered (step S64: YES). In this case, the system control unit 14 proceeds to step S65. On the other hand, if there is no corresponding review information, the system control unit 14 determines that the review of item for sale is not registered (step S64: NO). In this case, the system control unit 14 proceeds to step S66.

In step S65, the system control unit 14, which functions as the evaluation specification means, acquires the degree of recommendation from the retrieved review information. Then, the system control unit 14 adds a score Bn according to the degree of recommendation included in the review information to the score of the item size for which the review of item for sale is registered. The score Bn is a score (for example, any one of -2.0, -1.0, +1.0, +1.5, and +2.0) according to a value n of the degree of recommendation. Next, the system control unit 14 proceeds to step S66.

In step S66, the system control unit 14 determines whether or not the selected purchaser has ever deleted the designated item from the shopping cart. Specifically, the system control unit 14 searches for a shopping cart deletion history including the user ID of the selected purchaser and the shop ID and the item ID of the designated item from the shopping cart deletion history DB 12d. At this time, if there is a corresponding shopping cart deletion history, the system control unit 14 determines that the selected purchaser has ever deleted the designated item from the shopping cart (step S66: YES). In this case, the system control unit 14 proceeds to step S67. On the other hand, if there is no corresponding shopping cart deletion history, the system control unit 14 determines that the selected purchaser has never deleted the designated item from the shopping cart (step S66: NO). In this case, the system control unit 14 proceeds to step S69.

In step S67, the system control unit 14 determines whether or not an item size different from the item size purchased by the selected purchaser is deleted from the shopping cart. Specifically, among the item sizes registered in the item size list included in the retrieved shopping cart deletion history, the system control unit 14 determines whether or not there is an item size that does not corresponds to any one of the item sizes registered in the purchase size list included in the purchase history of the designated item of the selected purchaser. At this time, among the item sizes registered in the item size list, if there is an item size that does not corresponds to any one of the item sizes registered in the purchase size list, the system control unit 14 determines that an item size different from the item size purchased by the selected purchaser is deleted from the shopping cart (step S67: YES). In this case, the system control unit 14 sets a shopping cart deletion evaluation flag to ON (step S68). Next, the system control unit 14 proceeds to step S70. On the other hand, if all the item sizes set in the item size list correspond to the item sizes set in the purchase size list, the system control unit 14 determines that an item size different from the item size purchased by the selected purchaser is not deleted from the shopping cart (step S67: NO). In this case, the system control unit 14 sets the shopping cart deletion evaluation flag to OFF (step S69). Next, the system control unit 14 proceeds to step S70.

In step S70, the system control unit 14 determines whether or not the selected purchaser cancelled orders of only a part of designated items of a plurality of item sizes ordered by the selected purchaser. Specifically, when there is a plurality of purchase histories of the selected purchaser, only the cancel flags included in a part of the plurality of purchase histories are ON, and the item sizes registered in the purchase size lists included in the purchase histories where the cancel flag is ON are different from the item sizes registered in the purchase size lists included in the purchase histories where the cancel flag is OFF, the system control unit 14 determines that the selected purchaser has cancelled orders of only a part of designated items of a plurality of item sizes ordered by the selected purchaser (step S70: YES). In this case, the system control unit 14 sets a cancel evaluation flag to ON (step S71) . Next, the system control unit 14 proceeds to step S73. On the other hand, when there is only one purchase history of the selected purchaser, the cancel flags included in a plurality of purchase histories are the same, or the item sizes registered in the purchase size lists included in the purchase histories where the cancel flag is ON correspond to the item sizes registered in the purchase size lists included in the purchase histories where the cancel flag is OFF, the system control unit 14 determines that the selected purchaser has not cancelled orders of only a part of designated items of a plurality of item sizes ordered by the selected purchaser (step S70: NO). In this case, the system control unit 14 sets a cancel evaluation flag to OFF (step S72). Next, the system control unit 14 proceeds to step S73.

In step S73, the system control unit 14 determines whether or not at least one of the shopping cart deletion evaluation flag and the cancel evaluation flag is ON. At this time, if the system control unit 14 determines that both the shopping cart deletion evaluation flag and the cancel evaluation flag are OFF (step S73: NO), the system control unit 14 proceeds to step S76. On the other hand, if the system control unit 14 determines that at least one of the shopping cart deletion evaluation flag and the cancel evaluation flag is ON (step S73: YES), the system control unit 14 proceeds to step S74.

In step S74, the system control unit 14, which functions as the evaluation specification means, adds a score C1 to the score of the item size that is finally purchased. The score C1 is a score (for example, +1.5) of the item size that is finally purchased. When only the shopping cart deletion evaluation flag is ON between the shopping cart deletion evaluation flag and the cancel evaluation flag, the system control unit 14 specifies that the item size set in the purchase size list included in the purchase history of the selected purchaser is the item size that is finally purchased. When at least the cancel evaluation flag is ON, the system control unit 14 specifies that the item size set in the purchase size list included in the purchase history where the cancel flag is OFF is the item size that is finally purchased.

Next, the system control unit 14, which functions as the evaluation specification means, adds a score C2 to the score of the item size that is not finally purchased (step S75). The score C2 is a score (for example, -1.5) of the item size that is not finally purchased. When only the shopping cart deletion evaluation flag is ON between the shopping cart deletion evaluation flag and the cancel evaluation flag, the system control unit 14 specifies that the item sizes other than the item size that is finally purchased among the item sizes registered in the item size list included in the shopping cart deletion history are the sizes of items for sale that are not finally purchased. When only the cancel evaluation flag is ON, the system control unit 14 specifies that the item sizes registered in the purchase size list included in the purchase history where the cancel flag is ON are the sizes of items for sale that are not finally purchased. When both the shopping cart deletion evaluation flag and the cancel evaluation flag are ON, the system control unit 14 specifies that the item sizes other than the item size that is finally purchased and the item sizes set in the purchase size list included in the purchase history where the cancel flag is OFF among the item sizes set in the item size list included in the shopping cart deletion history are the sizes of items for sale that are not finally purchased. After completing the process of step S75, the system control unit 14 proceeds to step S76.

In step S76, the system control unit 14 determines whether or not there is no evaluation for the designated item from the selected purchaser. The case in which there is no evaluation is a case in which addition to the score has never been done from step S60 to step S75. At this time, if the system control unit 14 determines that there is evaluation (step S76: NO), the system control unit 14 ends the score calculation process. On the other hand, if the system control unit 14 determines that there is no evaluation (step S76: YES), the system control unit 14 adds a score D to the score of the item size that is purchased (step S77). The score D is a score (for example, +1.0) of the item size without evaluation. Next, the system control unit 14 ends the score calculation process.

As described above, according to the present embodiment, the system control unit 14 acquires the item size of the designated item purchased by an existing purchaser who purchased the designated item specified according to the request from the designator on the basis of the purchase history stored in the storage unit 12, acquires the body shape information related to the body size of the designator and the body shape information related to the body size of the existing purchaser acquires the review of item for sale for the designated item from the existing purchaser, specifies scores according to the evaluation for the designated item from the existing purchaser, estimates the fit size on the basis of the item size purchased by the existing purchaser, the size relationship between the body size of the designator and the body size of the existing purchaser, and the scores, and outputs the recommended size information including the estimated fit size. Therefore, it is possible to cause an item size that fits the body of the user even if the user does not try the item for sale on.

Further, when it is determined that an existing purchaser who purchased a plurality of designated items whose sizes are different from each other returned a part of the designated items on the basis of the purchase history stored in the storage unit 12, the system control unit 14 specifies scores so that the score of the item size that was not returned is higher than the score of the sizes of items for sale that were returned. Therefore, it is possible to improve the estimation accuracy of the fit size.

Further, the system control unit 14 acquires item for sale review information input by an existing purchaser and specifies a score according to content of the acquired item for sale review information. Therefore, it is possible to improve the estimation accuracy of the fit size.

Further, when it is determined that an existing purchaser selected a size for the designated item and thereafter cancelled the selected size and purchased another size on the basis of at least one of the shopping cart deletion history and the purchase history stored in the storage unit 12, the system control unit 14 specifies scores so that the score of the item size that was purchased is higher than the score of the item size whose purchase was cancelled. Therefore, it is possible to improve the estimation accuracy of the fit size.

Further, the system control unit 14 estimates the fit size by valuing the presence or absence of returned item for sale more than the content of the item for sale review information input from an existing purchaser. Therefore, it is possible to improve the estimation accuracy of the fit size.

Further, the system control unit 14 estimates the fit size by valuing the content of the item for sale review information input from an existing purchaser more than whether or not the purchase was cancelled after determining the purchase. Therefore, it is possible to improve the estimation accuracy of the fit size.

Further, the system control unit 14 acquires the body shape information from the storage unit 12 that stores the body shape information registered from a user for each user. Therefore, it is possible to perform estimation on the basis of accurate information.

Further, the system control unit 14 estimates the item size in a manner in which the later the time when an existing purchaser purchased the designated item, the more the evaluation from the existing purchaser is valued, on the basis of the purchase history. Therefore, it is possible to improve the estimation accuracy of the fit size.

Between items for sale for women and items for sale for men, when the designated item is included in items for sale whose ratio with respect to the items for sale purchased by an existing purchaser is smaller than or equal a threshold value set to a value smaller than 50%, the system control unit 14 does not use the purchase history of the existing purchaser to estimate the fit size. Therefore, it is possible to improve the estimation accuracy of the fit size.

When the existing purchaser is an adult and the designated item is for children, the system control unit 14 does not use the purchase history of the existing purchaser to estimate the fit size. Therefore, it is possible to improve the estimation accuracy of the fit size.

When the designator is an adult and the designated item is an item for sale for children, the system control unit 14 does output the recommended size information. Therefore, it is possible not to perform estimation when the fit size need not be estimated. Therefore, it is possible to reduce the processing load to estimate the fit size.

Further, the system control unit 14 specifies an existing purchaser whose body size is included in the same body shape segment as that of the designator on the basis of the body shape information, estimates the item size that fits the specified existing purchaser on the basis of the evaluation for the item size of the designated item purchased by the specified existing purchaser, and estimates that the estimated item size is the fit size. Therefore, the estimation is performed based on the item size purchased by a user whose body size is similar to that of the designator and the evaluation from the user, so that the evaluation accuracy of the fit size can be improved.

## 2. Second Embodiment

Next, an overview of a second embodiment will be described. In the second embodiment, the online shopping mall server 1 estimates the fit size on the basis of the evaluation from an existing purchaser whose body size is included in a range different from a range that includes the body size of the designator. The description of the same points as those in the first embodiment will be omitted.

In the first embodiment, the online shopping mall server 1 estimates the fit size on the basis of the evaluation from an existing purchaser whose body size is included in the same range as that of the body size of the designator. However, there may be no existing purchaser who has the body size similar to that of the designator or existing purchasers who have the body size similar to that of the designator may be few. In this case, the fit size cannot be estimated or the estimation accuracy degrades. On the other hand, there is a probability that the number of existing purchasers who have the body size different from that of the designator is greater than the number of existing purchasers who have the body size similar to that of the designator. Therefore, the online shopping mall server 1 estimates the fit size on the basis of the evaluation from the existing purchasers who have the body size different from that of the designator.

Specifically, there is a probability that the item size that fits a user whose body size is smaller than that of the designator is smaller than the item size that fits the designator. On the other hand, there is a probability that the item size that fits a user whose body size is greater than that of the designator is greater than the item size that fits the designator. Therefore, the online shopping mall server 1 estimates the item size that fits an existing purchaser whose body size is smaller than that of the designator on the basis of the evaluation from an existing purchaser whose body size is smaller than that of the designator. Further, the online shopping mall server 1 estimates the item size that fits an existing purchaser whose body size is greater than that of the designator on the basis of the evaluation from an existing purchaser whose body size is greater than that of the designator. The online shopping mall server 1 estimates the item size between the item size that fits an existing purchaser whose body size is smaller than that of the designator and the item size that fits an existing purchaser whose body size is greater than that of the designator as the fit size of the designator. The item size that fits an existing purchaser whose body size is smaller than that of the designator is an example of a first size of the present invention. The item size that fits an existing purchaser whose body size is greater than that of the designator is an example of a second size of the present invention.

For example, it is assumed that the item size that fits an existing purchaser whose body size is smaller than that of the designator is size XS and the item size that fits an existing purchaser whose body size is greater than that of the designator is size LL. In this case, the online shopping mall server 1 determine the size M which is an exactly intermediate item size between the size XS and the size LL to be the fit size. On the other hand, it is assumed that the item size that fits an existing purchaser whose body size is smaller than that of the designator is size XS and the item size that fits an existing purchaser whose body size is greater than that of the designator is size L. In this case, there is no item size which is an exactly intermediate size between the size XS and the size L. In this case, for example, the online shopping mall server 1 may specify both the size S and the size M as the fit size. In this case, the online shopping mall server 1 may generate, for example, "Many people having a body shape close to yours buy size S or size M." as the recommended size information 110.

Next, an operation of the information processing system S will be described with reference to FIGS. 12 and 13. FIGS. 12 and 13 are flowcharts showing a process example of the fit size estimation process of the system control unit 14 of the online shopping mall server 1 according to the present embodiment. In FIGS. 12 and 13, the same processes as those in FIGS. 8 and 9 are denoted by the same reference numerals. In the second and subsequent embodiments, the contents of the purchase purpose determination process, the item-for-sale page transmission process, and the score calculation process are the same as those in the first embodiment.

As shown in FIG. 12, after completing the process of step S21, the system control unit 14 initializes the number of evaluators and a small score and a large score of each item for sale to 0 (step S81). The small score is a total value of the scores of existing purchasers whose body size is smaller than that of the designator. The large score is a total value of the scores of existing purchasers whose body size is greater than that of the designator. Next, the system control unit 14 performs steps S23 to S27.

Next, the system control unit 14 determines whether or not the body shape segment of the designator is a segment whose body size is greater than that of the body shape segment of the selected purchaser (step S82). When the segment to which the height of the designator belongs is a height segment higher than or equal to the segment to which the height of the selected purchaser belongs, the segment to which the weight of the designator belongs is a weight segment heavier than or equal to the segment to which the weight of the selected purchaser belongs, and the body shape segment of the designator is not the same as that of the selected purchaser, the body shape segment of the designator is a segment whose body size is greater than that of the body shape segment of the selected purchaser. When the system control unit 14 determines that the body shape segment of the designator is a segment whose body size is greater than that of the body shape segment of the selected purchaser (step S82: YES), the system control unit 14 proceeds to step S83. On the other hand, when the system control unit 14 determines that the body shape segment of the designator is not a segment whose body size is greater than that of the body shape segment of the selected purchaser (step S82: NO), the system control unit 14 proceeds to step S86.

In step S83, the system control unit 14 performs the score calculation process. The score calculation process in step S83 is the same as the process of step S29 shown in FIG. 8. Next, the system control unit 14 weights the score of each item size according to the time of purchase of the designated item of the selected purchaser (step S84). The content of this process is the same as that of step S30 in FIG. 8. Next, the system control unit 14 adds the score of each item size of the selected purchaser to the small score of each item size (step S85). Next, the system control unit 14 proceeds to step S35.

In step S86, the system control unit 14 determines whether or not the body shape segment of the designator is a segment whose body size is smaller than that of the body shape segment of the selected purchaser. When the segment to which the height of the designator belongs is a height segment lower than or equal to the segment to which the height of the selected purchaser belongs, the segment to which the weight of the designator belongs is a weight segment lighter than or equal to the segment to which the weight of the selected purchaser belongs, and the body shape segment of the designator is not the same as that of the selected purchaser, the body shape segment of the designator is a segment whose body size is smaller than that of the body shape segment of the selected purchaser. When the system control unit 14 determines that the body shape segment of the designator is a segment whose body size is smaller than that of the body shape segment of the selected purchaser (step S86: YES), the system control unit 14 proceeds to step S87. On the other hand, when the system control unit 14 determines that the body shape segment of the designator is not a segment whose body size is smaller than that of the body shape segment of the selected purchaser (step S86: NO), the system control unit 14 proceeds to step S35. In this case, it cannot be said that the body shape segment of the designator is a segment whose body size is greater than that of the body shape segment of the selected purchaser nor that the body shape segment of the designator is a segment whose body size is smaller than that of the body shape segment of the selected purchaser.

In step S87, the system control unit 14 performs the score calculation process. Next, the system control unit 14 weights the score of each item size according to the time of purchase of the designated item of the selected purchaser (step S88). The content of this process is the same as that of step S30 in FIG. 8. Next, the system control unit 14 adds the score of each item size of the selected purchaser to the large score of each item size (step S89). Next, the system control unit 14 proceeds to step S35.

In step S35, if the system control unit 14 determines that all the purchase histories have been selected (step S35: NO), the system control unit 14 specifies the item size whose small score is the highest (step S90). Next, the system control unit 14 specifies the item size whose large score is the highest (step S91). Next, the system control unit 14, which functions as the estimation means, specifies an item size between the item size whose small score is the highest and the item size whose large score is the highest as the fit size (step S92). After completing this process, the system control unit 14 ends the item size estimation process.

As described above, according to the present embodiment, the system control unit 14 specifies an existing purchaser whose body size is smaller than that of the designator and an existing purchaser whose body size is greater than that of the designator on the basis of the size relationship between the body sizes. The system control unit 14 estimates the item size of the designated item that fits the existing purchaser whose body size is smaller than that of the designator and the item size of the designated item that fits the existing purchaser whose body size is greater than that of the designator on the basis of the evaluations for the item sizes of the designated item purchased by the specified existing purchasers. The system control unit 14 estimates an item size between the estimated item sizes as the fit size. Therefore, even if there is no user whose body size is similar to that of the designator, the fit size can be estimated.

The online shopping mall server 1 may determine that the body size of the existing purchaser is greater than that of the designator when the body size of the existing purchaser is greater than that of the designator by a predetermined size or more and may determine that the body size of the existing purchaser is smaller than that of the designator when the body size of the existing purchaser is smaller than that of the designator by a predetermined size or more.

In the same manner as in the first embodiment, the online shopping mall server 1 may change the weight of the score when there is evaluation and the weight of the score when there is no evaluation for each of the small score and the large score on the basis of the number of evaluators.

The online shopping mall server 1 may be configured so that the first and the second embodiments are combined to be implemented. For example, the number of existing purchasers whose body size is included in the same range as that of the body size of the designator is defined as the number of people having the same body size. For example, when the number of people having the same body size is greater than or equal to a predetermined number, the online shopping mall server 1 may estimate the fit size based on evaluations from the existing purchasers whose body size is included in the same range as that of the body size of the designator. On the other hand, when the number of people having the same body size is smaller than the predetermined number, the online shopping mall server 1 may estimate the fit size based on evaluations from the existing purchasers whose body size is not included in the same range as that of the body size of the designator.

## 3. Third Embodiment

Next, an overview of a third embodiment will be described. In the third embodiment, the online shopping mall server 1 obtains an approximate expression that approximates the distribution of combinations of the body size of an existing purchaser and the item size of the designated item purchased by the existing purchaser by considering the evaluations from the existing purchasers and estimates the fit size on the basis of the approximate expression. The description of the same points as those in the first embodiment will be omitted.

As described above, in the first embodiment, if there is no existing purchaser whose body size is included in the same range as that of the body size of the designator, the fit size cannot be estimated. On the other hand, in the second embodiment, the fit size cannot be estimated unless there are both an existing purchaser whose body size is greater than that of the designator and an existing purchaser whose body size is smaller than that of the designator. Therefore, the online shopping mall server 1 performs processing so that the fit size can be estimated if there are two or more existing purchasers where at least one of the body size of the existing purchaser and the item size which the existing purchaser purchased is different from each other.

Specifically, the online shopping mall server 1 obtains an approximate expression that approximates the relationship between the body size and the item size on the basis of the distribution of combinations of the body size of an existing purchaser and the item size purchased by the existing purchaser. At this time, the online shopping mall server 1 weights the combination of the body size of an existing purchaser and the item size on the basis of the evaluation from the existing purchaser. The combination of the body size of an existing purchaser and the item size is simply referred to as a "combination".

For example, the height is used as the body size of the existing purchaser. It is assumed that there are sizes S, M, and L as the item size of the designated item. The height is defined as x and the item size is defined as y. The function representing the approximate expression to be obtained is defined as f and the relationship between y and x is represented by y = f(x). Here, the sizes S, M, and L are converted to, for example, 1, 2, and 3. The actual body size of an existing purchaser and the item size are defined as $x_i$ and $y_i$. Here, i is a number given to each combination. There may be a difference between $f(x_i)$ and actual $y_i$. The distribution J of the difference between $f(x_i)$ and $y_i$ is obtained by the following expression.

[Mathematical Formula 1]

$$J = \sum_{i}^{m} \alpha_i (y_i - f(x_i))^2$$

In the expression 1, m is a total number of combinations that are actually obtained. In other words, m is the number of data. Further, $\alpha_i$ is a weight coefficient for the combination i. Here, $\alpha_i$ is a value greater than or equal to 0. For example, when obtaining the approximate expression by the least-squares method, the online shopping mall server 1 obtains the function f so that J is the minimum. At this time, the online shopping mall server 1 sets $\alpha_i$ to a value according to the evaluation from the existing purchaser corresponding to the combination i. Specifically, the online shopping mall server 1 sets $\alpha_i$ so that the higher the evaluation is, the greater $\alpha_i$ is. In other words, the higher the score is, the greater $\alpha_i$ is. Thereby, the function f is obtained so that the higher the evaluation for the combination i, the more the difference between $y_i$ and $f(x_i)$ is reduced compared with a case in which $\alpha_i$ is not used. The online shopping mall server 1 may obtain the approximate expression by a method other than the method described above. The item size calculated by substituting the height of the designator into the obtained approximate expression is the fit size of the designator. The body sizes of the existing purchasers are reflected on the approximate expression. Therefore, calculating the fit size based on the approximate expression and the body size of the designator is an example of estimating the fit size of the designator on the basis of the size relationship between the body size of the designator and the body sizes of the existing purchasers.

FIG. 14A is a diagram showing the distribution of the combinations of the height and the item size and an approximate line. In FIG. 14, the horizontal axis represents the height and the vertical axis represents the item size. The circles in FIG. 14A represent the combinations. The size of the circle is proportional to the height of the score. When there is a plurality of existing purchasers of the same combination, the score represented by the size of the circle is a total score of the scores of the plurality of existing purchasers of the same combination. Reference numeral 200 in FIG. 14A denotes an approximate curve. The approximate expression may be an expression of a curved line or may be an expression of a straight line.

For example, it is assumed that the height of the designator is 165 cm. In this case, as indicated by the approximate curve 200, the fit size of the designator is located between the size S and the size M. Specifically, the difference between the fit size and the size S is three times the difference between the fit size and the size M. In this case, various types of recommended size information 110 can be considered. FIGS. 14B to 14D are diagrams showing a display example of the recommended size information 110. For example, as shown in FIG. 14B, the letters "S", "M", and "L" are displayed as positions of each size and the position of the fit size with respect to each item size may be displayed by a graphic or the like. Further, as shown in FIG. 14C, the item size that is closest to the fit size may be displayed as a final fit size. For example, "People having a body shape close to yours highly evaluate the size M." is displayed. Further, the item size closest to the fit size and the probability that the item size closest to the fit size is the fit size may be displayed. For example, when the difference between the size S and the size M is assumed to be 100%, the difference between the fit size and the size M is 25%. Therefore, the probability that the size M is the fit size is set to 75%. In this case, as shown in FIG. 14D, for example, "The probability that the size that fits you is the size M is 75%." is displayed.

Next, an operation of the information processing system S will be described with reference to FIG. 15. FIG. 15 is a flowchart showing a process example of the fit size estimation process of the system control unit 14 of the online shopping mall server 1 according to the present embodiment. In FIG. 15, the same processes as those in FIGS. 8 and 9 are denoted by the same reference numerals.

As shown in FIG. 15, the system control unit 14 performs steps S21, S23 to S27, S29, and S30. Next, the system control unit 14 stores the height of the selected purchaser, the item size purchased by the selected purchaser, and the score of the item size purchased by the selected purchaser in the RAM 14c (step S101). Next, the system control unit 14 proceeds to step S35.

In step S35, if the system control unit 14 determines that all the purchase histories have been selected (step S35: NO), the system control unit 14 obtains the approximate expression by weighting each combination based on the score on the basis of the height of each selected purchaser, the item size purchased by each selected purchaser, and the score of the item size purchased by each selected purchaser, which are stored in the RAM 14c (step S102). For example, the system control unit 14 obtains coefficients of each term of the approximate expression so that J in the expression 1 is the minimum. Next, the system control unit 14, which functions as the estimation means, calculates the fit size based on the obtained approximate expression (step S103). Specifically, the system control unit 14 calculates the item size by substituting the height of the designator into the approximate expression. Then, the system control unit 14 specifies the calculated item size as the fit size. After completing this process, the system control unit 14 ends the fit size estimation process.

As described above, according to the present embodiment, the system control unit 14 obtains the approximate expression of the distribution of the combinations of the body size of an existing purchaser and the item size of the designated item purchased by the existing purchaser by weighting the combinations based on the evaluations from the existing purchasers and estimates that the item size calculated based on the approximate expression and the body size of the designator is the fit size. Therefore, if there are a plurality of users where at least one of the body size of the user and the item size of the designated item purchased by the user is different from each other, the fit size can be estimated.

In the embodiment described above, the online shopping mall server 1 obtains the approximate expression based on the height. However, the approximate expression may be obtained based on a body size other than the height. The online shopping mall server 1 may change the body size to be used according to the type of the designated item. The online shopping mall server 1 may obtain the approximate expression based on a plurality of types of body size. For example, the approximate expression is obtained based on both the height and the weight. The height and the weight are defined as x and y respectively and the item size is defined as z. When the function that represents the approximate expression is defined as g, $z = g(x, y)$ is established.

In the same manner as in the first embodiment, the online shopping mall server 1 may change the weight of the score when there is evaluation and the weight of the score when there is no evaluation for each combination of the height and the item size on the basis of the number of evaluators.

## 4. Fourth Embodiment

Next, an overview of a fourth embodiment will be described. In the fourth embodiment, the online shopping mall server 1 determines whether or not the body size of the designator and the body size of the existing purchaser are included in the same range on the basis of the item size of the item for sale purchased by the designator in the past and the item size of the item for sale purchased by the existing purchaser in the past. The description of the same points as those in the first embodiment will be omitted.

In the first embodiment, the online shopping mall server 1 performs processing on the basis of the body information registered by users in advance. However, the users might not register the body information. Therefore, the online shopping mall server 1 determines whether or not the body size of the designator and the body size of the existing purchaser are included in the same range on the basis of the item sizes of the items for sale purchased by the designator and the existing purchaser respectively in the past. Among the items for sale which the designator and the existing purchaser have ever purchased, an item for sale, which is used to determine whether or not the body size is included in the same range is referred to as a "reference item". The item for sale which the designator has ever purchased is an example of a first item for sale of the present invention. The item for sale which the existing purchaser has ever purchased is an example of a second item for sale of the present invention. The item sizes of items for sale which the designator and the existing purchaser have ever purchased in the past are examples of the body shape information of the present invention. In the present embodiment, the body shape information need not be included in the member information in the format of the member information.

When the item size of the reference item which the designator has ever purchased and the item size of the reference item which the existing purchaser has ever purchased are the same, it is possible to estimate that the body size of the designator and the body size of the existing purchaser are similar to each other. The item size in the present embodiment is an example of the body size information of the present invention.

The reference item of the designator and the reference item of the existing purchaser may be completely different from each other. However, even when the item sizes printed on the items for sale are the same, the actual sizes may be different from each other depending on the brand of the item for sale, the country, and the like. Therefore, the accuracy of determination whether the body size is included in the same range may degrade. Therefore, items for sale that can be used as the reference item may be limited by a predetermined condition. For example, the reference items may be the same items for sale which both the designator and the existing purchaser have purchased. Or, for example, the reference items may be items for sale which both the designator and the existing purchaser have purchased in a range of the same brand. If the brand is the same, there is a high probability that the criteria of the item size is the same. Or, for example, the reference items may be items for sale which both the designator and the existing purchaser have purchased in a range of the same type. For example, the items for sale may be divided into two types: tops and bottoms. The criteria of the item size may be different between the tops and bottoms. Or, the reference items may be items for sale which both the designator and the existing purchaser have purchased in a range of the same brand and the same type. In the description below, an item for sale that belongs to the same category as that of a certain item for sale is an item for sale defined by the condition of the reference item. In other words, an item for sale that belongs to the same category as that of a certain item for sale is, for example, the same item for sale as the certain item for sale, an item for sale whose brand is the same as that of the certain item for sale, or an item for sale whose type is the same as that of the certain item for sale.

When the reference item is not particularly limited, the online shopping mall server 1 may convert the item size of each item for sale into a body size which the item for sale actually fits. The converted size is referred to as a "standard size". The standard size may be, for example, the height, the weight, the length of the upper body, the length of the lower body, the bust size, the waist size, the hip size, and the like. Further, the standard size may be, for example, the symbol of the item size, the size number, inches, or the like. In the storage unit 12, a size conversion DB is constructed. In the size conversion DB, for example, a brand ID, the item size, and the standard size are registered for each combination of the brand and the item size. The online shopping mall server 1 can acquire a suitable standard size based on the brand ID and the item size included in the item for sale information. The online shopping mall server 1 specifies, for example, the body shape segment to which the standard size belongs. Then, the online shopping mall server 1 determines whether or not the body shape segment of the designator and the body shape segment of the existing purchaser correspond to each other. The standard size is an example of the body size information of the present invention.

By the way, the body size of the designator may change from when the designator purchased the reference item to the present time. Therefore, even if the item size of the reference item purchased by the designator fitted the body size of the designator at the time when the designator purchased the reference item, the item size may not fit the current body size of the designator. Thus, if the time when the designator purchased the reference item is old, the accuracy of determination whether or not the body size of the designator and the body size of the existing purchaser who purchased a reference item that belongs to the same category as that of the reference item of the designator belong to the same category may degrade. If the accuracy of determination degrades, the reliability of the evaluation from the existing purchaser degrades. Therefore, the online shopping mall server 1 may weight the score of the existing purchaser who purchased a reference item that belongs to the same category as that of the reference item of the designator according to the time when the designator purchased the reference item. Specifically, the later the time of the purchase is, the heavier the online shopping mall server 1 weights the score. For example, the online shopping mall server 1 may determine a weight coefficient W3 as shown in FIG. 3B. The weight coefficient W3 is a coefficient indicating a weight according to the difference between the times when the reference item was purchased.

Further, it is assumed that the item size of the reference item purchased by the existing purchaser fitted the body size of the existing purchaser at the time when the existing purchaser purchased the reference item and the item size of the designated item purchased by the existing purchaser fitted the body size of the existing purchaser at the time when the existing purchaser purchased the designated item. However, the body size of the existing purchaser may change from the time when the existing purchaser purchased the reference item (or the designated item) to the time when the existing purchaser purchased the designated item (or the reference item). Therefore, if the difference between the time of purchase of the reference item and the time of purchase of the designated item is long, the probability that the body size of the existing purchaser changes is high. If the body size of the existing purchaser changes, the reliability of the evaluation from the existing purchaser degrades. Therefore, the online shopping mall server 1 may weight the score of the existing purchaser according to the difference between the time of purchase of the reference item by the existing purchaser and the time of purchase of the designated item by the existing purchaser. Specifically, the shorter the difference is, the heavier the online shopping mall server 1 weights the score. For example, the online shopping mall server 1 may determine a weight coefficient W4 as shown in FIG. 3B. The weight coefficient W4 is a coefficient indicating a weight according to the difference between the times of purchase.

Further, the online shopping mall server 1 may weight the score of the existing purchaser who purchased a reference item that belongs to the same category as that of the reference item of the designator on the basis of the evaluation for the reference item from the designator. Further, the online shopping mall server 1 may weight the score of the existing purchaser on the basis of the evaluation for the reference item from the existing purchaser. This is because the higher the evaluation for the reference item is, the higher the probability that the item size of the reference item purchased by the user fits the body size of the user is. Specifically, the higher the evaluation is, the heavier the online shopping mall server 1 weights the score. The content of the evaluation is the same as that shown in FIG. 3A. The online shopping mall server 1 determines the weight coefficient according to the score corresponding to the content of the evaluation. Then, the online shopping mall server 1 multiplies the score of each item size by the determined weight coefficient.

Further, the online shopping mall server 1 may limit the reference item to the same type of items for sale as that of the designated item. Further, the online shopping mall server 1 may limit the reference item to the same brand of items for sale as that of the designated item.

Further, when estimating the fit size, the online shopping mall server 1 need not use the purchase history of the reference item which the designator purchased for another person. Specifically, the online shopping mall server 1 does not use the item size acquired from the purchase history of the reference item which the designator purchased for another person. Further, the online shopping mall server 1 need not use the purchase history of the designated item and the reference item which the existing purchaser purchased for another person. Specifically, the online shopping mall server 1 does not use the item size acquired from the purchase history of the item for sale, which the existing purchaser purchased for another person, and the evaluation for the designated item from the existing purchaser specified based on the purchase history, for the estimation. As an example of the item for sale which a user purchases for another person, there are an item for sale for children when the user is an adult and an item for sale for a gender different from that of the user.

Next, an operation of the information processing system S will be described with reference to FIG. 16. FIG. 16 is a flowchart showing a process example of the fit size estimation process of the system control unit 14 of the online shopping mall server 1 according to the present embodiment. In FIG. 16, the same processes as those in FIG. 8 are denoted by the same reference numerals. The content of the process of steps S31 to S39 is the same as that in FIG. 9.

As shown in FIG. 16, the system control unit 14 searches for purchase histories including the user ID of the designator from the purchase history DB 12e (step S121). Next, the system control unit 14 performs a purchase history exclusion process (step S122). At this time, the system control unit 14 designates the purchase histories of the designator retrieved in step S121. In the purchase history exclusion process, purchase histories in which the user purchased an item for sale for another person are excluded from the designated purchase histories. The excluded purchase histories are not used to estimate the fit size.

FIG. 17 is a flowchart showing a process example of the purchase history exclusion process of the system control unit 14 of the online shopping mall server 1 according to the present embodiment. As shown in FIG. 17, the system control unit 14 calculates a ratio of items for sale for women and a ratio of items for sale for men with respect to all the items for sale purchased by the user on the basis of the category ID included in each retrieved purchase history. Then, the system control unit 14 determines whether or not the ratio of the items for sale for women is greater than the ratio of the items for sale for men (step S141). At this time, if the system control unit 14 determines that the ratio of the items for sale for women is greater than the ratio of the items for sale for men (step S141: YES), the system control unit 14 proceeds to step S142. On the other hand, if the system control unit 14 determines that the ratio of the items for sale for women is not greater than the ratio of the items for sale for men (step S141: NO), the system control unit 14 proceeds to step S144.

In step S142, the system control unit 14 determines whether or not the ratio of the items for sale for men is smaller than or equal to a threshold value. At this time, if the system control unit 14 determines that the ratio of the items for sale for men is smaller than or equal to the threshold value (step S142: YES), the system control unit 14 excludes the purchase histories of the items for sale for men from the designated purchase histories (step S143). Next, the system control unit 14 proceeds to step S146. On the other hand, if the system control unit 14 determines that the ratio of the items for sale for men is greater than the threshold value (step S142: NO), the system control unit 14 proceeds to step S146.

In step S144, the system control unit 14 determines whether or not the ratio of the items for sale for women is smaller than or equal to a threshold value. At this time, if the system control unit 14 determines that the ratio of the items for sale for women is smaller than or equal to the threshold value (step S144: YES), the system control unit 14 excludes the purchase histories of the items for sale for women from the designated purchase histories (step S145). Next, the system control unit 14 proceeds to step S146. On the other hand, if the system control unit 14 determines that the ratio of the items for sale for women is greater than the threshold value (step S144: NO), the system control unit 14 proceeds to step S146.

In step S146, the system control unit 14 acquires the user ID from the designated purchase histories. Next, the system control unit 14 acquires member information that includes the acquired user ID from the member information DB 12a. Then, the system control unit 14 determines whether or not the user is an adult on the basis of the age included in the acquired member information. At this time, if the system control unit 14 determines that the user is an adult (step S146: YES), the system control unit 14 excludes the purchase histories of the items for sale for children from the designated purchase histories (step S147). After completing this process, the system control unit 14 ends the purchase history exclusion process. On the other hand, if the system control unit 14 determines that the user is not an adult (step S146: NO), the system control unit 14 ends the purchase history exclusion process.

After completing the purchase history exclusion process, as shown in FIG. 16, the system control unit 14 performs steps S22 to S26. In step S26, if the system control unit 14 determines that the return value of the purchase purpose determination process is not "for another person" (step S26: NO), the system control unit 14 searches for purchase histories including the user ID of the selected purchaser from the purchase history DB 12e (step S123). The system control unit 14 may exclude the purchase histories of the designated item from the purchase histories to be searched for. Next, the system control unit 14 performs the purchase history exclusion process (step S124). At this time, the system control unit 14 designates the purchase histories of the selected purchaser retrieved in step S123.

Next, the system control unit 14 determines whether or not the selected purchaser has ever purchased an item for sale that belongs to the same category as that of the item for sale which the designator has ever purchased on the basis of the purchase histories included in the search result of purchase history of the designator and the purchase histories included in the search result of the purchase history of the selected purchaser (step S125). For example, whether or not the items for sale are the same can be determined based on the item ID or the product code. Further, whether or not the brands are the same can be determined based on the brand ID. Further, whether or not the types are the same can be determined based on the category ID. If the system control unit 14 determines that the selected purchaser has never purchased an item for sale that belongs to the same category as that of the item for sale which the designator has ever purchased (step S125: NO), the system control unit 14 proceeds to step S35. On the other hand, if the system control unit 14 determines that the selected purchaser has ever purchased an item for sale that belongs to the same category as that of the item for sale which the designator has ever purchased (step S125: YES), the system control unit 14 proceeds to step S126.

In step S126, the system control unit 14 specifies the purchase history of the reference item determined to belong to the same category as that of the item for sale purchased by the selected purchaser among from the items for sale purchased by the designator. Further, the system control unit 14 specifies the purchase history of the reference item determined to belong to the same category as that of the item for sale purchased by the designator among from the items for sale purchased by the selected purchaser. Next, the system control unit 14, which functions as the body size information acquisition means, acquires the item size of the reference item purchased by the designator and the item size of the reference item purchased by the selected purchaser from the purchase histories thereof. Then, the system control unit 14 determines whether or not the item size of the reference item purchased by the designator and the item size of the reference item purchased by the selected purchaser are the same. At this time, if the system control unit 14 determines that the item size of the reference item purchased by the designator and the item size of the reference item purchased by the selected purchaser are not the same (step S126: NO), the system control unit 14 proceeds to step S35. On the other hand, if the system control unit 14 determines that the item size of the reference item purchased by the designator and the item size of the reference item purchased by the selected purchaser are the same (step S126: YES), the system control unit 14 performs the score calculation process (step S29). There is a case in which, a plurality of times, the selected purchaser has ever purchased an item for sale, which belongs to the same category as that of the item for sale which the designator has ever purchased. In this case, the item size may be different depending on the time of purchase. Therefore, the system control unit 14 may calculate a ratio where the item size of the reference item purchased by the designator and the item size of the reference item purchased by the selected purchaser are the same. Then, when the calculated ratio is greater than or equal to a predetermined ratio, the system control unit 14 may perform the score calculation process.

After completing the score calculation process, the system control unit 14 weights the score of each item size according to the time of purchase of the reference item of the designator (step S127). Specifically, the system control unit 14 acquires the weight coefficient W3 corresponding to the purchase date and time included in the purchase history of the reference item of the designator from the storage unit 12. If there is a plurality of purchase histories, the system control unit 14 acquires, for example, the weight coefficient W3 corresponding to the average of the purchase dates and times. The system control unit 14 multiplies the score of each item size by the weight coefficient W3.

Next, the system control unit 14 weights the score of each item size according to a difference between the purchase date and time of the reference item of the selected purchaser and the purchase date and time of the designated item of the selected purchaser (step S128). Specifically, the system control unit 14 acquires the weight coefficient W4 corresponding to the difference between the purchase dates and times from the storage unit 12. The purchase date and time can be acquired from the purchase history. If there is a plurality of reference items for sale, the system control unit 14 acquires, for example, the weight coefficient W4 corresponding to the average of the differences between the purchase dates and times. The system control unit 14 calculates a final score for each item size of the selected purchaser by multiplying the score of each item size by the weight coefficient W4. After completing this process, the system control unit 14 proceeds to step S31.

As described above, according to the present embodiment, the system control unit 14 acquires the item size of an item for sale which the designator has ever purchased and the item size of an item for sale which the existing purchaser has ever purchased on the basis of the purchase histories. Then, on the basis of the size relationship between the item size of an item for sale which the designator has ever purchased and the item size of an item for sale which the existing purchaser has ever purchased, the system control unit 14 specifies an existing purchaser who has ever purchased the item size whose item size is the same as that of an item for sale which the designator has ever purchased. Then, the system control unit 14 estimates the fit size based on the item size of the designated item purchased by the specified existing purchaser and the evaluation for the item size. Therefore, it is possible to estimate the fit size even when the body size information is not registered from the user.

Further, the system control unit 14 estimates the item size by using the evaluation from an existing purchaser who purchased an item for sale that belongs to the same category as that of the item for sale purchased by the designator among the evaluations from the existing purchasers who purchased the designated item. Then, the later the time when the designator purchased the reference item, the more the system control unit 14 values the evaluation from the existing purchaser who purchased the item for sale that belongs to the same category as that of the reference item and estimates the item size. Therefore, it is possible to improve the estimation accuracy of the fit size.

Further, the smaller the difference between the time of purchase of the reference item of an existing purchaser and the time of purchase of the designated item of the existing purchaser is, the more the system control unit 14 values the evaluation from the existing purchaser and estimates the item size. Therefore, it is possible to improve the estimation accuracy of the fit size.

Further, the system control unit 14 excludes either women's items for sale or men's items for sale whose ratio with respect to the items for sale purchased by the user is smaller than or equal a threshold value set to a value smaller than 50% from the reference items for sale, and does not use the purchase histories of the excluded items for sale to estimate the fit size. Therefore, it is possible to improve the estimation accuracy of the fit size.

Further, the system control unit 14 excludes items for sale which the user who is an adult purchased for a child from the reference items for sale, and does not use the purchase histories of the excluded items for sale to estimate the fit size. Therefore, it is possible to improve the estimation accuracy of the fit size.

5. Fifth Embodiment

Next, an overview of a fifth embodiment will be described. The fifth embodiment is a combination of the second embodiment and the fourth embodiment. Specifically, the online shopping mall server 1 determines the size relationship between the body size of the designator and the body size of the existing purchaser on the basis of the item size purchased by the designator in the past and the item size purchased by the existing purchaser in the past. The description of the same points as those in the second embodiment and the fourth embodiment will be omitted.

When the item size of the reference item which the designator has ever purchased is greater than the item size of the reference item which the existing purchaser has ever purchased, it is possible to estimate that the body size of the designator is greater than the body size of the existing purchaser. On the other hand, when the item size of the reference item which the designator has ever purchased is smaller than the item size of the reference item which the existing purchaser has ever purchased, it is possible to estimate that the body size of the designator is smaller than the body size of the existing purchaser. The item size in the present embodiment is an example of the body size information of the present invention.

Next, an operation of the information processing system S will be described with reference to FIGS. 18 and 19. FIGS. 18 and 19 are flowcharts showing a process example of the fit size estimation process of the system control unit 14 of the online shopping mall server 1 according to the present embodiment. In FIGS. 18 and 19, the same processes as those in FIGS. 8 and 9 or FIG. 16 are denoted by the same reference numerals.

As shown in FIG. 18, the system control unit 14 performs steps S121, S122, S81, S23 to S26, and S123 to S125. In step S125, if the system control unit 14 determines that the selected purchaser has ever purchased an item for sale that belongs to the same category as that of the item for sale which the designator has ever purchased (step S125: YES), the system control unit 14 proceeds to step S161.

As shown in FIG. 19, in step S161, the system control unit 14 determines whether or not the item size of the reference item purchased by the designator is greater than the item size of the reference item purchased by the selected purchaser. At this time, if the system control unit 14 determines that the item size of the reference item purchased by the designator is not greater than the item size of the reference item purchased by the selected purchaser (step S161: NO), the system control unit 14 proceeds to step S164. On the other hand, if the system control unit 14 determines that the item size of the reference item purchased by the designator is greater than the item size of the reference item purchased by the selected purchaser (step S161: YES), the system control unit 14 performs the score calculation process (step S83). Next, the system control unit 14 weights the score of each item size (steps S162 and S163). The content of the process of steps S162 and S163 is the same as that of steps S127 and S128. Next, the system control unit 14 proceeds to step S85.

In step S164, the system control unit 14 determines whether or not the item size of the reference item purchased by the designator is smaller than the item size of the reference item purchased by the selected purchaser. At this time, if the system control unit 14 determines that the item size of the reference item purchased by the designator is not smaller than the item size of the reference item purchased by the selected purchaser (step S164: NO), the system control unit 14 proceeds to step S35. On the other hand, if the system control unit 14 determines that the item size of the reference item purchased by the designator is smaller than the item size of the reference item purchased by the selected purchaser (step S164: YES), the system control unit 14 performs the score calculation process (step S87). Next, the system control unit 14 weights the score of each item size (steps S165 and S166). The content of the process of steps S165 and S166 is the same as that of steps S127 and S128. Next, the system control unit 14 proceeds to step S89.

After completing the process of step S85 or S89, the system control unit 14 performs steps S35, S36, and S90 to S92 in the same manner as in the second embodiment.

As described above, according to the present embodiment, the system control unit 14 acquires the item size of an item for sale which the designator has ever purchased and the item size of an item for sale which the existing purchaser has ever purchased on the basis of the purchase histories. Then, on the basis of the size relationship between the item size of an item for sale which the designator has ever purchased and the item sizes of an items for sale which the existing purchaser s have ever purchased, the system control unit 14 specifies an existing purchaser who purchased an item for sale whose item size is smaller than that of an item for sale which the designator has purchased and an existing purchaser who purchased an item for sale whose item size is larger than that of the item for sale which the designator has purchased. On the basis of the item sizes of the designated item purchased by the specified existing purchasers and the evaluations for the item sizes, the system control unit 14 estimates the item size of the designated item which fits the existing purchaser who purchased the item for sale whose item size is smaller than that of the item for sale which the designator has purchased and the item size of the designated item which fits the existing purchaser who purchased the item for sale whose item size is larger than that of the item for sale which the designator has purchased. The system control unit 14 estimates the item size between the estimated item sizes to be the fit size. Therefore, it is possible to estimate the fit size even when the body size information is not registered from the user.

In the fourth and fifth embodiments, the online shopping mall server 1 may acquire the body shape information from the member information regarding the users who register the body shape information. In this case, the standard size is represented by, for example, the height. For example, when the body shape information of the designator is registered, the online shopping mall server 1 performs the same processes as those in the first or the second embodiments on the existing purchasers whose body information is registered.

On the other hand, when the body shape information of the designator is registered, the online shopping mall server 1 specifies the reference item of the designator and the reference item of the existing purchasers for the existing purchasers whose body information is not registered. At this time, the online shopping mall server 1 converts the item size of an item for sale which the designator has ever purchased into the height as the standard size. Then, the online shopping mall server 1 excludes the purchase histories of items for sale where the difference between the converted height and the registered height of the designator is longer than or equal to a predetermined length from the search result of purchase history of the designator. This is because such items for sale do not fit the height of the designator. Here, the online shopping mall server 1 may exclude only the purchase histories of items for sale where the converted height is lower than the height of the designator from the search result of purchase history of the designator.

On the other hand, when the body shape information of the designator is not registered, the online shopping mall server 1 also specifies the reference item of the designator and the reference item of the existing purchasers for the existing purchasers whose body information is registered. At this time, the online shopping mall server 1 converts the item size of an item for sale which the existing purchaser has ever purchased into the height as the standard size. Then, the online shopping mall server 1 excludes the purchase histories of items for sale where the difference between the converted height and the registered height of the existing purchaser is longer than or equal to a predetermined length from the search result of purchase history of the existing purchaser. Here, the online shopping mall server 1 may exclude only the purchase histories of items for sale where the converted height is lower than the height of the existing purchaser from the search result of purchase history of the existing purchaser.

## 6. Sixth Embodiment

Next, an overview of a sixth embodiment will be described. The sixth embodiment is a combination of the third embodiment and the fourth embodiment. Specifically, the online shopping mall server 1 estimates the body size of an existing purchaser on the basis of the item size of an item for sale which the existing purchaser has purchased in the past. Then, the online shopping mall server 1 obtains an approximate expression by using the estimated body size. The description of the same points as those in the third embodiment or the fourth embodiment will be omitted.

There is a probability that the standard size converted from the item size of an item for sale which a user has ever purchased corresponds to the body size of the user. Therefore, the online shopping mall server 1 can obtain an approximate expression that approximates the distribution of combinations of the standard size of the existing purchaser and the item size of the designated item purchased by the existing purchaser by using the standard size of the existing purchaser. Then, the online shopping mall server 1 can estimate the fit size by using the standard size of the designator. The standard size in the present embodiment is an example of the body size information of the present invention.

Next, an operation of the information processing system S will be described with reference to FIGS. 20 and 21. FIG. 20 is a flowchart showing a process example of the fit size estimation process of the system control unit 14 of the online shopping mall server 1 according to the present embodiment. In FIGS. 20 and 21, the same processes as those in FIGS. 8 or 9 or FIG. 16 are denoted by the same reference numerals.

As shown in FIG. 20, the system control unit 14 performs steps S121 and S122. Next, the system control unit 14 acquires the brand ID and the item size from the purchase history included in the search result of purchase history of the designator. Then, the system control unit 14 acquires the standard size corresponding to the acquired brand ID and item size from the size conversion DB (step S181). When there is a plurality of purchase histories, the system control unit 14 may acquire a plurality of standard sizes. In this time, for example, the system control unit 14 determines the average value of the standard sizes to be the final standard size of the designator.

Next, the system control unit 14 performs steps S23 to S26, S123, and S124. Next, the system control unit 14 acquires the brand ID and the item size from the purchase history included in the search result of purchase history of the selected purchaser. Then, the system control unit 14 acquires the standard size corresponding to the acquired brand ID and item size from the size conversion DB (step S182). Next, the system control unit 14 performs steps S29 and S127. Next, the system control unit 14 stores the standard size of the selected purchaser, the item size of the designated item purchased by the selected purchaser, and the score of the item size of the designated item purchased by the selected purchaser in the RAM 14c (step S183). Next, the system control unit 14 proceeds to step S35.

As shown in FIG. 21, in step S35, if the system control unit 14 determines that all the purchase histories have been selected (step S35: NO), the system control unit 14 obtains the approximate expression by weighting each combination based on the score on the basis of the standard size of each selected purchaser, the item size of the designated item purchased by each selected purchaser, and the score of the item size of the designated item purchased by each selected purchaser, which are stored in the RAM 14c (step S184). Next, the system control unit 14 calculates the fit size based on the obtained approximate expression and the standard size of the designator (step S185). After completing this process, the system control unit 14 ends the fit size estimation process.

As described above, according to the present embodiment, the system control unit 14 acquires the item size of an item for sale which the designator has ever purchased and the item size of an item for sale which the existing purchaser has ever purchased on the basis of the purchase histories and converts the acquired item sizes into the standard sizes. Then, the system control unit 14 obtains the approximate expression of the distribution of the combinations of the standard size of an existing purchaser and the item size of the designated item purchased by the existing purchaser by weighting the combinations based on the evaluations from the existing purchaser. The system control unit 14 estimates that the item size calculated based on the approximate expression and the standard size of the designator is the fit size. Therefore, it is possible to estimate the fit size even when the body size information is not registered from the user.

The online shopping mall server 1 may acquire the body shape information for the users who register the body shape information.

In the embodiments described above, when the body shape information of the designator is registered, the online shopping mall server 1 converts the item size of the designated item into the height or the like as the standard size, and when a difference between the converted height and the height of the designator is greater than or equal to a predetermined difference, the online shopping mall server 1 need not display the recommended size information 110. Here, there may be a case in which, only when the converted height is lower than the height of the designator, the online shopping mall server 1 need not display the recommended size information 110.

The web page on which the recommended size information 110 may be displayed is not limited to the item-for-sale page. For example, the recommended size information 110 may be displayed on the search result page. For example, on the search result page, the recommended size information 110 is displayed for each retrieved item for sale. In this case, the item for sale specified based on the request from the user is each retrieved item for sale.

In the embodiments described above, the present invention is applied to the online shopping mall in which items for sale are sold from a plurality of shops. However, the present invention may be applied to a web site of electronic commerce in which items for sale are sold from a single distributor.

In the embodiments described above, the item for sale in the present invention is applied to clothes. However, the item for sale in the present invention may be applied to items for sale to be worn such as clothing other than the clothes, shoes, hat, and accessories.

Reference Signs List

| | |
|---|---|
| 1 | Online shopping mall server |
| 2 | Shop terminal |
| 3 | User terminal |
| 11 | Communication unit |
| 12 | Storage unit |
| 12a | Member information DB |
| 12b | Category information DB |

| | |
|---|---|
| 12c | Items-for-sale information DB |
| 12d | Shopping cart deletion history DB |
| 12e | Purchase history DB |
| 12f | Review information DB |
| 13 | Input/output interface |
| 14 | System control unit |
| 14a | CPU |
| 14b | ROM |
| 14c | RAM |
| 15 | System bus |
| NW | Network |
| S | Information processing system |

## Claims

**1.** An information processing apparatus comprising:

a size acquisition means that, from a purchase history storage means storing a purchase history of an item for sale to be worn, acquires a size of a specified item for sale specified according to a request of a request user, the size of the specified item for sale having been purchased by other user who purchased the specified item for sale, there being a plurality of sizes of the item for sale;
a body size information acquisition means that acquires body size information related to a body size of the request user and body size information related to a body size of the other user;
an evaluation specification means that specifies an evaluation by the other user for the size acquired by the size acquisition means;
an estimation means that estimates a size of the specified item for sale that fits the request user on the basis of a size relationship between the body size information of the request user and the body size information of the other user, the size of the specified item for sale purchased by the other user, and the evaluation for the size; and
an output means that outputs the size estimated by the estimation means.

**2.** The information processing apparatus according to claim 1, wherein
when, on the basis of a return history of the item for sale stored in a return history storage means, it is determined that the other user who purchased a plurality of the specified items for sale whose sizes are different from each other returned at least one but not all of the plurality of the specified items for sale, the evaluation specification means specifies the evaluation so that the evaluation for the size of the specified item that was not returned is higher than the evaluation for the size of the specified item that was returned.

**3.** The information processing apparatus according to claim 1 or 2, wherein
the evaluation specification means acquires the evaluation input by the other user.

**4.** The information processing apparatus according to claim 2 or 3, wherein
when, on the basis of a non-purchase history stored in a non-purchase history storage means storing the non-purchase history indicating that the other user determined to purchase the item for sale and thereafter cancelled the purchase, it is determined that the other user selected a size of the specified item for sale and thereafter cancelled the size and purchased another size, the evaluation specification means specifies the evaluation so that the evaluation for the size that was purchased is higher than the evaluation for the size that was cancelled.

**5.** The information processing apparatus according to any one of claims 1 to 4, wherein
when, on the basis of a return history of the item for sale stored in a return history storage means, it is determined that the other user who purchased a plurality of the specified items for sale whose sizes are different from each other returned at least one but not all of the plurality of the specified items for sale, the evaluation specification means specifies the evaluation so that the evaluation for the size of the specified item that was not returned is higher than the evaluation for the size of the specified item that was returned,
when the evaluation is input from the other user, the evaluation specification means acquires the input evaluation, and the estimation means estimates the size by valuing the evaluation specified based on the return history more than the evaluation input from the other user.

**6.** The information processing apparatus according to any one of claims 1 to 5, wherein
when the evaluation is input from the other user, the evaluation specification means acquires the input evaluation, when, on the basis of a non-purchase history stored in a non-purchase history storage means storing the non-purchase history indicating that the other user determined to purchase the item for sale and thereafter cancelled the purchase, it is determined that the other user selected a size of the specified item for sale and thereafter cancelled the size and purchased another size, the evaluation specification means specifies the evaluation so that the evaluation for the size of the specified item that was purchased is higher than the evaluation for the size of the specified item that was cancelled, and
the estimation means estimates the size by valuing the evaluation input from the other user more than the evaluation specified based on the non-purchase history.

**7.** The information processing apparatus according to any one of claims 1 to 6, wherein
the body size information acquisition means acquires a body size of at least one of the request user and the other user as the body size information from a body size storage means storing a body size registered from a user for each user.

**8.** The information processing apparatus according to claim 7, wherein
on the basis of the purchase history, the later a time when the other user purchased the specified item for sale is, the more the estimation means values the evaluation from the other user and thereby estimates the size.

**9.** The information processing apparatus according to any one of claims 1 to 8, wherein
on the basis of the purchase history, the body size information acquisition means acquires at least one of a size of a first item for sale which the request user has ever purchased and a size of a second item for sale which the other user has ever purchased as the body size information.

**10.** The information processing apparatus according to claim 9, wherein
the estimation means estimates the size by using the evaluation from the other user who purchased the specified item for sale and who purchased the second item for sale belonging to the same category as that of the first item for sale, and
the later a time when the request user purchased the first item for sale, the more the estimation means values the evaluation from the other user who purchased the second item for sale that belongs to the same category as that of the first item for sale and thereby estimate the size.

**11.** The information processing apparatus according to claim 9 or 10, wherein
the smaller a difference between a time of purchase of the second item for sale of the other user and a time of purchase of the specified item for sale of the other user is, the more the estimation means estimates the evaluation from the other user and thereby estimates the size.

**12.** The information processing apparatus according to any one of claims 1 to 11, wherein
the estimation means estimates the size by not using information acquired based on the purchase histories of the items for sale that are ones of the items for sale for women and the items for sale for men, a ratio of the ones of the items for sale for women and the items for sale for men to the items for sale purchased by the user being smaller than or equal to a threshold value preset to a value smaller than 50%.

**13.** The information processing apparatus according to any one of claims 1 to 12, wherein
the estimation means estimate the size by not using information acquired based on the purchase history which indicates that the user who is an adult purchased the item for sale for children.

**14.** The information processing apparatus according to any one of claims 1 to 13, wherein
when the request user is an adult and the specified item for sale is the item for sale for children, the output means does output the size.

**15.** The information processing apparatus according to any one of claims 1 to 14, wherein
the estimation means specifies the other user whose body size is included in the same range as that of the body size of the request user on the basis of the size relationship of the body size information and estimates the size of the specified item for sale that fits the request user on the basis of a size of the specified item for sale purchased by the specified other user and the evaluation for the size.

**16.** The information processing apparatus according to any one of claims 1 to 15, wherein the estimation means specifies the other user whose body size is smaller than that of the request user and the other user whose body size is greater than that of the request user on the basis of the size relationship of the body size information, estimates a first size of the specified item for sale that fits the other user whose body size is smaller than that of the request user and a second size of the specified item for sale that fits the other user whose body size is greater than that of the request user on the basis of sizes of the specified item for sale purchased by the specified other users and the evaluations for the sizes, and estimates the size between the first size and the second size to be the size that fits the request user.

**17.** The information processing apparatus according to any one of claims 1 to 14, wherein the estimation means obtains an approximate expression of a distribution of combinations of the body size information of the other user and a size of the specified item for sale purchased by the other user by weighting the combinations based on the evaluations from the other users, and estimates the size calculated based on the approximate expression and the body size information of the request user to be the size that fits the request user.

**18.** An information processing method performed by a computer, the method comprising:

a size acquisition step of, from a purchase history storage means storing a purchase history of an item for sale to be worn, acquiring a size of a specified item for sale specified according to a request of a request user, the size of the specified item for sale having been purchased by other user who purchased the specified item for sale, there being a plurality of sizes of the item for sale;
a body size information acquisition step of acquiring body size information related to a body size of the request user and body size information related to a body size of the other user;
an evaluation specification step of specifying an evaluation by the other user for the size acquired in the size acquisition step;
an estimation step estimating a size of the specified item for sale that fits the request user on the basis of a size relationship between the body size information of the request user and the body size information of the other user, the size of the specified item for sale purchased by the other user, and the evaluation for the size; and
an output step of outputting the size estimated in the estimation step.

**19.** An information processing program that causes a computer to function as:

a size acquisition means that, from a purchase history storage means storing a purchase history of an item for sale to be worn, acquires a size of a specified item for sale specified according to a request of a request user, the size of the specified item for sale having been purchased by other user who purchased the specified item for sale, there being a plurality of sizes of the item for sale;
a body size information acquisition means that acquires body size information related to a body size of the request user and body size information related to a body size of the other user;
an evaluation specification means that specifies an evaluation by the other user for the size acquired by the size acquisition means;
an estimation means that estimates a size of the specified item for sale that fits the request user on the basis of a size relationship between the body size information of the request user and the body size information of the other user, the size of the specified item for sale purchased by the other user, and the evaluation for the size; and
an output means that outputs the size estimated by the estimation means.

**20.** A recording medium in which an information processing program is computer-readably recorded, the information processing program causing a computer to function as:

a size acquisition means that, from a purchase history storage means storing a purchase history of an item for sale to be worn, acquires a size of a specified item for sale specified according to a request of a request user, the size of the specified item for sale having been purchased by other user who purchased the specified item for sale, there being a plurality of sizes of the item for sale;
a body size information acquisition means that acquires body size information related to a body size of the request user and body size information related to a body size of the other user;
an evaluation specification means that specifies an evaluation by the other user for the size acquired by the size acquisition means;
an estimation means that estimates a size of the specified item for sale that fits the request user on the basis of a size relationship between the body size information of the request user and the body size information of the other user, the size of the specified item for sale purchased by the other user, and the evaluation for the size; and
an output means that outputs the size estimated by the estimation means.

FIG.1

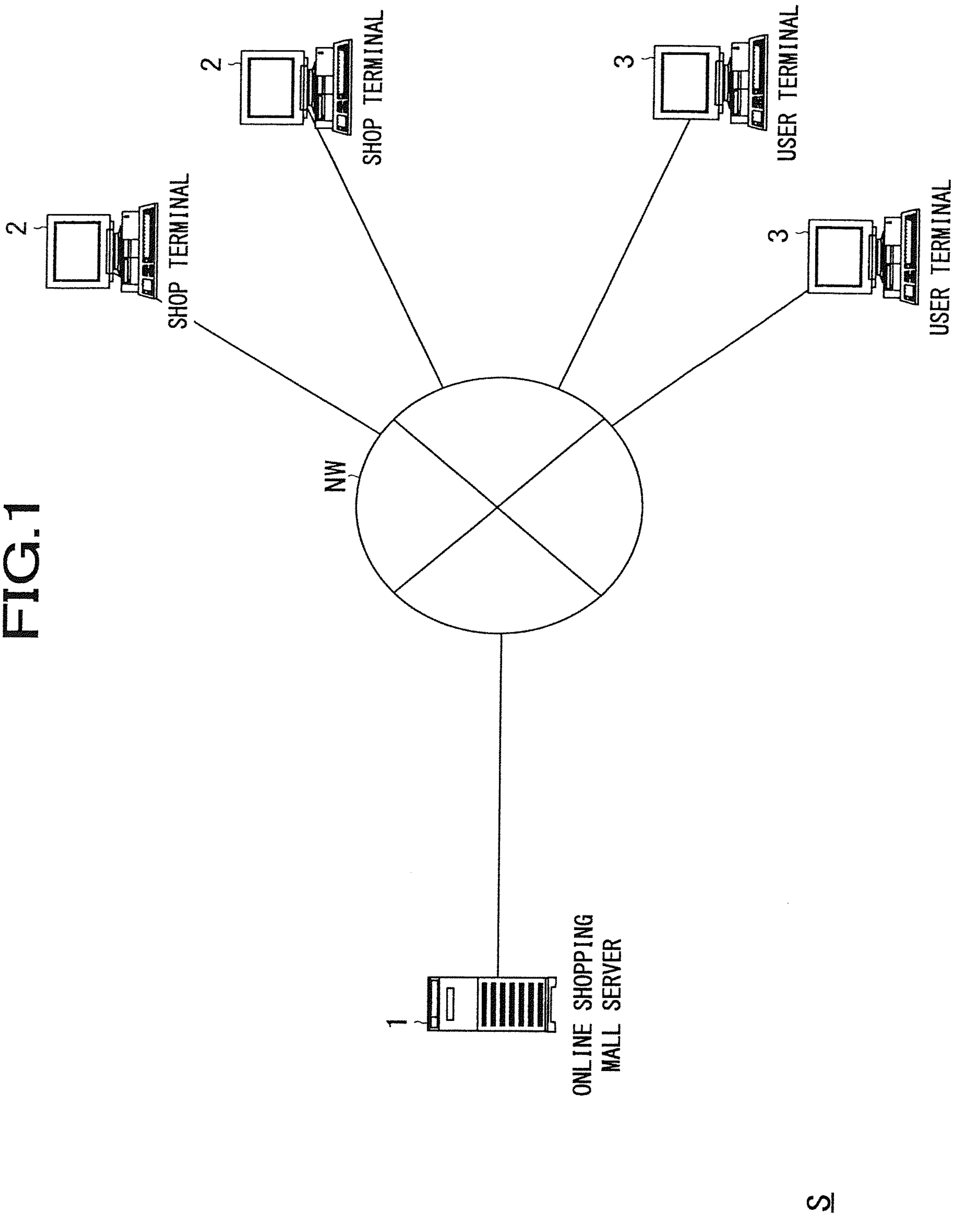
2
SHOP TERMINAL
2
SHOP TERMINAL
3
USER TERMINAL
3
USER TERMINAL
NW
1
ONLINE SHOPPING
MALL SERVER
S

FIG.2

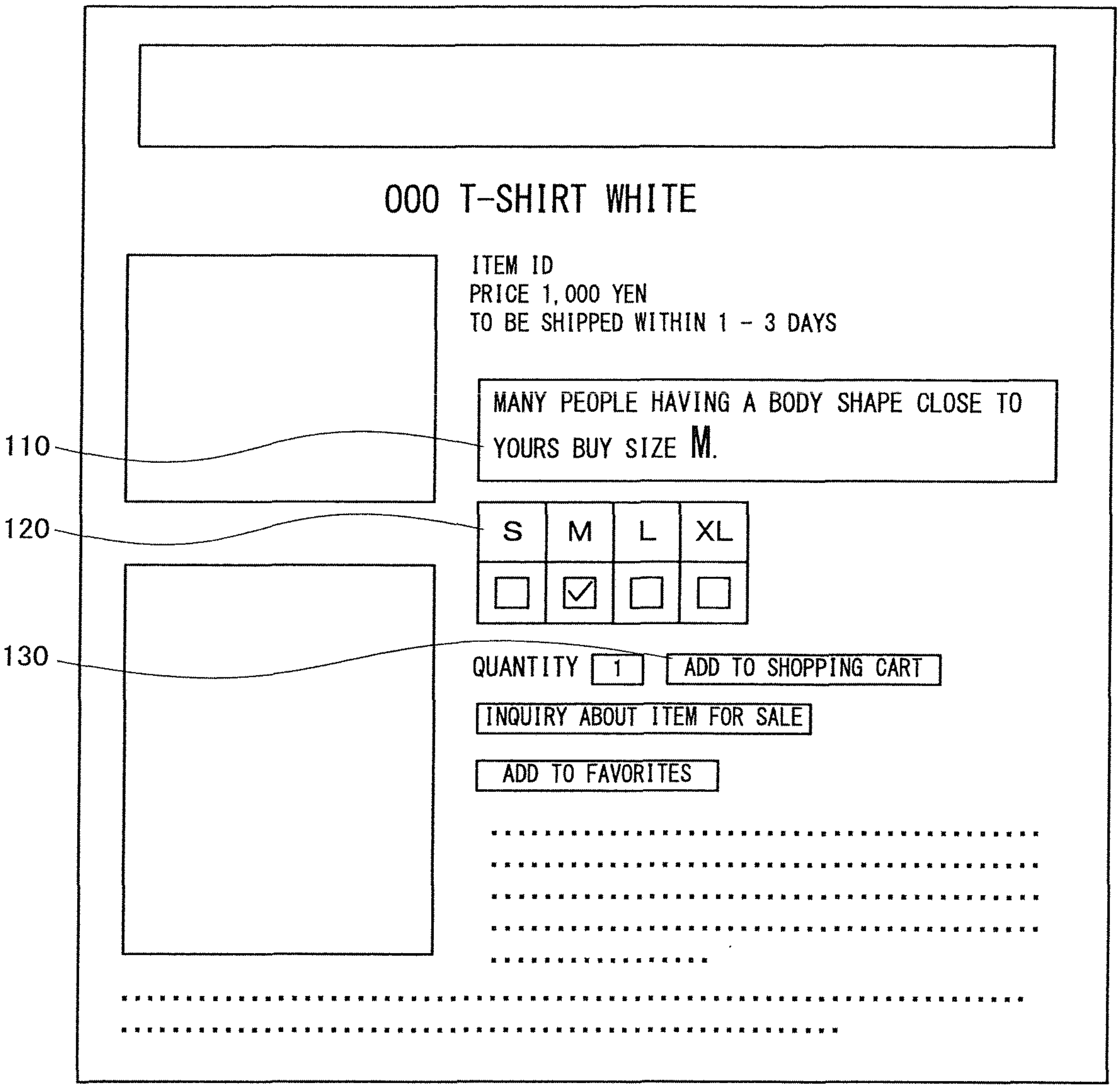
000 T-SHIRT WHITE
ITEM ID
PRICE 1,000 YEN
TO BE SHIPPED WITHIN 1 - 3 DAYS
MANY PEOPLE HAVING A BODY SHAPE CLOSE TO YOURS BUY SIZE M.
S
M
L
XL
QUANTITY
1
ADD TO SHOPPING CART
INQUIRY ABOUT ITEM FOR SALE
ADD TO FAVORITES
110
120
130

# FIG.3A

| CONTENT OF EVALUATION | | SCORE |
|---|---|---|
| RETURN | ITEM SIZE THAT WAS NOT RETURNED | +3.0 |
| | ITEM SIZE THAT WAS RETURNED | -3.0 |
| REVIEW OF ITEM FOR SALE | DEGREE OF RECOMMENDATION = 5 | +2.0 |
| | DEGREE OF RECOMMENDATION = 4 | +1.5 |
| | DEGREE OF RECOMMENDATION = 3 | +1.0 |
| | DEGREE OF RECOMMENDATION = 2 | -1.0 |
| | DEGREE OF RECOMMENDATION = 1 | -2.0 |
| PURCHASE WHILE WAVERING OVER SIZE | ITEM SIZE THAT WAS FINALLY PURCHASED | +1.5 |
| | ITEM SIZE THAT WAS NOT FINALLY PURCHASED (DELETED FROM SHOPPING CART, CANCEL OF ORDER) | -1.5 |
| NO EVALUATION (PURCHASE ONLY) | | +1.0 |

# FIG.3B

| TIME OF PURCHASE | WEIGHT W1 |
|---|---|
| 5 OR MORE YEARS AGO | 0.5 |
| LESS THAN 5 YEARS AGO - 2 OR MORE YEARS AGO | 0.8 |
| LESS THAN 2 YEARS AGO - 0.5 OR MORE YEARS AGO | 1.0 |
| LESS THAN 0.5 YEARS AGO | 1.2 |

# FIG.3C

| THE NUMBER OF EVALUATORS | WEIGHT | |
|---|---|---|
| | THERE IS EVALUATION W2 | NO EVALUATION 1-W2 |
| LESS THAN 5 | 0.5 | 0.5 |
| 5 OR MORE - LESS THAN 10 | 0.6 | 0.4 |
| 10 OR MORE - LESS THAN 20 | 0.7 | 0.3 |
| 20 OR MORE - LESS THAN 40 | 0.8 | 0.2 |
| 40 OR MORE - LESS THAN 100 | 0.9 | 0.1 |
| 100 OR MORE | 1.0 | 0.0 |

FIG.4

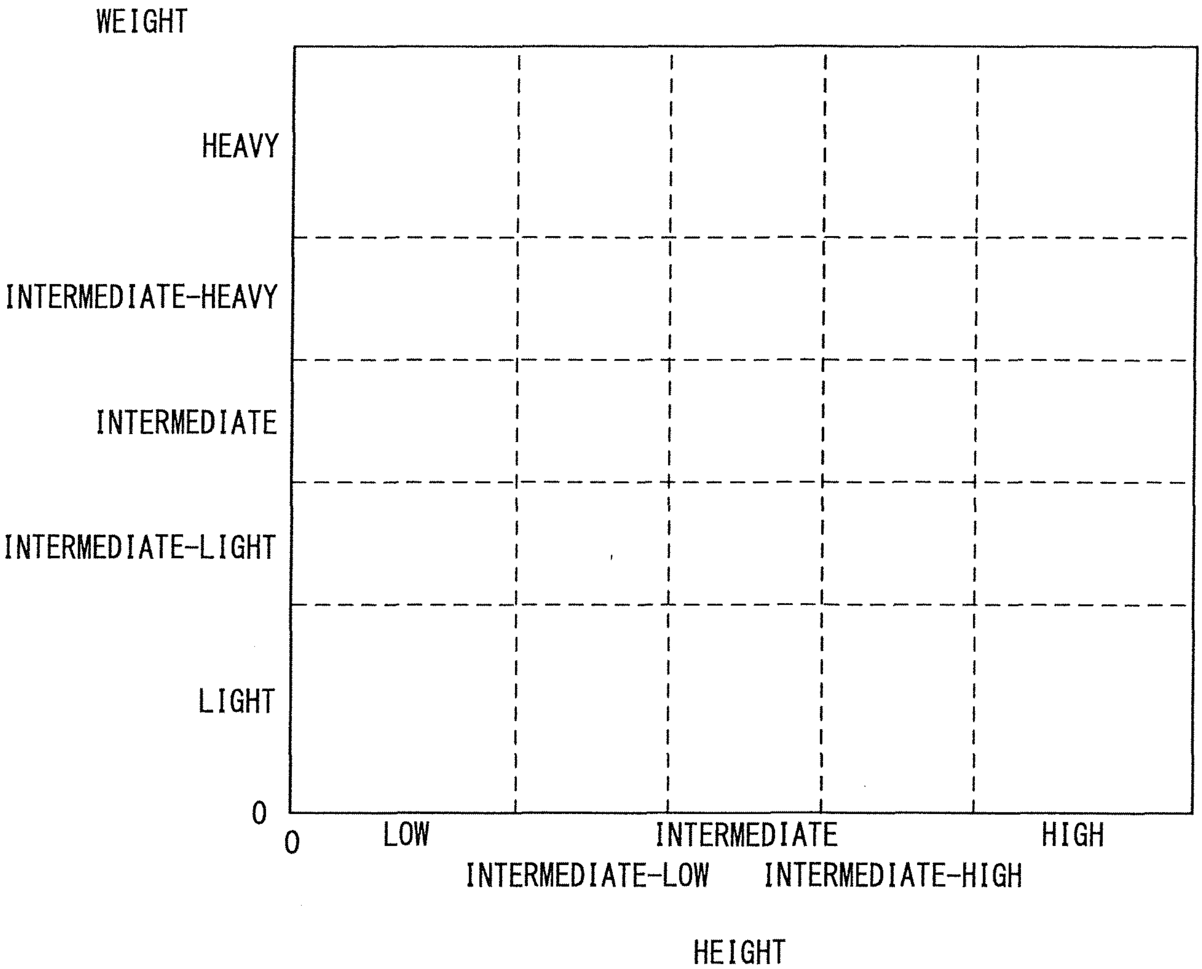
WEIGHT
HEAVY
INTERMEDIATE-HEAVY
INTERMEDIATE
INTERMEDIATE-LIGHT
LIGHT
0
0
LOW
INTERMEDIATE
HIGH
INTERMEDIATE-LOW
INTERMEDIATE-HIGH
HEIGHT

FIG.5

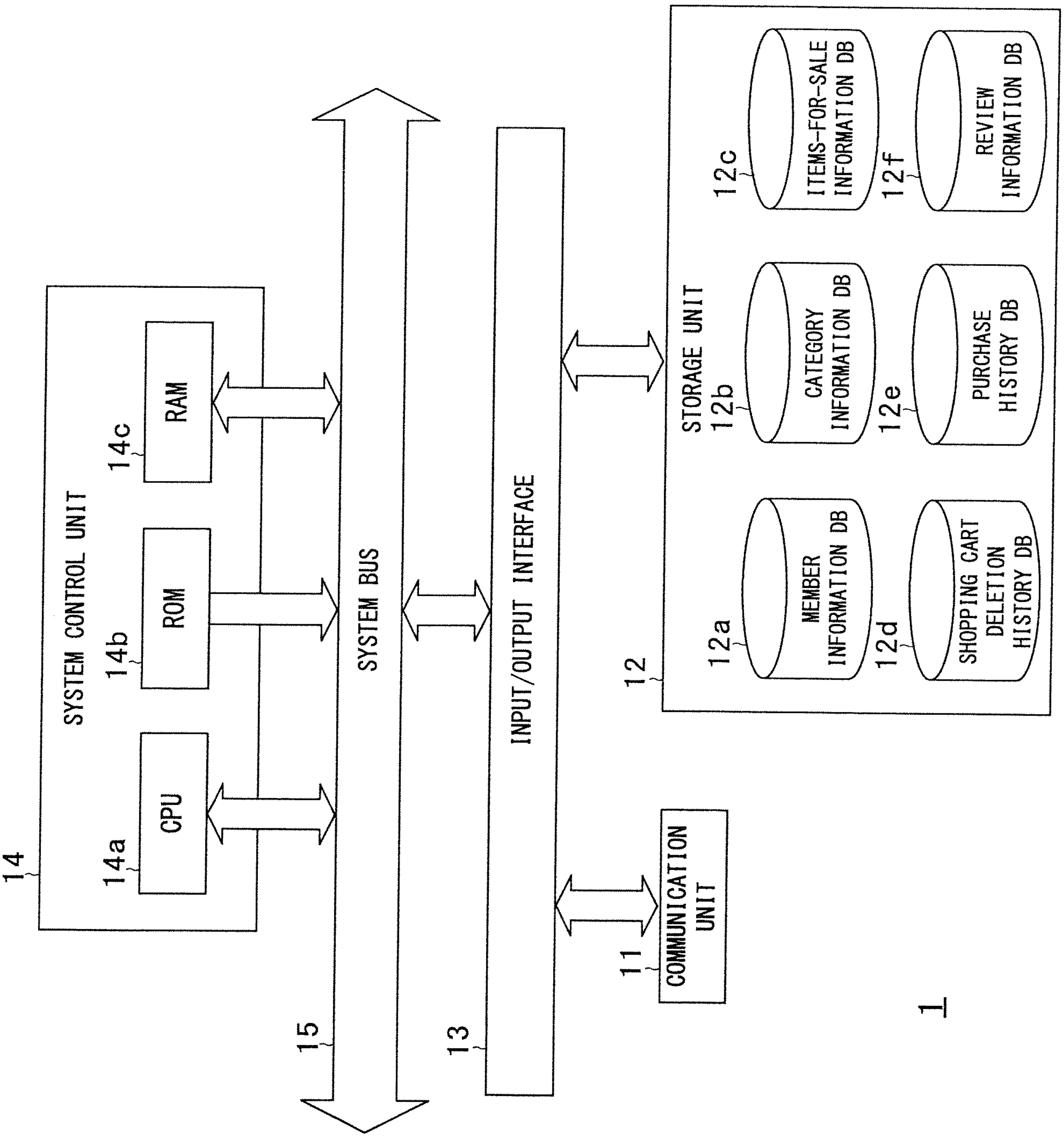

14
SYSTEM CONTROL UNIT
14a
CPU
14b
ROM
14c
RAM
15
SYSTEM BUS
13
INPUT/OUTPUT INTERFACE
11
COMMUNICATION UNIT
12
STORAGE UNIT
12a
MEMBER INFORMATION DB
12b
CATEGORY INFORMATION DB
12c
ITEMS-FOR-SALE INFORMATION DB
12d
SHOPPING CART DELETION HISTORY DB
12e
PURCHASE HISTORY DB
12f
REVIEW INFORMATION DB
1

FIG.6A

MEMBER INFORMATION DB 12a

| |
|---|
| USER ID |
| PASSWORD |
| NICKNAME |
| NAME |
| DATE OF BIRTH |
| GENDER |
| POSTAL CODE |
| ADDRESS |
| PHONE NUMBER |
| EMAIL ADDRESS |
| BODY SHAPE INFORMATION |

FIG.6B

CATEGORY INFORMATION DB 12b

| |
|---|
| CATEGORY ID |
| CATEGORY NAME |
| LEVEL |
| PARENT CATEGORY ID |
| CHILD CATEGORY ID LIST |

FIG.6C

ITEMS-FOR-SALE INFORMATION DB 12c

| |
|---|
| SHOP ID |
| ITEM ID |
| PRODUCT CODE |
| CATEGORY ID |
| BRAND ID |
| ITEM NAME |
| URL OF ITEM FOR SALE IMAGE |
| ITEM DESCRIPTION |
| ITEM PRICE |
| ITEM SIZE LIST |
| SIZE SELECTION RETURN SERVICE FLAG |

FIG.6D 12d

SHOPPING CART DELETION HISTORY DB

| |
|---|
| USER ID |
| DELETION DATE AND TIME |
| SHOP ID |
| ITEM ID |
| ITEM SIZE LIST |

FIG.6E

PURCHASE HISTORY DB 12e

| |
|---|
| ORDER CODE |
| PURCHASE DATE AND TIME |
| USER ID |
| SHOP ID |
| ITEM ID |
| PRODUCT CODE |
| CATEGORY ID |
| BRAND ID |
| PURCHASE SIZE LIST |
| PURCHASE PRICE |
| CANCEL FLAG |
| CANCEL DATE AND TIME |
| RETURN FLAG |
| RETURN DATE AND TIME |
| RETURN SIZE LIST |

FIG.6F

REVIEW INFORMATION DB 12f

| |
|---|
| USER ID |
| REGISTRATION DATE AND TIME |
| SHOP ID |
| ITEM ID |
| ITEM SIZE LIST |
| DEGREE OF RECOMMENDATION |
| TITLE |
| BODY TEXT |

FIG.7

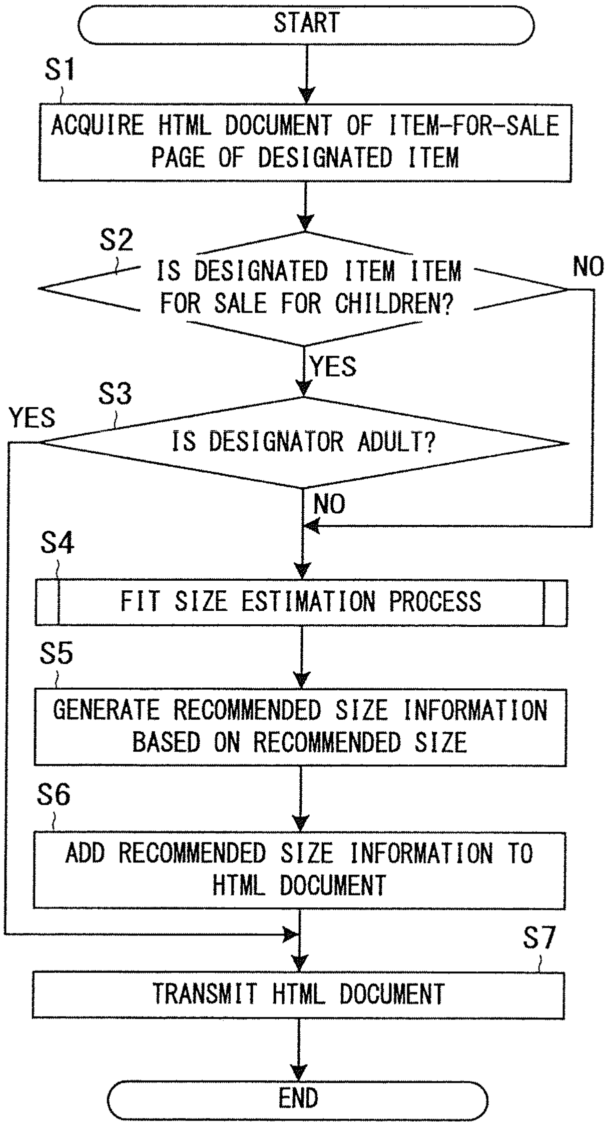
START
S1
ACQUIRE HTML DOCUMENT OF ITEM-FOR-SALE PAGE OF DESIGNATED ITEM
S2
IS DESIGNATED ITEM ITEM FOR SALE FOR CHILDREN?
NO
YES
S3
YES
IS DESIGNATOR ADULT?
NO
S4
FIT SIZE ESTIMATION PROCESS
S5
GENERATE RECOMMENDED SIZE INFORMATION BASED ON RECOMMENDED SIZE
S6
ADD RECOMMENDED SIZE INFORMATION TO HTML DOCUMENT
S7
TRANSMIT HTML DOCUMENT
END

FIG.8

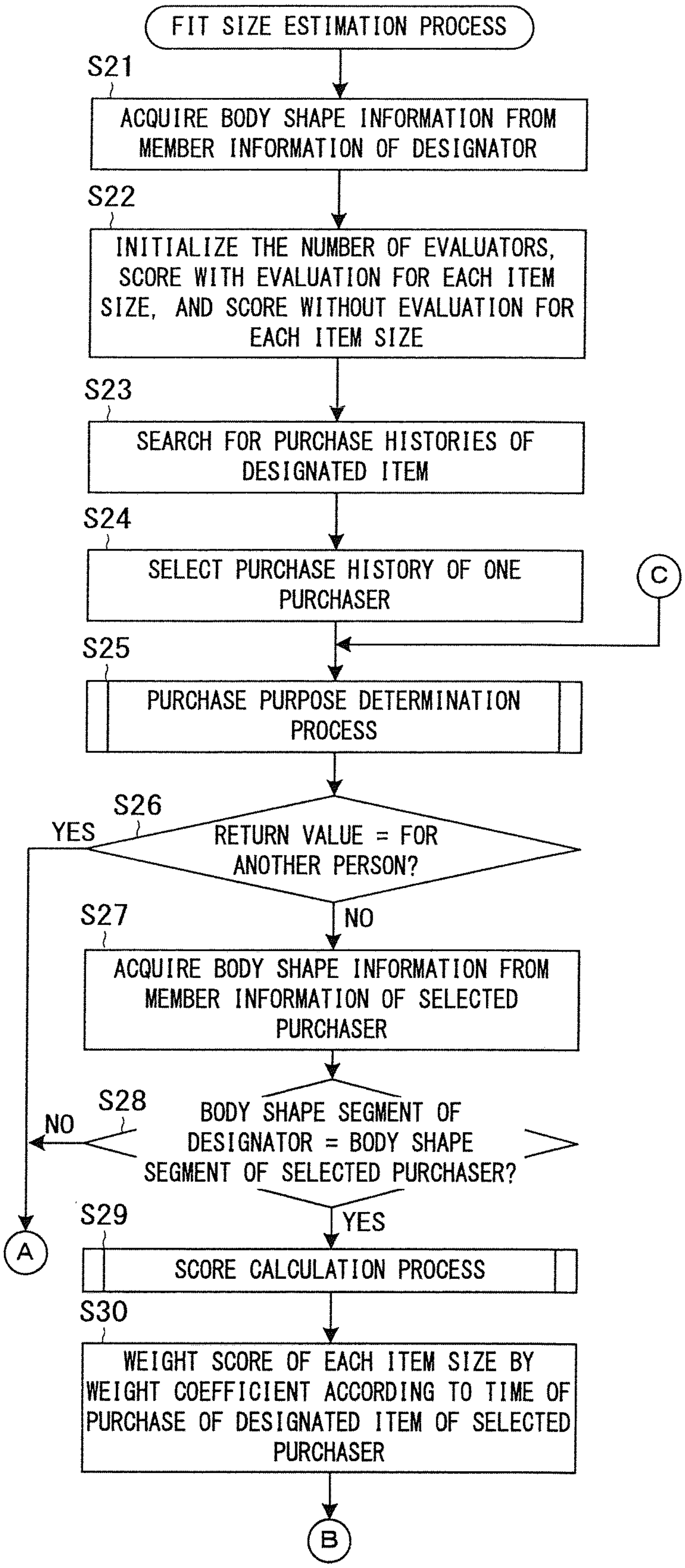
FIT SIZE ESTIMATION PROCESS
S21
ACQUIRE BODY SHAPE INFORMATION FROM MEMBER INFORMATION OF DESIGNATOR
S22
INITIALIZE THE NUMBER OF EVALUATORS, SCORE WITH EVALUATION FOR EACH ITEM SIZE, AND SCORE WITHOUT EVALUATION FOR EACH ITEM SIZE
S23
SEARCH FOR PURCHASE HISTORIES OF DESIGNATED ITEM
S24
SELECT PURCHASE HISTORY OF ONE PURCHASER
C
S25
PURCHASE PURPOSE DETERMINATION PROCESS
S26
RETURN VALUE = FOR ANOTHER PERSON?
YES
NO
S27
ACQUIRE BODY SHAPE INFORMATION FROM MEMBER INFORMATION OF SELECTED PURCHASER
S28
BODY SHAPE SEGMENT OF DESIGNATOR = BODY SHAPE SEGMENT OF SELECTED PURCHASER?
NO
YES
A
S29
SCORE CALCULATION PROCESS
S30
WEIGHT SCORE OF EACH ITEM SIZE BY WEIGHT COEFFICIENT ACCORDING TO TIME OF PURCHASE OF DESIGNATED ITEM OF SELECTED PURCHASER
B

FIG.9

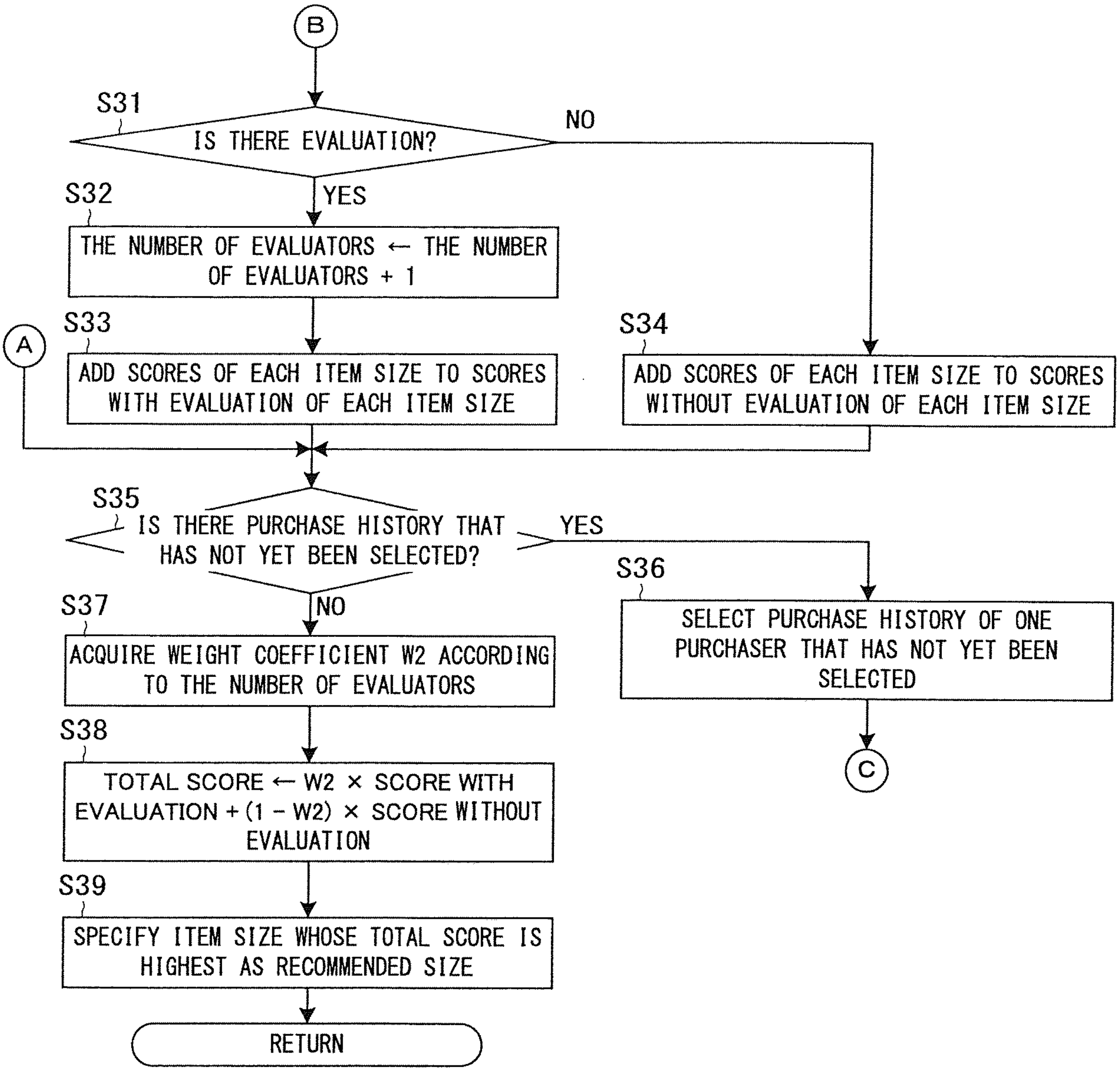
B
S31
IS THERE EVALUATION?
NO
YES
S32
THE NUMBER OF EVALUATORS ← THE NUMBER OF EVALUATORS + 1
S33
A
ADD SCORES OF EACH ITEM SIZE TO SCORES WITH EVALUATION OF EACH ITEM SIZE
S34
ADD SCORES OF EACH ITEM SIZE TO SCORES WITHOUT EVALUATION OF EACH ITEM SIZE
S35
IS THERE PURCHASE HISTORY THAT HAS NOT YET BEEN SELECTED?
YES
S36
SELECT PURCHASE HISTORY OF ONE PURCHASER THAT HAS NOT YET BEEN SELECTED
C
NO
S37
ACQUIRE WEIGHT COEFFICIENT W2 ACCORDING TO THE NUMBER OF EVALUATORS
S38
TOTAL SCORE ← W2 × SCORE WITH EVALUATION + (1 − W2) × SCORE WITHOUT EVALUATION
S39
SPECIFY ITEM SIZE WHOSE TOTAL SCORE IS HIGHEST AS RECOMMENDED SIZE
RETURN

FIG.10

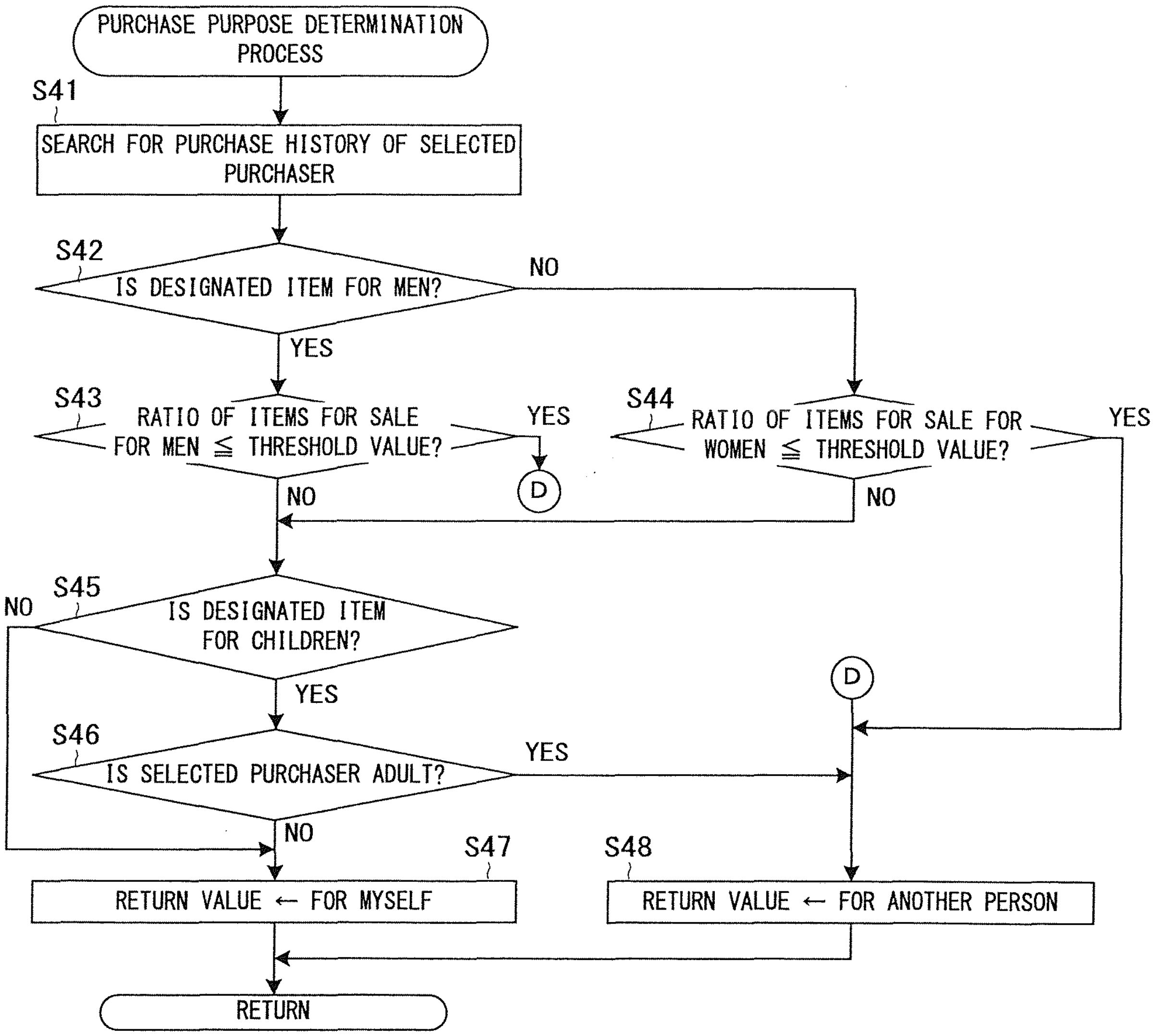
PURCHASE PURPOSE DETERMINATION PROCESS
S41
SEARCH FOR PURCHASE HISTORY OF SELECTED PURCHASER
S42
IS DESIGNATED ITEM FOR MEN?
NO
YES
S43
RATIO OF ITEMS FOR SALE FOR MEN ≦ THRESHOLD VALUE?
YES
D
NO
S44
RATIO OF ITEMS FOR SALE FOR WOMEN ≦ THRESHOLD VALUE?
YES
NO
S45
IS DESIGNATED ITEM FOR CHILDREN?
NO
YES
D
S46
IS SELECTED PURCHASER ADULT?
YES
NO
S47
RETURN VALUE ← FOR MYSELF
S48
RETURN VALUE ← FOR ANOTHER PERSON
RETURN

# FIG.11

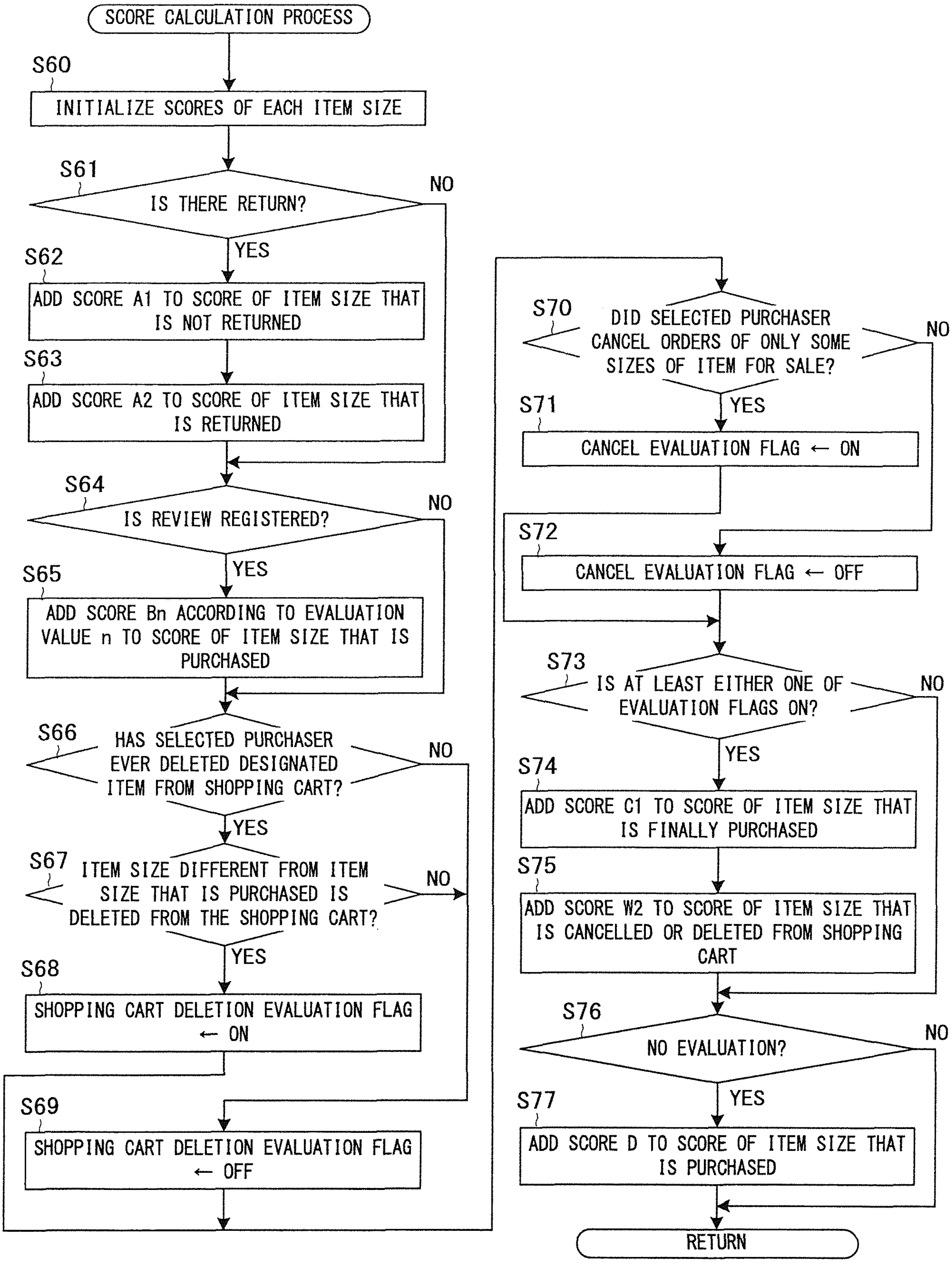
SCORE CALCULATION PROCESS
S60
INITIALIZE SCORES OF EACH ITEM SIZE
S61
IS THERE RETURN?
NO
YES
S62
ADD SCORE A1 TO SCORE OF ITEM SIZE THAT IS NOT RETURNED
S63
ADD SCORE A2 TO SCORE OF ITEM SIZE THAT IS RETURNED
S64
IS REVIEW REGISTERED?
NO
YES
S65
ADD SCORE Bn ACCORDING TO EVALUATION VALUE n TO SCORE OF ITEM SIZE THAT IS PURCHASED
S66
HAS SELECTED PURCHASER EVER DELETED DESIGNATED ITEM FROM SHOPPING CART?
NO
YES
S67
ITEM SIZE DIFFERENT FROM ITEM SIZE THAT IS PURCHASED IS DELETED FROM THE SHOPPING CART?
NO
YES
S68
SHOPPING CART DELETION EVALUATION FLAG ← ON
S69
SHOPPING CART DELETION EVALUATION FLAG ← OFF
S70
DID SELECTED PURCHASER CANCEL ORDERS OF ONLY SOME SIZES OF ITEM FOR SALE?
NO
YES
S71
CANCEL EVALUATION FLAG ← ON
S72
CANCEL EVALUATION FLAG ← OFF
S73
IS AT LEAST EITHER ONE OF EVALUATION FLAGS ON?
NO
YES
S74
ADD SCORE C1 TO SCORE OF ITEM SIZE THAT IS FINALLY PURCHASED
S75
ADD SCORE W2 TO SCORE OF ITEM SIZE THAT IS CANCELLED OR DELETED FROM SHOPPING CART
S76
NO EVALUATION?
NO
YES
S77
ADD SCORE D TO SCORE OF ITEM SIZE THAT IS PURCHASED
RETURN

FIG.12

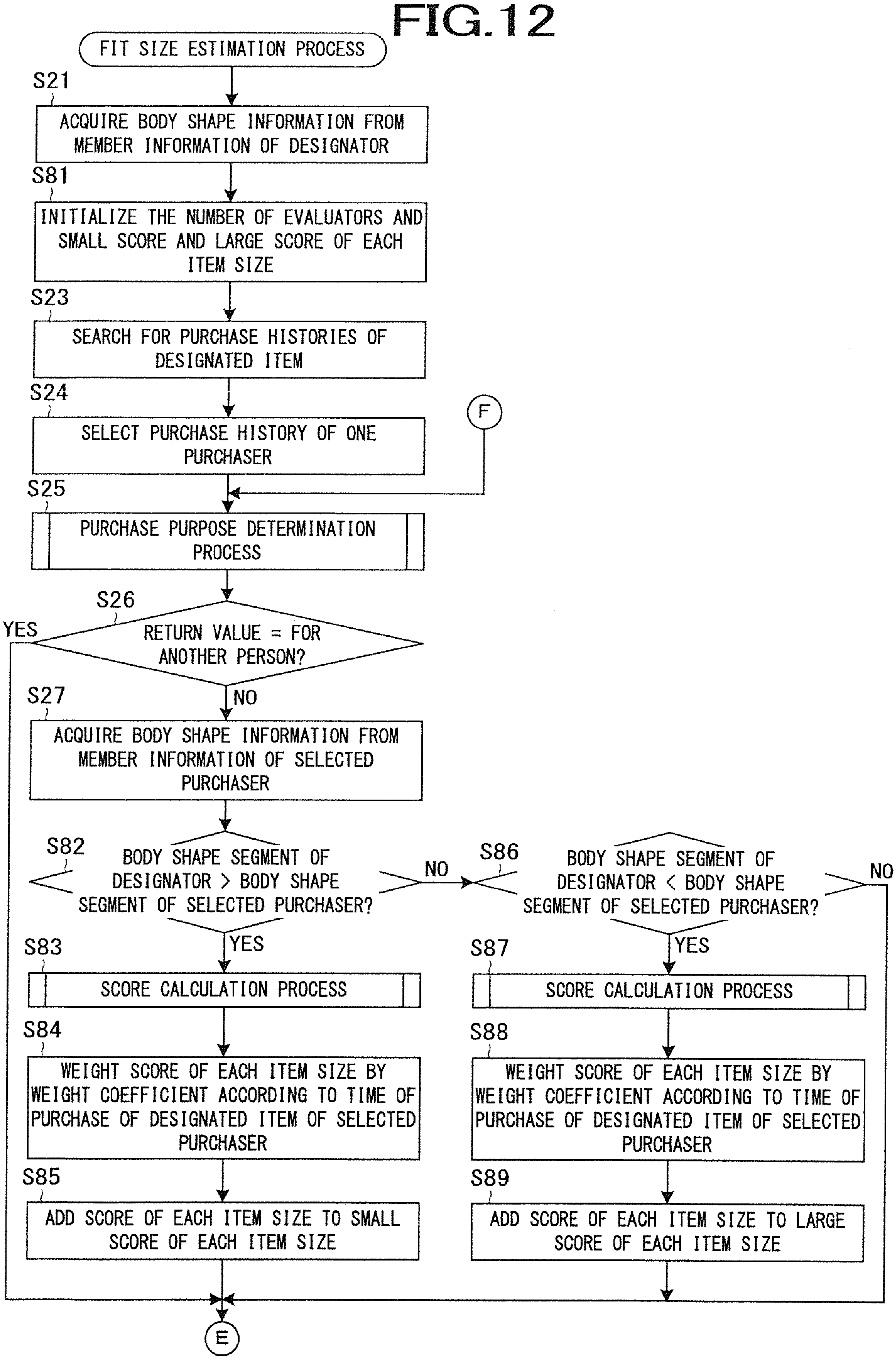
FIT SIZE ESTIMATION PROCESS
S21
ACQUIRE BODY SHAPE INFORMATION FROM MEMBER INFORMATION OF DESIGNATOR
S81
INITIALIZE THE NUMBER OF EVALUATORS AND SMALL SCORE AND LARGE SCORE OF EACH ITEM SIZE
S23
SEARCH FOR PURCHASE HISTORIES OF DESIGNATED ITEM
S24
SELECT PURCHASE HISTORY OF ONE PURCHASER
F
S25
PURCHASE PURPOSE DETERMINATION PROCESS
S26
RETURN VALUE = FOR ANOTHER PERSON?
YES
NO
S27
ACQUIRE BODY SHAPE INFORMATION FROM MEMBER INFORMATION OF SELECTED PURCHASER
S82
BODY SHAPE SEGMENT OF DESIGNATOR > BODY SHAPE SEGMENT OF SELECTED PURCHASER?
NO
S86
BODY SHAPE SEGMENT OF DESIGNATOR < BODY SHAPE SEGMENT OF SELECTED PURCHASER?
NO
YES
S83
SCORE CALCULATION PROCESS
S84
WEIGHT SCORE OF EACH ITEM SIZE BY WEIGHT COEFFICIENT ACCORDING TO TIME OF PURCHASE OF DESIGNATED ITEM OF SELECTED PURCHASER
S85
ADD SCORE OF EACH ITEM SIZE TO SMALL SCORE OF EACH ITEM SIZE
YES
S87
SCORE CALCULATION PROCESS
S88
WEIGHT SCORE OF EACH ITEM SIZE BY WEIGHT COEFFICIENT ACCORDING TO TIME OF PURCHASE OF DESIGNATED ITEM OF SELECTED PURCHASER
S89
ADD SCORE OF EACH ITEM SIZE TO LARGE SCORE OF EACH ITEM SIZE
E

FIG.13

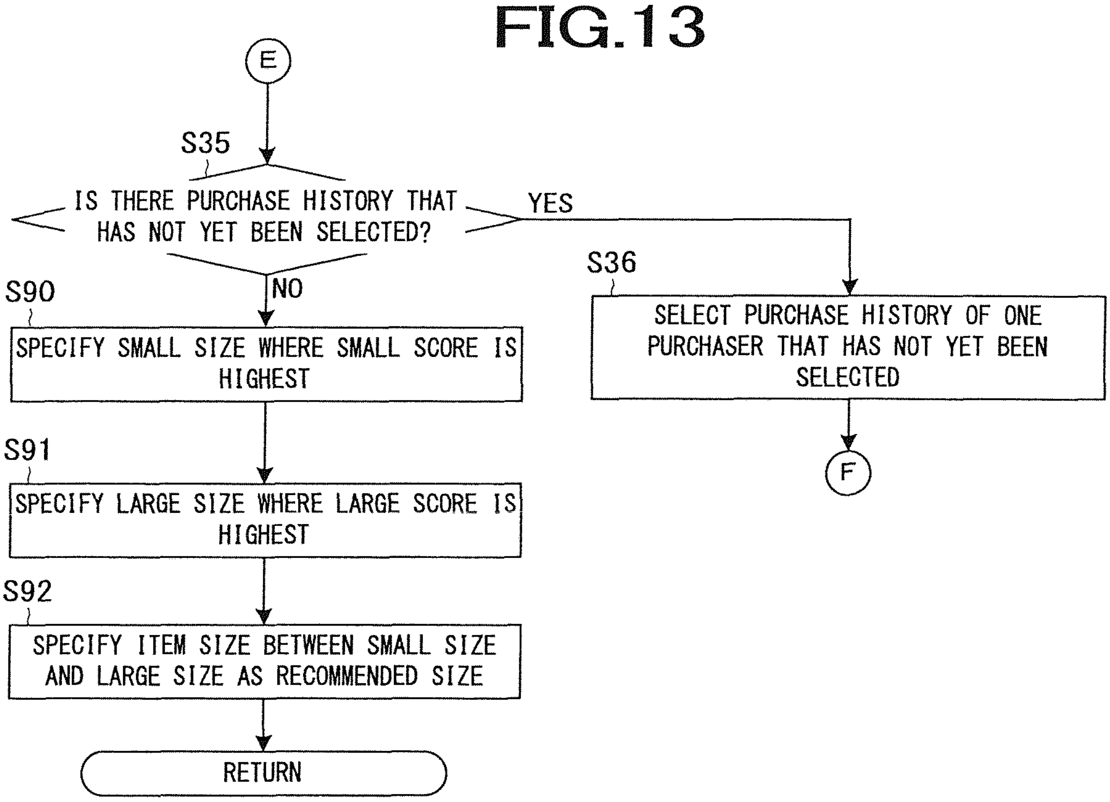
E
S35
IS THERE PURCHASE HISTORY THAT HAS NOT YET BEEN SELECTED?
YES
NO
S90
SPECIFY SMALL SIZE WHERE SMALL SCORE IS HIGHEST
S91
SPECIFY LARGE SIZE WHERE LARGE SCORE IS HIGHEST
S92
SPECIFY ITEM SIZE BETWEEN SMALL SIZE AND LARGE SIZE AS RECOMMENDED SIZE
RETURN
S36
SELECT PURCHASE HISTORY OF ONE PURCHASER THAT HAS NOT YET BEEN SELECTED
F

FIG.14A

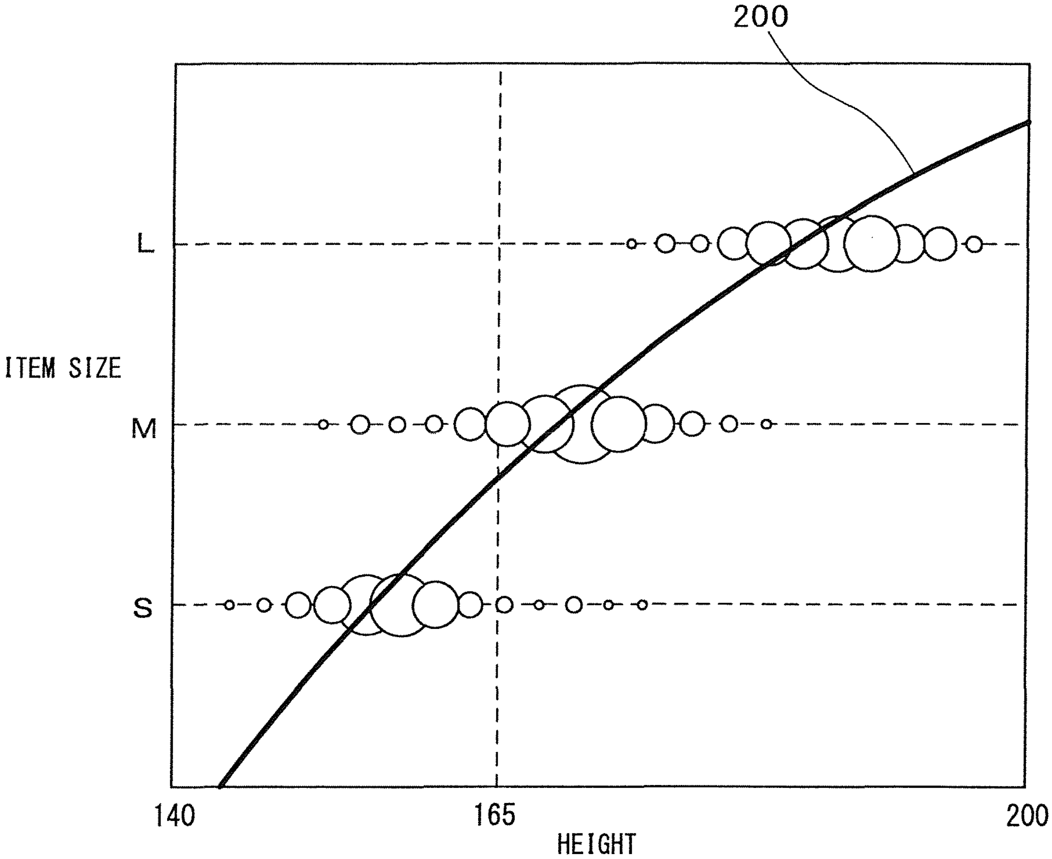


FIG.14B

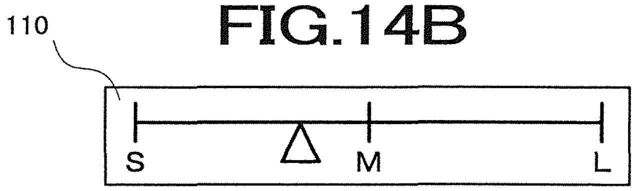


FIG.14C

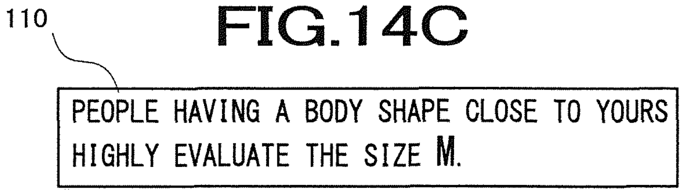


FIG.14D

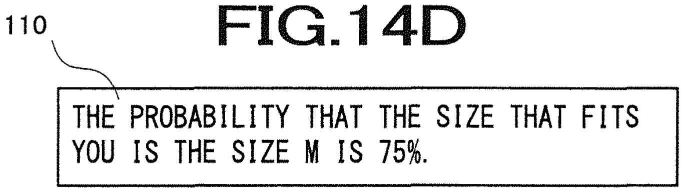

FIG.15

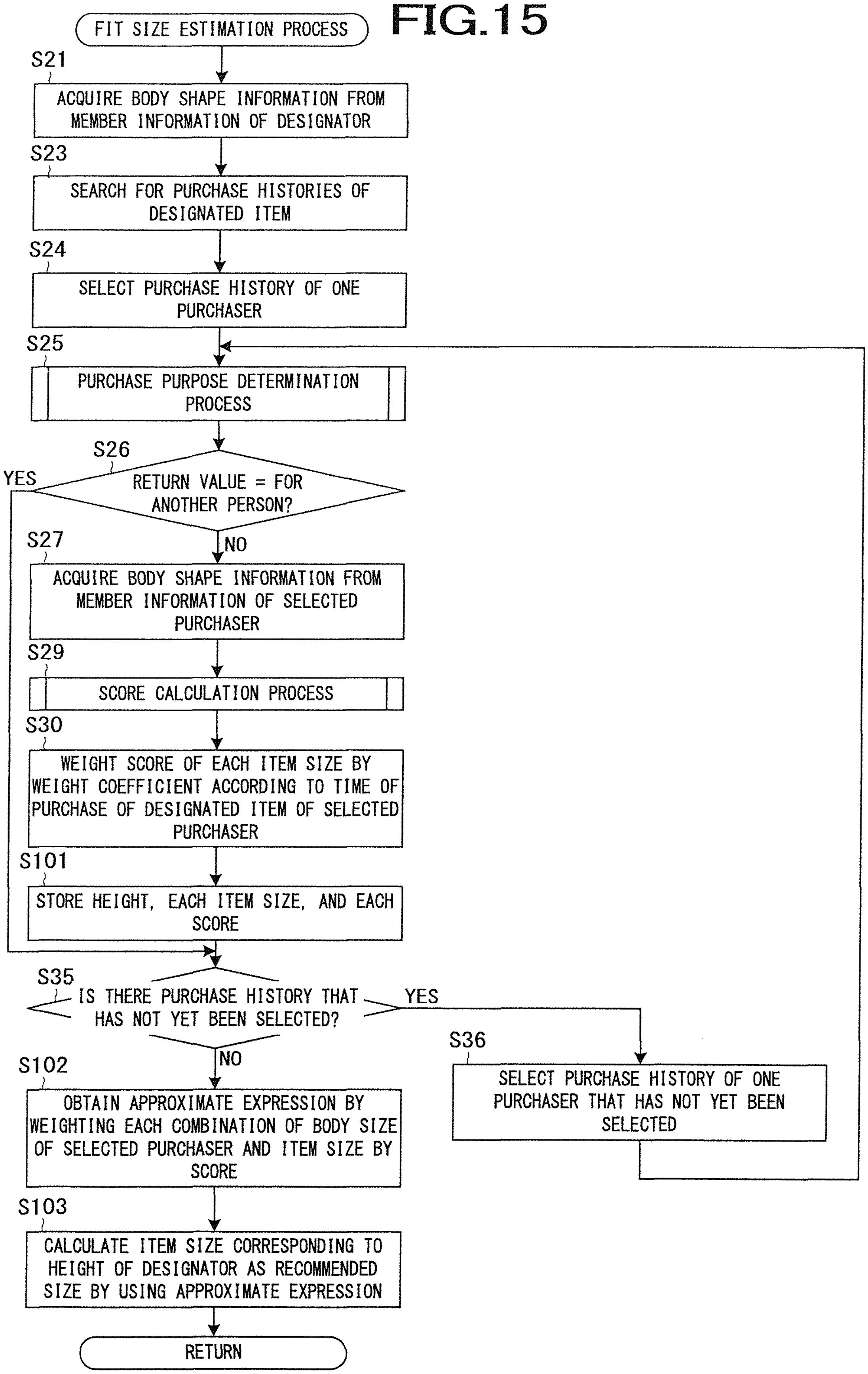
FIT SIZE ESTIMATION PROCESS
S21
ACQUIRE BODY SHAPE INFORMATION FROM MEMBER INFORMATION OF DESIGNATOR
S23
SEARCH FOR PURCHASE HISTORIES OF DESIGNATED ITEM
S24
SELECT PURCHASE HISTORY OF ONE PURCHASER
S25
PURCHASE PURPOSE DETERMINATION PROCESS
S26
RETURN VALUE = FOR ANOTHER PERSON?
YES
NO
S27
ACQUIRE BODY SHAPE INFORMATION FROM MEMBER INFORMATION OF SELECTED PURCHASER
S29
SCORE CALCULATION PROCESS
S30
WEIGHT SCORE OF EACH ITEM SIZE BY WEIGHT COEFFICIENT ACCORDING TO TIME OF PURCHASE OF DESIGNATED ITEM OF SELECTED PURCHASER
S101
STORE HEIGHT, EACH ITEM SIZE, AND EACH SCORE
S35
IS THERE PURCHASE HISTORY THAT HAS NOT YET BEEN SELECTED?
YES
S36
SELECT PURCHASE HISTORY OF ONE PURCHASER THAT HAS NOT YET BEEN SELECTED
NO
S102
OBTAIN APPROXIMATE EXPRESSION BY WEIGHTING EACH COMBINATION OF BODY SIZE OF SELECTED PURCHASER AND ITEM SIZE BY SCORE
S103
CALCULATE ITEM SIZE CORRESPONDING TO HEIGHT OF DESIGNATOR AS RECOMMENDED SIZE BY USING APPROXIMATE EXPRESSION
RETURN

# FIG.16

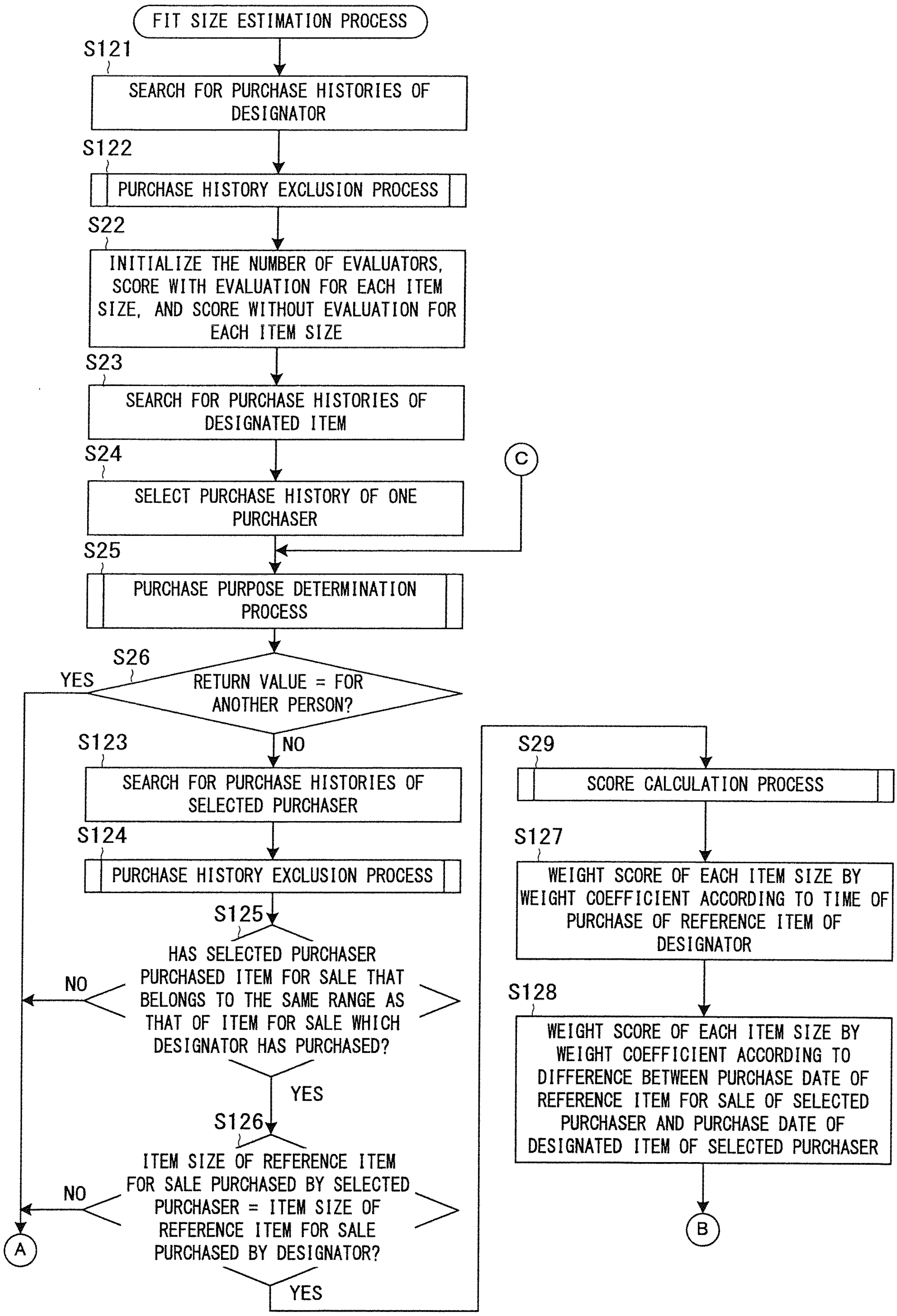
FIT SIZE ESTIMATION PROCESS
S121
SEARCH FOR PURCHASE HISTORIES OF DESIGNATOR
S122
PURCHASE HISTORY EXCLUSION PROCESS
S22
INITIALIZE THE NUMBER OF EVALUATORS, SCORE WITH EVALUATION FOR EACH ITEM SIZE, AND SCORE WITHOUT EVALUATION FOR EACH ITEM SIZE
S23
SEARCH FOR PURCHASE HISTORIES OF DESIGNATED ITEM
S24
SELECT PURCHASE HISTORY OF ONE PURCHASER
C
S25
PURCHASE PURPOSE DETERMINATION PROCESS
S26
RETURN VALUE = FOR ANOTHER PERSON?
YES
NO
S123
SEARCH FOR PURCHASE HISTORIES OF SELECTED PURCHASER
S124
PURCHASE HISTORY EXCLUSION PROCESS
S125
HAS SELECTED PURCHASER PURCHASED ITEM FOR SALE THAT BELONGS TO THE SAME RANGE AS THAT OF ITEM FOR SALE WHICH DESIGNATOR HAS PURCHASED?
NO
YES
S126
ITEM SIZE OF REFERENCE ITEM FOR SALE PURCHASED BY SELECTED PURCHASER = ITEM SIZE OF REFERENCE ITEM FOR SALE PURCHASED BY DESIGNATOR?
NO
YES
A
S29
SCORE CALCULATION PROCESS
S127
WEIGHT SCORE OF EACH ITEM SIZE BY WEIGHT COEFFICIENT ACCORDING TO TIME OF PURCHASE OF REFERENCE ITEM OF DESIGNATOR
S128
WEIGHT SCORE OF EACH ITEM SIZE BY WEIGHT COEFFICIENT ACCORDING TO DIFFERENCE BETWEEN PURCHASE DATE OF REFERENCE ITEM FOR SALE OF SELECTED PURCHASER AND PURCHASE DATE OF DESIGNATED ITEM OF SELECTED PURCHASER
B

FIG.17

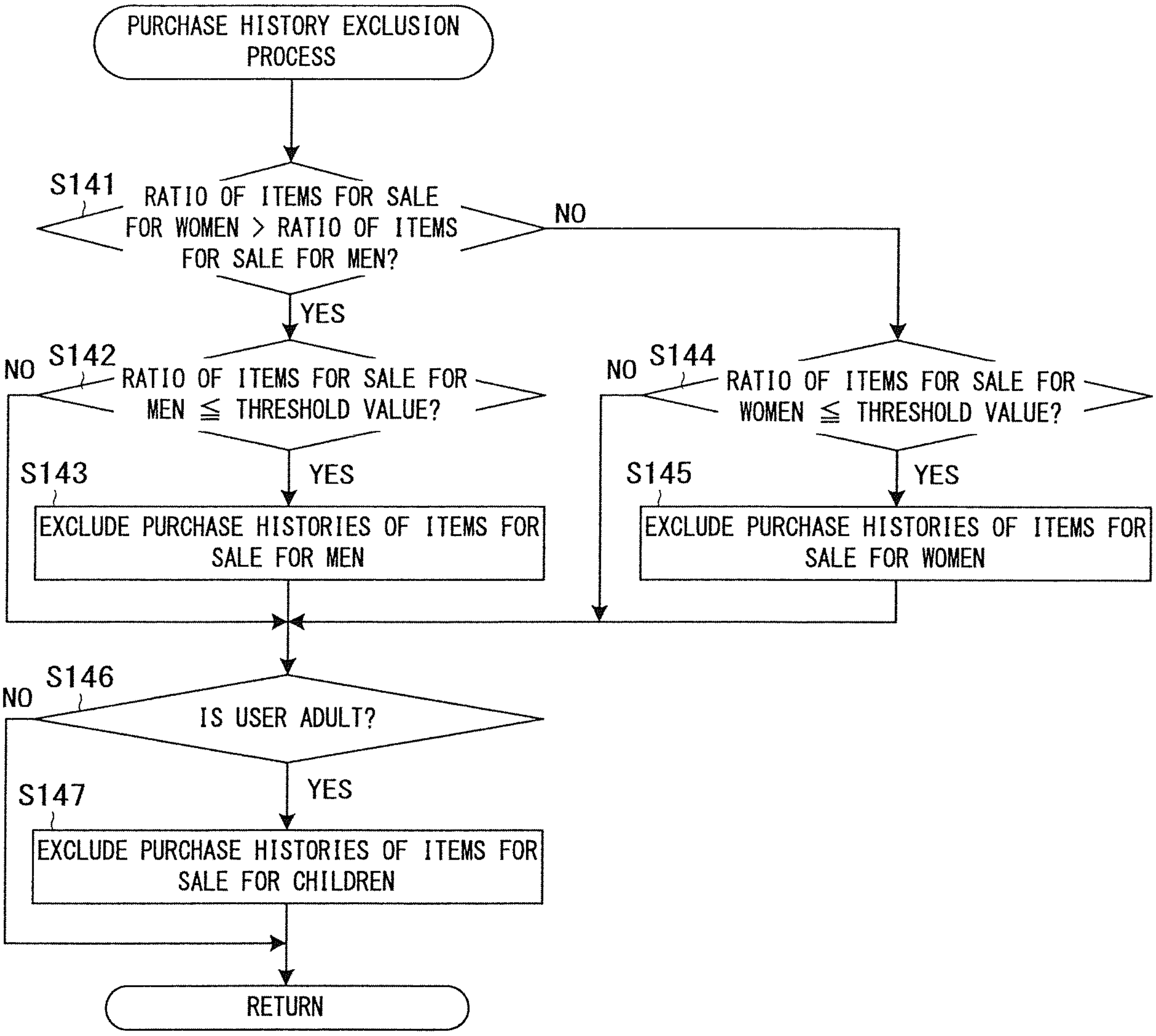
PURCHASE HISTORY EXCLUSION PROCESS
S141
RATIO OF ITEMS FOR SALE FOR WOMEN > RATIO OF ITEMS FOR SALE FOR MEN?
NO
YES
S142
NO
RATIO OF ITEMS FOR SALE FOR MEN ≦ THRESHOLD VALUE?
YES
S143
EXCLUDE PURCHASE HISTORIES OF ITEMS FOR SALE FOR MEN
S144
NO
RATIO OF ITEMS FOR SALE FOR WOMEN ≦ THRESHOLD VALUE?
YES
S145
EXCLUDE PURCHASE HISTORIES OF ITEMS FOR SALE FOR WOMEN
S146
NO
IS USER ADULT?
YES
S147
EXCLUDE PURCHASE HISTORIES OF ITEMS FOR SALE FOR CHILDREN
RETURN

# FIG.18

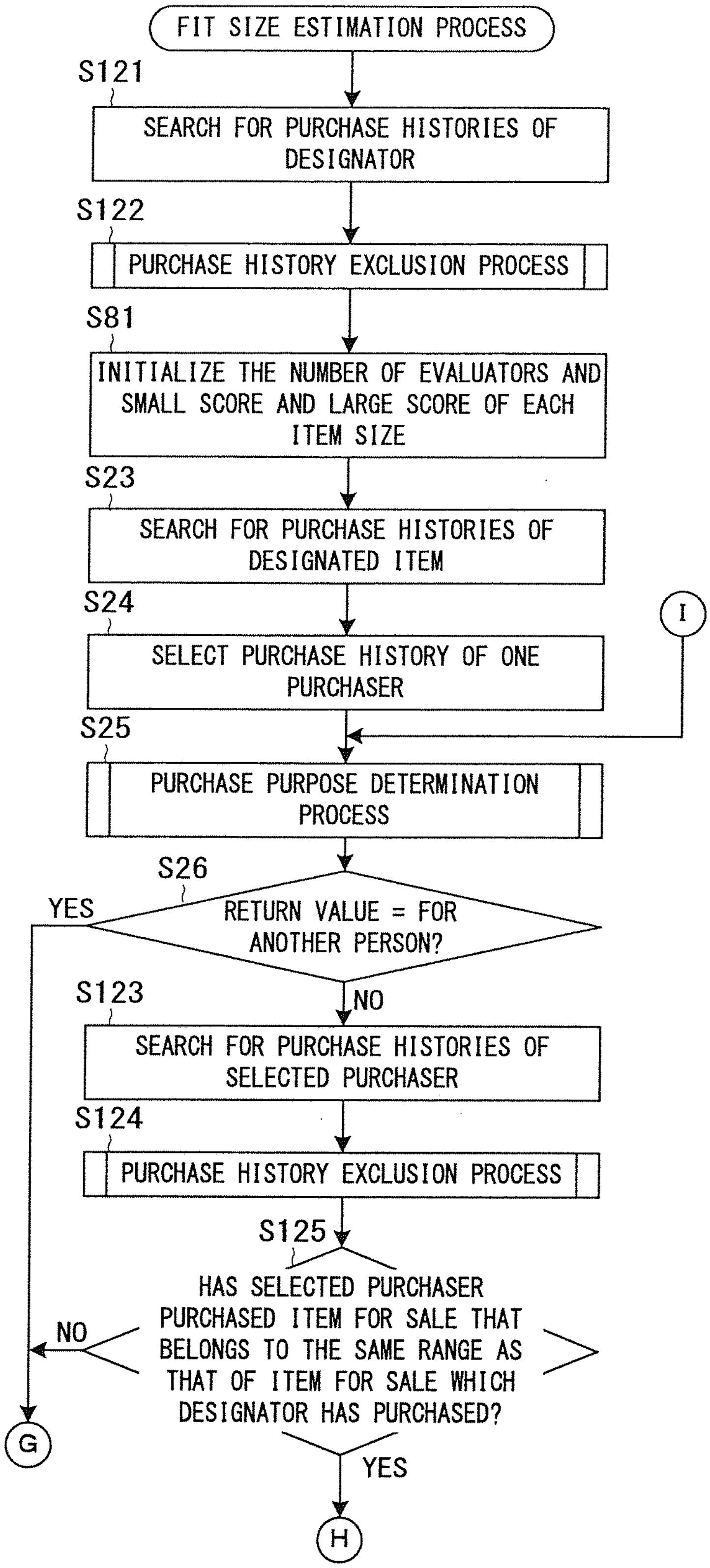
FIT SIZE ESTIMATION PROCESS
S121
SEARCH FOR PURCHASE HISTORIES OF DESIGNATOR
S122
PURCHASE HISTORY EXCLUSION PROCESS
S81
INITIALIZE THE NUMBER OF EVALUATORS AND SMALL SCORE AND LARGE SCORE OF EACH ITEM SIZE
S23
SEARCH FOR PURCHASE HISTORIES OF DESIGNATED ITEM
S24
SELECT PURCHASE HISTORY OF ONE PURCHASER
I
S25
PURCHASE PURPOSE DETERMINATION PROCESS
S26
RETURN VALUE = FOR ANOTHER PERSON?
YES
NO
S123
SEARCH FOR PURCHASE HISTORIES OF SELECTED PURCHASER
S124
PURCHASE HISTORY EXCLUSION PROCESS
S125
HAS SELECTED PURCHASER PURCHASED ITEM FOR SALE THAT BELONGS TO THE SAME RANGE AS THAT OF ITEM FOR SALE WHICH DESIGNATOR HAS PURCHASED?
NO
YES
G
H

FIG.19

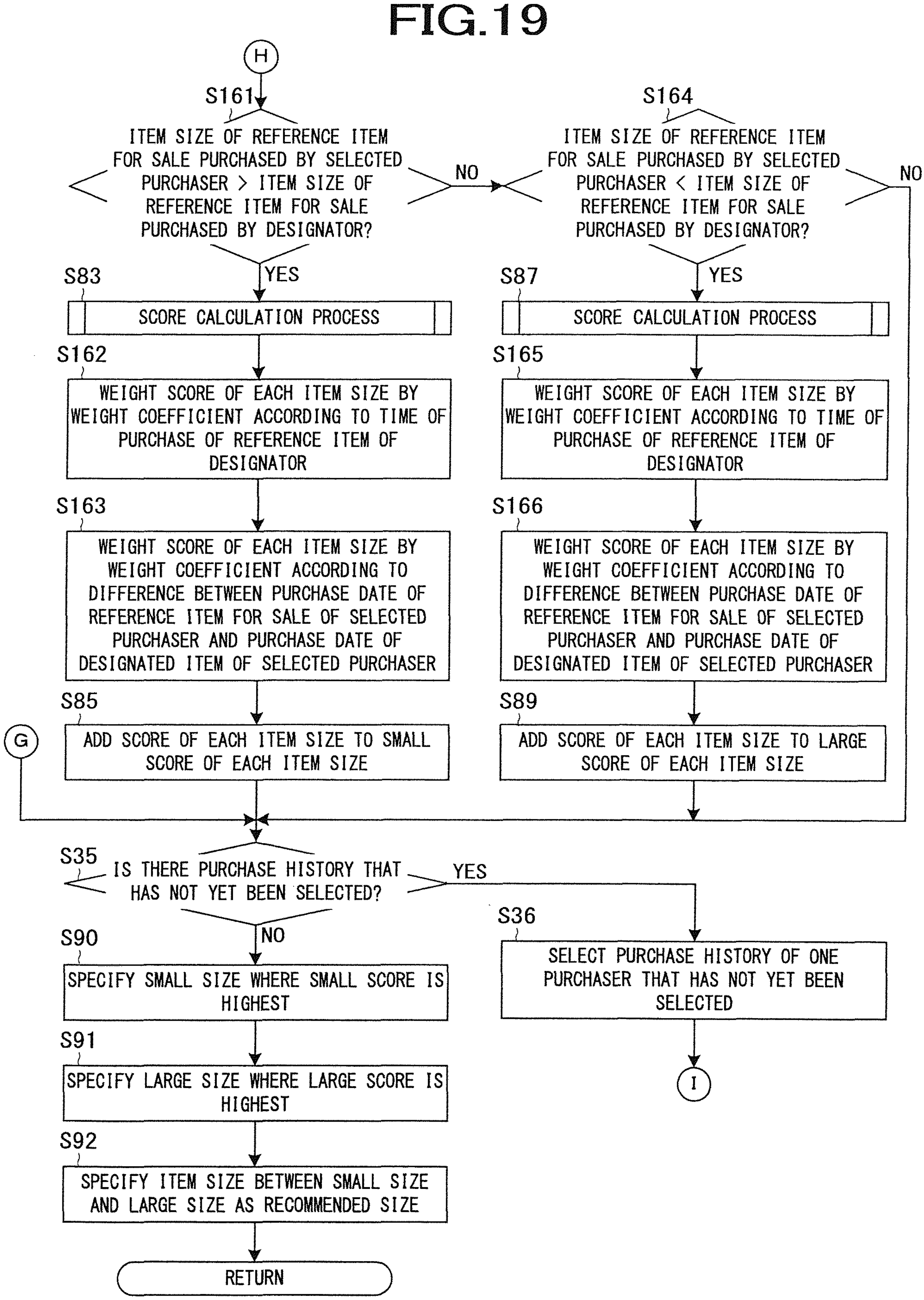
H
S161
ITEM SIZE OF REFERENCE ITEM FOR SALE PURCHASED BY SELECTED PURCHASER > ITEM SIZE OF REFERENCE ITEM FOR SALE PURCHASED BY DESIGNATOR?
NO
YES
S164
ITEM SIZE OF REFERENCE ITEM FOR SALE PURCHASED BY SELECTED PURCHASER < ITEM SIZE OF REFERENCE ITEM FOR SALE PURCHASED BY DESIGNATOR?
NO
YES
S83
SCORE CALCULATION PROCESS
S87
SCORE CALCULATION PROCESS
S162
WEIGHT SCORE OF EACH ITEM SIZE BY WEIGHT COEFFICIENT ACCORDING TO TIME OF PURCHASE OF REFERENCE ITEM OF DESIGNATOR
S165
WEIGHT SCORE OF EACH ITEM SIZE BY WEIGHT COEFFICIENT ACCORDING TO TIME OF PURCHASE OF REFERENCE ITEM OF DESIGNATOR
S163
WEIGHT SCORE OF EACH ITEM SIZE BY WEIGHT COEFFICIENT ACCORDING TO DIFFERENCE BETWEEN PURCHASE DATE OF REFERENCE ITEM FOR SALE OF SELECTED PURCHASER AND PURCHASE DATE OF DESIGNATED ITEM OF SELECTED PURCHASER
S166
WEIGHT SCORE OF EACH ITEM SIZE BY WEIGHT COEFFICIENT ACCORDING TO DIFFERENCE BETWEEN PURCHASE DATE OF REFERENCE ITEM FOR SALE OF SELECTED PURCHASER AND PURCHASE DATE OF DESIGNATED ITEM OF SELECTED PURCHASER
S85
ADD SCORE OF EACH ITEM SIZE TO SMALL SCORE OF EACH ITEM SIZE
S89
ADD SCORE OF EACH ITEM SIZE TO LARGE SCORE OF EACH ITEM SIZE
G
S35
IS THERE PURCHASE HISTORY THAT HAS NOT YET BEEN SELECTED?
YES
NO
S36
SELECT PURCHASE HISTORY OF ONE PURCHASER THAT HAS NOT YET BEEN SELECTED
I
S90
SPECIFY SMALL SIZE WHERE SMALL SCORE IS HIGHEST
S91
SPECIFY LARGE SIZE WHERE LARGE SCORE IS HIGHEST
S92
SPECIFY ITEM SIZE BETWEEN SMALL SIZE AND LARGE SIZE AS RECOMMENDED SIZE
RETURN

FIG.20

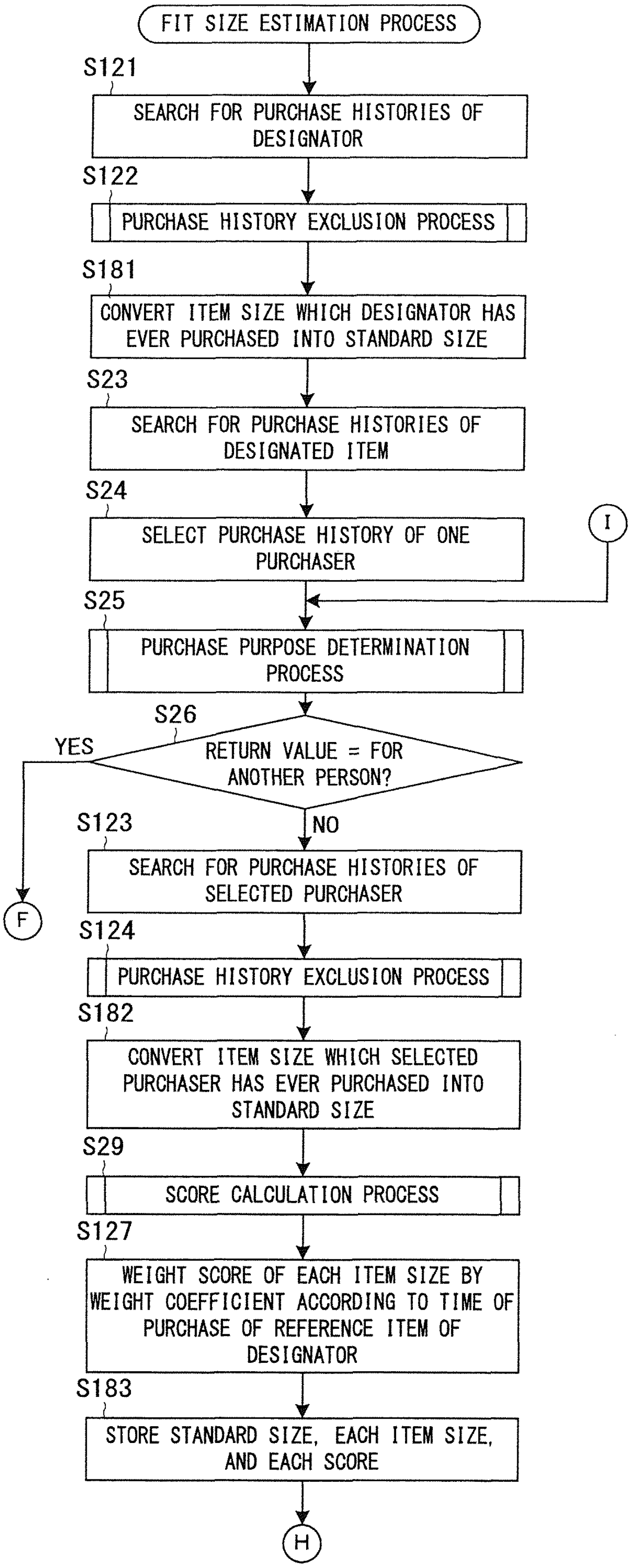
FIT SIZE ESTIMATION PROCESS
S121
SEARCH FOR PURCHASE HISTORIES OF DESIGNATOR
S122
PURCHASE HISTORY EXCLUSION PROCESS
S181
CONVERT ITEM SIZE WHICH DESIGNATOR HAS EVER PURCHASED INTO STANDARD SIZE
S23
SEARCH FOR PURCHASE HISTORIES OF DESIGNATED ITEM
S24
SELECT PURCHASE HISTORY OF ONE PURCHASER
I
S25
PURCHASE PURPOSE DETERMINATION PROCESS
S26
RETURN VALUE = FOR ANOTHER PERSON?
YES
NO
F
S123
SEARCH FOR PURCHASE HISTORIES OF SELECTED PURCHASER
S124
PURCHASE HISTORY EXCLUSION PROCESS
S182
CONVERT ITEM SIZE WHICH SELECTED PURCHASER HAS EVER PURCHASED INTO STANDARD SIZE
S29
SCORE CALCULATION PROCESS
S127
WEIGHT SCORE OF EACH ITEM SIZE BY WEIGHT COEFFICIENT ACCORDING TO TIME OF PURCHASE OF REFERENCE ITEM OF DESIGNATOR
S183
STORE STANDARD SIZE, EACH ITEM SIZE, AND EACH SCORE
H

FIG.21

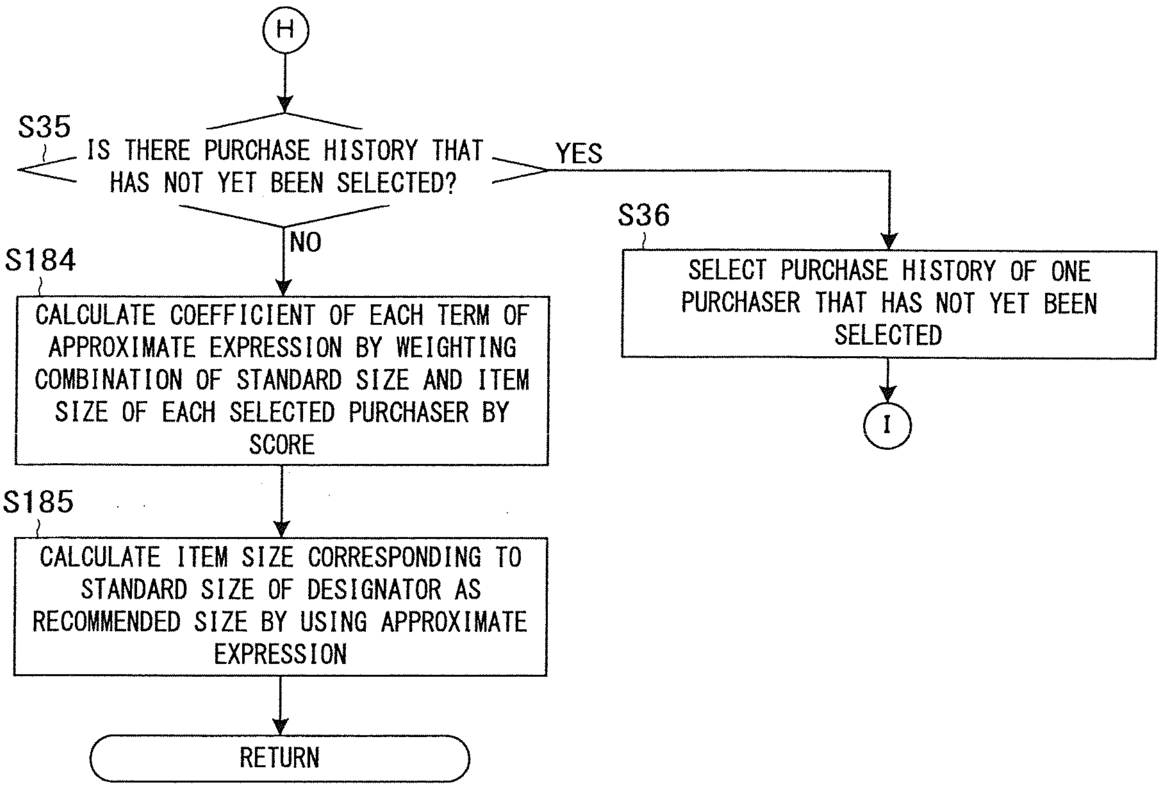
H
S35
IS THERE PURCHASE HISTORY THAT HAS NOT YET BEEN SELECTED?
YES
NO
S36
SELECT PURCHASE HISTORY OF ONE PURCHASER THAT HAS NOT YET BEEN SELECTED
I
S184
CALCULATE COEFFICIENT OF EACH TERM OF APPROXIMATE EXPRESSION BY WEIGHTING COMBINATION OF STANDARD SIZE AND ITEM SIZE OF EACH SELECTED PURCHASER BY SCORE
S185
CALCULATE ITEM SIZE CORRESPONDING TO STANDARD SIZE OF DESIGNATOR AS RECOMMENDED SIZE BY USING APPROXIMATE EXPRESSION
RETURN

## INTERNATIONAL SEARCH REPORT

International application No.
PCT/JP2012/076617

A. CLASSIFICATION OF SUBJECT MATTER
*G06Q30/06*(2012.01)i, *G06F17/30*(2006.01)i

According to International Patent Classification (IPC) or to both national classification and IPC

B. FIELDS SEARCHED

Minimum documentation searched (classification system followed by classification symbols)
G06Q30/06, G06F17/30

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2004-29909 A (Casio Computer Co., Ltd.), 29 January 2004 (29.01.2004), entire text; all drawings (Family: none) | 1-20 |
| A | JP 2003-216868 A (Seiko Epson Corp.), 31 July 2003 (31.07.2003), entire text; all drawings (Family: none) | 1-20 |
| A | JP 2007-265077 A (Nomura Research Institute, Ltd.), 11 October 2007 (11.10.2007), entire text; all drawings (Family: none) | 1-20 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 10 December, 2012 (10.12.12) | 18 December, 2012 (18.12.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2012/076617

C (Continuation). DOCUMENTS CONSIDERED TO BE RELEVANT

| Category* | Citation of document, with indication, where appropriate, of the relevant passages | Relevant to claim No. |
|---|---|---|
| A | JP 2010-257130 A (The Japan Research Institute, Ltd.), 11 November 2010 (11.11.2010), entire text; all drawings (Family: none) | 1-20 |
| A | JP 2009-282600 A (Yahoo Japan Corp.), 03 December 2009 (03.12.2009), entire text; all drawings (Family: none) | 1-20 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002245303 A